# EUROPEAN PATENT SPECIFICATION

(11) **EP 4 436 235 B1**
(45) Date of publication and mention of the grant of the patent: **18.03.2026**
(21) Application number: 21965226.0
(22) Date of filing: 26.11.2021
(51) Int. Cl.: H04B 7/024, H04B 7/0452, H04W 48/10, H04W 48/14, H04W 48/16, H04W 84/12, H04W 88/08

(54) **WIRELESS COMMUNICATION METHOD, AND DEVICE**
DRAHTLOSKOMMUNIKATIONSVERFAHREN UND -VORRICHTUNG
PROCÉDÉ DE COMMUNICATION SANS FIL ET DISPOSITIF

(43) Date of publication of application: 25.09.2024
(73) Proprietor: GUANGDONG OPPO MOBILE TELECOMMUNICATIONS CORP., LTD., Dongguan, Guangdong 523860 (CN)
(72) Inventor: ZHOU, Pei, Dongguan, Guangdong 523860 (CN); HUANG, Lei, Singapore 049483 (SG); LUO, Chaoming, Dongguan, Guangdong 523860 (CN)
(74) Representative: Penza, Giancarlo
(86) International application number: PCT/CN2021/133671
(87) International publication number: WO 2023/092493

(56) References cited:
- WO-A1-2017/015941
- WO-A1-2018/222177
- WO-A1-2021/075725
- WO-A1-2021/141211
- WO-A1-2021/222374
- CN-A- 107 623 931
- CN-A- 110 062 417
- US-A1- 2020 045 555
- US-A1- 2021 194 659
- US-A1- 2023 103 807
- US-A1- 2023 328 622

## Description

### TECHNICAL FIELD

The present invention relates to the field of communication, and more particularly, to a method and device for wireless communication.

### BACKGROUND

In order to improve capability of access point (AP), multi-AP coordination is introduced to improve transmission capability. In multi-AP coordination, a multi-AP candidate set needs to be set up. However, how to set up the multi-AP candidate set is a problem urgently to be solved. Related technologies can at least be found in patent documents WO 2021/222374 A1 and WO 2021/141211 A1. The patent document WO 2021/222374 A1 discloses a method performed by a first wireless access point for coordinating a multi-access point transmission in a wireless network of multiple access points includes receiving an indication of a transmit opportunity for the first wireless access point, transmitting at least one indication frame to the multiple access points comprising information related to the transmit opportunity, receiving at least one request frame from one or more access points of the multiple access points indicating participation with the transmit opportunity, and transmitting a trigger frame to the one or more access points that indicated participation with the transmit opportunity. The patent document WO 2021/141211 A1 discloses a method performed by a shared AP in a wireless LAN system. The method includes the steps of allocating a first channel to first and second stations (STAs), and transmitting a channel switching signal that requests channel switching from the first channel to the second channel. The channel switching signal is only transmitted to the first STA participating in the C-OFDMA, but not to the second STA not participating in the C-OFMDA.

### SUMMARY

The invention provides a method for wireless communication and a device, in which multi-AP coordination capability discovery and multi-AP capability unit are designed, and procedures and frame structures for setting up the multi-AP candidate set are designed, so that multi-AP coordination transmission may be achieved. The invention is defined by the subject-matter of the independent claims. Preferred embodiments are set out in the dependent claims.

### BRIEF DESCRIPTION OF THE DRAWINGS

FIG. 1 is a schematic diagram of a communication system architecture to which an embodiment of the disclosure is applied.
FIG. 2 is a schematic diagram of discovering multi-AP coordination capability of neighbor APs by an AP provided in the disclosure.
FIG. 3 is a schematic diagram of setting up a multi-AP candidate set provided in the disclosure.
FIG. 4 is a schematic diagram of a wired multi-AP coordination architecture provided according to an embodiment of the disclosure.
FIG. 5 is a schematic diagram of a wireless multi-AP coordination architecture provided according to an embodiment of the disclosure.
FIG. 6 is a schematic flowchart of a method for wireless communication provided according to an embodiment of the disclosure.
FIG. 7 is a schematic diagram of discovering multi-AP coordination capability provided according to an embodiment of the disclosure.
FIG. 8 is a schematic diagram of a multi-AP coordination capabilities element provided according to an embodiment of the disclosure.
FIG. 9 is a schematic diagram of another multi-AP coordination capabilities element provided according to an embodiment of the disclosure.
FIG. 10 is a schematic diagram of setting up a multi-AP candidate set provided according to an embodiment of the disclosure.
FIG. 11 is a schematic diagram of a multi-AP candidate set request frame provided according to an embodiment of the disclosure.
FIG. 12 is a schematic diagram of another multi-AP candidate set request frame provided according to an embodiment of the disclosure.
FIG. 13 is a schematic diagram of yet another multi-AP candidate set request frame provided according to an embodiment of the disclosure.
FIG. 14 is a schematic diagram of a multi-AP candidate set response frame provided according to an embodiment of the disclosure.
FIG. 15 is a schematic diagram of another multi-AP candidate set response frame provided according to an embodiment of the disclosure.
FIG. 16 is a schematic diagram of yet another multi-AP candidate set response frame provided according to an embodiment of the disclosure.
FIG. 17 is a schematic diagram of a multi-AP candidate set confirm frame provided according to an embodiment of the disclosure.
FIG. 18 is a schematic block diagram of a MAP, which is not covered by the claims.
FIG. 19 is a schematic block diagram of a SAP provided according to an embodiment of the disclosure.
FIG. 20 is a schematic block diagram of a communication device provided according to an embodiment of the disclosure.
FIG. 21 is a schematic block diagram of an apparatus provided according to an embodiment of the disclosure.
FIG. 22 is a schematic block diagram of a communication system provided according to an embodiment of the disclosure.

### DETAILED DESCRIPTION

The technical solutions in the embodiments of the disclosure will be described below with reference to the drawings in the embodiments of the disclosure. It is apparent that the described embodiments are part of the embodiments of the disclosure, rather than all of the embodiments.

The technical solutions of the embodiments of the disclosure may be applied to various communication systems, such as a Wireless Local Area Network (WLAN), Wireless Fidelity (Wi-Fi), or other communication systems, etc.

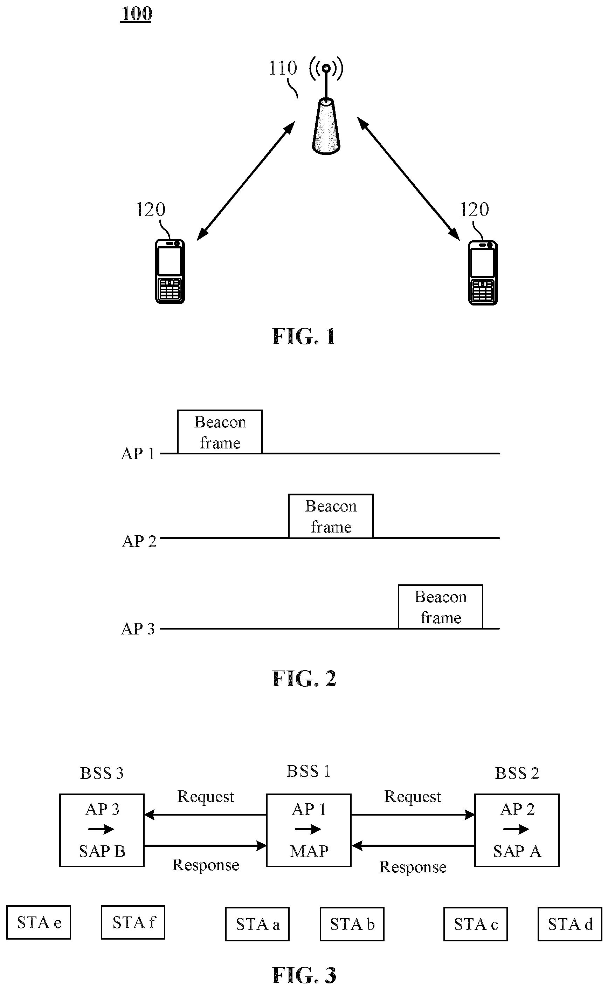

Exemplarily, a communication system 100 to which the embodiments of the disclosure are applied is shown in FIG. 1. The communication system 100 may include an Access Point (AP) 110 and a station (STA) 120 accessing a network through the AP 110.

In some scenarios, the AP may also be referred to as an AP STA, that is, the AP is also a kind of STA in a certain sense. In some scenarios, the STA is also referred to as a non-AP STA.

In some embodiments, STA may include the AP STA and the non-AP STA.

Communication in the communication system 100 may be communication between the AP and the STA, or communication between STAs, or communication between the STA and another STA (peer STA), the peer STA may refer to a device which communicates with a peer side of the STA, for example, the peer STA may be an AP or a non-AP STA.

The AP is equivalent to a bridge connecting a wired network to a wireless network, and has a main function of connecting various wireless network clients together, and then connecting the wireless network to Ethernet. An AP device may be a terminal device (such as a mobile phone) or a network device (such as a router) with a Wi-Fi chip.

It should be understood that roles of the STA in the communication system is not absolute. For example, in some scenarios, when the mobile phone is connected to the router, the mobile phone is an STA, and in case that the mobile phone is used as a hotspot for other mobile phones, the mobile phone acts as AP.

The AP and the STA may be devices applied to vehicle to everything (V2X); Internet of Things (IoT) nodes, sensors, or the like in IoT; smart cameras, smart remote controls, smart water meters, or the like in a smart home; and sensors in a smart city, etc.

In some embodiments, the STA may support the 802.11be standard. The STA may also support multiple current and future WLAN standards of the 802.11 family, such as 802.11ax, 802.11ac, 802.11n, 802.11g, 802.11b, and 802.11a, etc.

In some embodiments, the AP may be a device supporting the 802.11be standard. The AP may also be a device supporting multiple current and future WLAN standards of the 802.11 family, such as 802.11ax, 802.11ac, 802.11n, 802.11g, 802.11b, and 802.11a, etc.

**In** some embodiments, the AP 110 and/or the STA 120 may be deployed on the land, including indoor or outdoor, handheld, worn or vehicle-mounted deployment; or, may be deployed in the water (such as a ship); or, may be deployed in the air (such as an aircraft, a balloon, a satellite, etc.).

**In** the embodiments of the disclosure, the STA 120 may be a mobile phone and a pad supporting WLAN/Wi-Fi technologies, a computer with a wireless transceiver function, a Virtual Reality (VR) device, an Augmented Reality (AR) device, a wireless device in industrial control, a set-top box, a wireless device in self driving, a vehicle-mounted communication device, a wireless device in remote medical, a wireless device in a smart grid, a wireless device in transportation safety, a wireless device in a smart city, or a wireless device in a smart home, a vehicle-mounted communication device, a wireless communication chip/Application Specific Integrated Circuit (ASIC)/System on Chip (SoC), etc.

As an example rather than limitation, in the embodiments of the disclosure, the STA 120 may also be a wearable device. The wearable device may also be referred to as a wearable smart device, which is a general term for wearable devices developed by applying wearable technologies to intelligently design daily wears, such as glasses, gloves, watches, clothing, shoes, etc. The wearable device is a portable device which is directly worn on the body or integrated into a user's clothing or accessory. The wearable device is not only a hardware device, but also achieves powerful functions through software support, data interaction and cloud-based interaction. Generalized wearable smart devices include devices with full functions, large sizes, implementing complete or partial functions without relying on smart phones, such as smart watches or smart glasses or the like, and devices focusing on only a certain type of application functions and requiring cooperation with other devices such as smart phones in use, such as various smart bracelets and smart jewelry for monitoring physical signs, etc.

Bands supported by the WLAN technology may include, but is not limited to low bands (2.4 GHz, 5 GHz, 6 GHz) and high bands (60 GHz).

FIG. 1 exemplarily shows one AP and two STAs. In some embodiments, the communication system 100 may include multiple APs and other numbers of STAs, which are not limited in the embodiments of the disclosure.

It should be understood that in the embodiments of the disclosure, a device with a communication function in a network/system may be referred to as a communication device. Taking the communication system 100 shown in FIG. 1 as an example, the communication device may include an AP 110 and a STA 120 with communication functions, and the AP 110 and the STA 120 may be the above specific devices respectively, which are not elaborated here. The communication device may further include other devices in the communication system 100, such as a network controller, gateway and other network entities, which are not limited in the embodiments of the disclosure.

It should be understood that in the disclosure, terms "system" and "network" are often interchangeably used here. In the disclosure, a term "and/or" is only an association relationship describing associated objects, and indicates that there may be three relationships. For example, A and/or B may indicate three situations, i.e., A exists alone, A and B exist simultaneously, and B exists alone. Furthermore, in the disclosure, a character "/" generally indicates that anterior and posterior associated objects are in a "or" relationship.

It should be understood that "indication" mentioned in the embodiments of the disclosure may be a direct indication, or may be an indirect indication, or may indicate that there is an association relationship. For example, A indicates B, which may mean that A directly indicates B, for example, B may be obtained through A; or, may mean that A indirectly indicates B, for example, A indicates C, and B may be obtained through C; or, may mean that there is an association relationship between A and B.

Terms used in sections of the embodiments of the disclosure are only intended to explain specific embodiments of the disclosure, and are not intended to limit the disclosure. Terms "first", "second", "third", "fourth" or the like in the description, claims and the drawings of the disclosure are intended to distinguish different objects, and are not intended to describe a specific order. Furthermore, terms "include", "have" as well as any variants thereof, are intended to cover a non-exclusive inclusion.

**In** descriptions of the embodiments of the disclosure, a term "corresponding" may indicate that there are direct or indirect correspondences between two items; or, may indicate that there is an association relationship between two items; or, may be a relationship such as indicating and indicated, configuring and configured, etc.

**In** the embodiments of the disclosure, "predefined" or "preconfigured" may be implemented by pre-saving corresponding codes, tables in a device (for example, including a STA and a network device) or other manners which may be used to indicate related information, specific implementations thereof are not limited in the disclosure. For example, "predefined" may refer to "defined in a protocol".

**In** the embodiments of the disclosure, "protocol" may refer to a standard protocol in the communication field, for example, it may include a Wi-Fi protocol and related protocols applied to future Wi-Fi communication systems, which are not limited in the disclosure.

In order to facilitate understanding the technical solutions of the embodiments of the disclosure, the technical solutions of the disclosure will be described in detail below through specific embodiments. The following relevant technologies, as optional solutions, may be arbitrarily combined with the technical solutions of the embodiments of the disclosure, all of which fall within a scope of protection of the embodiments of the disclosure. The embodiments of the disclosure include at least a part of the following contents.

A wireless device supports multi-band communications, for example, communicating on 2.4 GHz, 5 GHz, 6 GHz and 60 GHz bands simultaneously, or communicating on different channels of the same band (or different bands) simultaneously, to improve communication throughput and/or reliability between devices. Such device is usually referred to as a multi-band device or a Multi-Link Device (MLD), and sometimes, is also referred to as a multi-link entity or a multi-band entity. The MLD may be an AP device or a STA device. If the MLD is an AP device, the MLD includes one or more APs; if the MLD is a STA device, the MLD includes one or more non-AP STAs.

A MLD including one or more APs is also referred to as an AP MLD, a MLD including one or more non-AP STAs is also referred to as a Non-AP MLD, and in the embodiments of the disclosure, the Non-AP MLD may be referred to as a STA MLD.

In the embodiments of the disclosure, the AP MLD may include multiple APs, the Non-AP MLD may include multiple STAs, multiple links may be formed between APs in the AP MLD and STAs in the Non-AP MLD, and data communication may be performed between APs in the AP MLD and corresponding STAs in the Non-AP MLD through corresponding links.

In order to facilitate understanding the technical solutions of the embodiments of the disclosure, setup of a multi-AP candidate set related to the disclosure will be described below.

Setup of the multi-AP candidate set is divided into the following two phases: a multi-AP coordination capability discovery phase and a multi-AP candidate set setup phase.

In the multi-AP coordination capability discovery phase, an AP may discover neighbor APs' multi-AP coordination capabilities by receiving beacon frames or other management frames sent by neighbor APs, as shown in FIG. 2.

In the multi-AP candidate set setup phase, as shown in FIG. 3, an AP initiating multi-AP coordination is referred to as a Master AP (MAP), and the MAP selects Slave APs (SAPs) (one or more SAPs) around it to participate in multi-AP coordination. In this process, some information for configuring the multi-AP candidate set may be interacted between the MAP and the SAP(s), specific steps and interactive information are as follows.
1) The MAP sends request frame(s) to the SAP(s), the request frame mainly includes the following information: assigning identity (ID) of the SAP during multi-AP coordination, and assigning ID of a multi-AP set;
2) The SAP replies a response frame to the MAP. The response frame mainly includes the following information: information of STA(s) associated with the SAP, which includes ID(s) of the STA(s) and capability information of participating in multi-AP coordination; and priority of the STA(s) participating in multi-AP coordination.

In order to facilitate understanding the technical solutions of the embodiments of the disclosure, the technical problems solved by the disclosure will be described below.

In the above solution for setting up the multi-AP candidate set, although a basic process of multi-AP capability discovery and related parameters required for setup of the multi-AP candidate set are designed, multi-AP capability information is not clarified, and various pieces of multi-AP capability information required to be indicated by the AP are not considered. Furthermore, during setup of the multi-AP candidate set, parameters required to be allocated for the set are not specified enough.

Based on the above problems, the disclosure proposes a multi-AP coordination solution, in which multi-AP coordination capability discovery procedure and multi-AP capability unit are designed, and procedure and frame structures for setting up the multi-AP candidate set are designed, so that multi-AP coordination transmission may be achieved.

It should be noted that in the embodiments of the disclosure, concepts of multi-AP candidate set and Virtual Basic Service Set (VBSS) are consistent, and sometimes, the two terms are mixed-used in the context, however, both of them indicate the same concept.

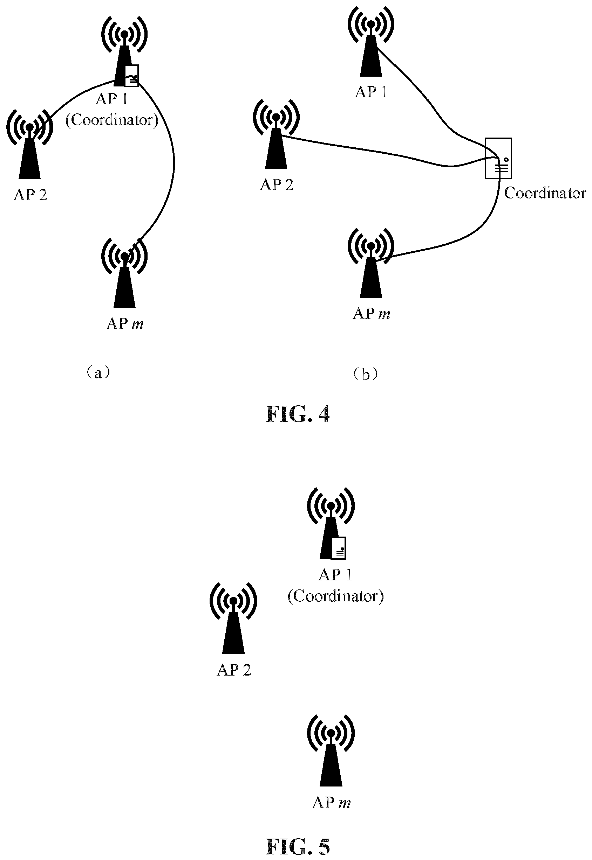

In some embodiments, the disclosure may be applied to a wired multi-AP coordination architecture as shown in FIG. 4, and may also be applied to a wireless multi-AP coordination architecture as shown in FIG. 5.

Specifically, in the wired multi-AP coordination architecture, as shown in (a) of FIG. 4, a coordinator in the network is located in a certain AP, and controls other APs through wired connection; as shown in (b) of FIG. 4, an independent coordinator is present in the network, and controls other APs through wired connection. With respect to the wired multi-AP coordination architecture, setup of the multi-AP candidate set is directly set by an operator of the network at a controller. For example, the controller acquires multi-AP coordination capability information of each AP through wired connection, and allocates multi-AP candidate sets.

Specifically, in the wireless multi-AP coordination architecture, a coordinator in the network is located in a certain AP (referred to as MAP), and controls other APs (referred to as SAPs) in a wireless manner. Before setup of the multi-AP candidate set, each AP needs to know multi-AP coordination capability information of other APs or the like, and then the MAP determines to set up, with which SAP(s), multi-AP candidate set(s) and determines which multi-AP coordination modes are supported in the multi-AP candidate set(s) .

The technical solutions of the disclosure will be described in detail below through specific embodiments.

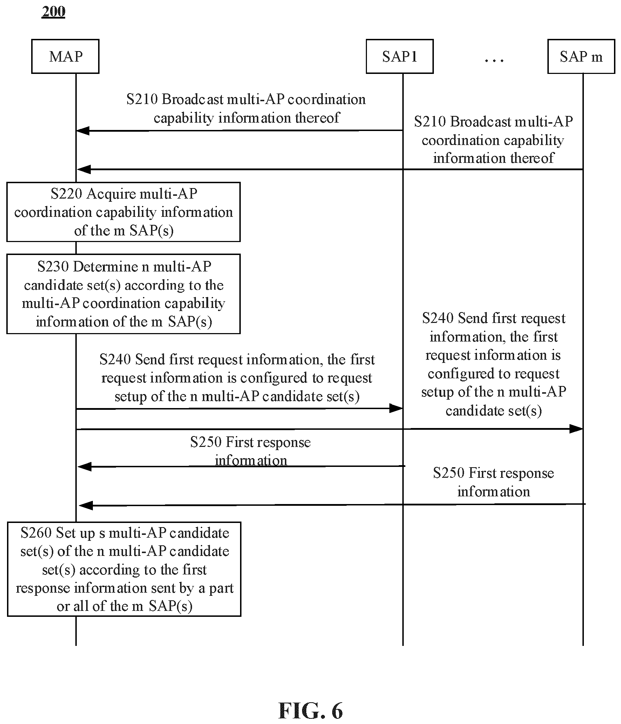

FIG. 6 is a schematic flowchart of a method for wireless communication 200 according to an embodiment of the disclosure. As shown in FIG. 6, the method for wireless communication 200 may include at least a part of the following contents.

At S210, m SAP(s) broadcast respective multi-AP coordination capability information thereof respectively.

At S220, a MAP acquires multi-AP coordination capability information of the m SAP(s).

At S230, the MAP determines n multi-AP candidate set(s) according to the multi-AP coordination capability information of the m SAP(s).

At S240, the MAP sends first request information to the m SAP(s) respectively, the first request information is configured to request setup of the n multi-AP candidate set(s).

At S250, a part or all of the m SAP(s) send first response information to the MAP, the first response information is configured to indicate whether a corresponding SAP accepts the first request information sent by the MAP.

At S260, the MAP; m, n and s are all positive integers, and s ≤ n.

In the embodiment of the disclosure, an AP may belong to one or more multi-AP candidate sets.

In the embodiment of the disclosure, each multi-AP candidate set should have only one MAP, and remaining APs are SAPs.

In the embodiment of the disclosure, each multi-AP candidate set may support one or more multi-AP coordination modes.

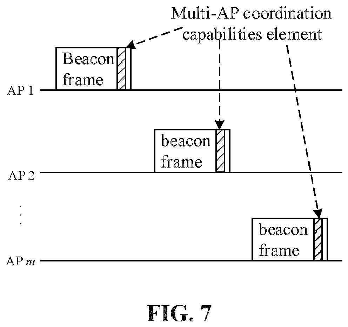

In some embodiments, each AP receives beacon frame(s) or management frame(s) of neighbor AP(s) to discover multi-AP coordination capability information of the other side. For example, the multi-AP coordination capability information of the AP may be carried by a multi-AP coordination capabilities element as shown in FIG. 7.

That is, in the embodiments of the disclosure, the MAP may acquire the multi-AP coordination capability information of the SAP through the multi-AP coordination capabilities element.

**In** some embodiments, the MAP may also broadcast multi-AP coordination capability information thereof, and a frame format corresponding to the multi-AP coordination capability information broadcast by the MAP is consistent with a frame format corresponding to the multi-AP coordination capability information broadcast by the SAP, which are not elaborated here.

**In** some embodiments, the multi-AP coordination capability information of an i-th SAP of the m SAP(s) is sent through a first frame, and the first frame is a beacon frame or a management frame, 1 ≤ i ≤ m. That is, the i-th SAP may be any one of the m SAP(s).

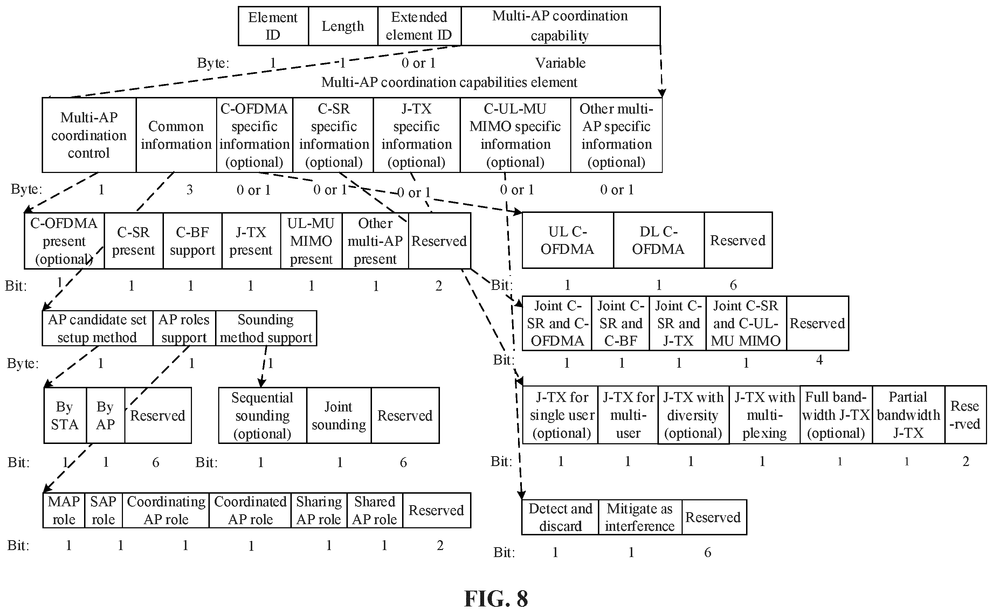

**In** some embodiments, the first frame includes a multi-AP coordination capability field (occupying a variable number of bytes), and the multi-AP coordination capability field is configured to indicate multi-AP coordination capability of the i-th SAP, as shown in FIG. 8. Of course, as shown in FIG. 8, the first frame may further include an element ID field (occupying 1 byte), a length field (occupying 1 byte), and an extended element ID field (occupying 0 or 1 byte).

It should be noted that in some embodiments, the multi-AP coordination capability field may also be referred to as a multi-AP coordination capabilities element, and the two terms may replace each other, which are not limited in the disclosure.

**In** some embodiments, in the first frame, the multi-AP coordination capability field includes at least one of following: a multi-AP coordination control field, a common information field, a Coordinated Orthogonal Frequency Division Multiple Access (C-OFDMA) specific information field, a Coordinated Spatial Reuse (C-SR) specific information field, a Joint transmission (J-TX) specific information field, and a Coordinated Uplink Multiple-User Multiple Input Multiple Output (C-UL MU MIMO) specific information field.

In some embodiments, in the first frame, the multi-AP coordination capability field includes at least one of following: a multi-AP coordination control field, a common information field, a C-SR specific information field, a J-TX specific information field, and a C-UL MU MIMO specific information field.

Specifically, in the first frame, the multi-AP coordination control field is configured to indicate field related(s) to multi-AP coordination mode(s) specifically included in the multi-AP coordination capability field. That is, the multi-AP coordination control field may be configured to indicate fields related to which multi-AP coordination modes specifically included in the multi-AP coordination capabilities element.

Specifically, in the first frame, the common information field (Common Info field) is configured to indicate a multi-AP candidate set setup method, a role supported by the i-th SAP in a multi-AP transmission mechanism, and a channel sounding method supported by the i-th SAP.

Specifically, in the first frame, the C-OFDMA specific information field (C-OFDMA Specific Info field) is configured to indicate a C-OFDMA type supported by the i-th SAP.

Specifically, in the first frame, the C-SR specific information field (C-SR Specific Info field) is configured to indicate a C-SR type supported by the i-th SAP.

Specifically, in the first frame, the J-TX specific information field (J-TX Specific Info field) is configured to indicate a J-TX type supported by the i-th SAP.

Specifically, in the first frame, the C-UL MU MIMO specific information field (C-UL-MU MIMO Specific Info field) is configured to indicate a C-UL-MU MIMO type supported by the i-th SAP.

Specifically, for example, as shown in FIG. 8, in the first frame, the multi-AP coordination capability field includes a multi-AP coordination control field (occupying 1 byte), a common information field (occupying 3 bytes), C-OFDMA specific information field (optional), a C-SR specific information field (optional), a J-TX specific information field (optional), and a C-UL MU MIMO specific information field (optional). That is, the C-OFDMA specific information field, the C-SR specific information field, the J-TX specific information field, and the C-UL MU MIMO specific information field are optional fields. One certain optional field may occupy 1 byte when it is present. Furthermore, as shown in FIG. 8, the multi-AP coordination capability field may further include other multi-AP specific information fields (optional), which may specifically indicate some other information related to multi-AP coordination, and other multi-AP specific information fields are optional fields, each of which may occupy 1 byte when present.

In some embodiments, in the first frame, in case that the multi-AP coordination capability field does not include the C-OFDMA specific information field, the multi-AP coordination capability field itself implicitly indicates that the i-th SAP indicates uplink (UL) C-OFDMA and downlink (DL) C-OFDMA.

In some embodiments, in the first frame, the multi-AP coordination control field includes at least one of following: a C-OFDMA present field, a C-SR present field, a Coordinated Beamforming (C-BF) support field, a J-TX present field, and a C-UL MU MIMO present field.

In some embodiments, in the first frame, the multi-AP coordination control field includes at least one of following: a C-SR present field, a C-BF support field, a J-TX present field, and a C-UL MU MIMO present field.

Specifically, in the first frame, the C-OFDMA present field (C-OFDMA Present subfield) is configured to indicate whether the multi-AP coordination capability field includes the C-OFDMA specific information field, and the C-OFDMA present field is configured to indicate whether the i-th SAP supports C-OFDMA. As shown in FIG. 8, the C-OFDMA present field is an optional field, and may occupy 1 bit when it is present.

For example, the value of C-OFDMA Present subfield equals to 1 means that the C-OFDMA specific information field is present in the multi-AP coordination capability field, and the i-th SAP supports C-OFDMA; and the value of C-OFDMA Present subfield equals to 0 means that the C-OFDMA specific information field is not present in the multi-AP coordination capability field, and the i-th SAP does not support C-OFDMA.

For another example, the value of C-OFDMA Present subfield equals to 0 means that the C-OFDMA specific information field is present in the multi-AP coordination capability field, and the i-th SAP supports C-OFDMA; and the value of C-OFDMA Present subfield equals to 1 means that the C-OFDMA specific information field is not present in the multi-AP coordination capability field, and the i-th SAP does not support C-OFDMA.

In some embodiments, in the first frame, the C-OFDMA Present subfield is not present in the multi-AP coordination control field, which also means that the C-OFDMA Specific Info field is not present in the multi-AP coordination capabilities element, since presence of the multi-AP coordination capabilities element may already imply that the i-th SAP supports DL C-OFDMA and UL C-OFDMA.

Specifically, in the first frame, the C-SR present field (C-SR Present subfield) is configured to indicate whether the multi-AP coordination capability field includes the C-SR specific information field, and the C-SR present field is configured to indicate whether the i-th SAP supports C-SR. As shown in FIG. 8, the C-SR present field may occupy 1 bit.

For example, the value of C-SR Present subfield equals to 1 means that the C-SR specific information field is present in the multi-AP coordination capability field, and the i-th SAP supports C-SR; and the value of C-SR Present subfield equals to 0 means that the C-SR specific information field is not present in the multi-AP coordination capability field, and the i-th SAP does not support C-SR.

For another example, the value of C-SR Present subfield equals to 0 means that the C-SR specific information field is present in the multi-AP coordination capability field, and the i-th SAP supports C-SR; and the value of C-SR Present subfield equals to 1 means that the C-SR specific information field is not present in the multi-AP coordination capability field, and the i-th SAP does not support C-SR.

Specifically, in the first frame, the C-BF support field (C-BF Support subfield) is configured to indicate whether the i-th SAP supports C-BF. As shown in FIG. 8, the C-BF support field may occupy 1 bit.

For example, the value of C-BF Support subfield equals to 1 means that the i-th SAP supports C-BF; and the value of C-BF Support subfield equals to 0 means that the i-th SAP does not support C-BF.

For another example, the value of C-BF Support subfield equals to 0 means that the i-th SAP supports C-BF; and the value of C-BF Support subfield equals to 1 means that the i-th SAP does not support C-BF.

Specifically, in the first frame, the J-TX present field (J-TX Present subfield) is configured to indicate whether the multi-AP coordination capability field includes the J-TX specific information field, and the J-TX present field is configured to indicate whether the i-th SAP supports J-TX. As shown in FIG. 8, the J-TX present field may occupy 1 bit.

For example, the value of J-TX Present subfield equals to 1 means the J-TX Specific Info field is present in the multi-AP coordination capability field, and the i-th SAP supports J-TX; and the value of J-TX Present subfield equals to 0 means that the J-TX Specific Info field is not present in the multi-AP coordination capability field, and the i-th SAP does not support J-TX.

For another example, the value of J-TX Present subfield equals to 0 means the J-TX Specific Info field is present in the multi-AP coordination capability field, and the i-th SAP supports J-TX; and the value of J-TX Present subfield equals to 1 means that the J-TX Specific Info field is not present in the multi-AP coordination capability field, and the i-th SAP does not support J-TX.

Specifically, in the first frame, the C-UL MU MIMO present field (C-UL-MU MIMO Present subfield) is configured to indicate whether the multi-AP coordination capability field includes the C-UL MU MIMO specific information field, and the C-UL MU MIMO present field is configured to indicate whether the i-th SAP supports C-UL MU MIMO. As shown in FIG. 8, the C-UL MU MIMO present field may occupy 1 bit.

For example, the value of C-UL-MU MIMO Present subfield equals to 1 means that the C-UL-MU MIMO Specific Info field is present in the multi-AP coordination capability field, and the i-th SAP supports C-UL-MU MIMO; and the value of C-UL-MU MIMO Present subfield equals to 0 means that the C-UL-MU MIMO Specific Info field is not present in the multi-AP coordination capability field, and the i-th SAP does not support C-UL-MU MIMO.

For another example, the value of C-UL-MU MIMO Present subfield equals to 0 means that the C-UL-MU MIMO Specific Info field is present in the multi-AP coordination capability field, and the i-th SAP supports C-UL-MU MIMO; and the value of C-UL-MU MIMO Present subfield equals to 1 means that the C-UL-MU MIMO Specific Info field is not present in the multi-AP coordination capability field, and the i-th SAP does not support C-UL-MU MIMO.

In some embodiments, in the first frame, the multi-AP coordination control field may further include Other Multi-AP Present subfield, the Other Multi-AP Present subfield is configured to indicate whether the multi-AP coordination capability field includes other multi-AP specific information fields, and the C-UL MU MIMO present field is configured to indicate whether the i-th SAP supports other multi-AP coordination modes. For example, as shown in FIG. 8, the Other Multi-AP Present subfield occupies 1 bit.

For example, the value of Other Multi-AP Present subfield equals to 1 means that the Other Multi-AP Specific Info field is present in the multi-AP coordination capability field; and the value of Other Multi-AP Present subfield equals to 0 means that the Other Multi-AP Specific Info field is not present in the multi-AP coordination capability field.

For another example, the value of Other Multi-AP Present subfield equals to 0 means that the Other Multi-AP Specific Info field is present in the multi-AP coordination capability field; and the value of Other Multi-AP Present subfield equals to 1 means that the Other Multi-AP Specific Info field is not present in the multi-AP coordination capability field.

In some embodiments, in the first frame, the C-OFDMA specific information field includes a UL C-OFDMA field and a DL C-OFDMA field.

The UL C-OFDMA field is configured to indicate whether the i-th SAP supports UL C-OFDMA, and the DL C-OFDMA field is configured to indicate whether the i-th SAP supports DL C-OFDMA.

Specifically, for example, in the first frame, as shown in FIG. 8, the UL C-OFDMA field may occupy 1 bit.

For example, the value of UL C-OFDMA field equals to 1 means that the i-th SAP supports UL C-OFDMA; and the value of UL C-OFDMA field equals to 0 means that the i-th SAP does not support UL C-OFDMA.

For another example, the value of UL C-OFDMA field equals to 0 means that the i-th SAP supports UL C-OFDMA; and the value of UL C-OFDMA field equals to 1 means that the i-th SAP does not support UL C-OFDMA.

Specifically, for example, in the first frame, as shown in FIG. 8, the DL C-OFDMA field may occupy 1 bit.

For example, the value of DL C-OFDMA field equals to 1 means that the i-th SAP supports DL C-OFDMA; and the value of DL C-OFDMA field equals to 0 means that the i-th SAP does not support DL C-OFDMA.

For another example, the value of DL C-OFDMA field equals to 0 means that the i-th SAP supports DL C-OFDMA; and the value of DL C-OFDMA field equals to 1 means that the i-th SAP does not support DL C-OFDMA.

In some embodiments, in the first frame, the C-SR specific information field includes at least one of following: a joint C-SR and C-OFDMA field, a joint C-SR and C-BF field, a joint C-SR and J-TX field, or a joint C-SR and C-UL MU MIMO field.

Specifically, in the first frame, the joint C-SR and C-OFDMA field is configured to indicate whether the i-th SAP supports simultaneous and joint use of C-SR and C-OFDMA. For example, as shown in FIG. 8, the joint C-SR and C-OFDMA field may occupy 1 bit.

For example, the value of joint C-SR and C-OFDMA field equals to 1 means that the i-th SAP supports simultaneous and joint use of C-SR and C-OFDMA; and the value of joint C-SR and C-OFDMA field equals to 0 means that the i-th SAP does not support simultaneous and joint use of C-SR and C-OFDMA.

For another example, the value of joint C-SR and C-OFDMA field equals to 0 means that the i-th SAP supports simultaneous and joint use of C-SR and C-OFDMA; and the value of joint C-SR and C-OFDMA field equals to 1 means that the i-th SAP does not support simultaneous and joint use of C-SR and C-OFDMA.

Specifically, in the first frame, the joint C-SR and C-BF field is configured to indicate whether the i-th SAP supports simultaneous and joint use of C-SR and C-BF. For example, as shown in FIG. 8, the joint C-SR and C-BF field may occupy 1 bit.

For example, the value of joint C-SR and C-BF field equals to 1 means that the i-th SAP supports simultaneous and joint use of C-SR and C-BF; and the value of joint C-SR and C-BF field equals to 0 means that the i-th SAP does not support simultaneous and joint use of C-SR and C-BF.

For another example, the value of joint C-SR and C-BF field equals to 0 means that the i-th SAP supports simultaneous and joint use of C-SR and C-BF; and the value of joint C-SR and C-BF field equals to 1 means that the i-th SAP does not support simultaneous and joint use of C-SR and C-BF.

In some embodiments, in the first frame, in case that the i-th SAP does not support C-BF, the C-SR specific information field does not include the joint C-SR and C-BF field, or value of the joint C-SR and C-BF field indicates that the i-th SAP does not support simultaneous and joint use of C-SR and C-BF.

Specifically, the joint C-SR and J-TX field is configured to indicate whether the i-th SAP supports simultaneous and joint use of C-SR and J-TX. For example, as shown in FIG. 8, the joint C-SR and J-TX field may occupy 1 bit.

For example, the value of joint C-SR and C-JX field equals to 1 means that the i-th SAP supports simultaneous and joint use of C-SR and J-TX; and the value of joint C-SR and C-JX field equals to 0 means that the i-th SAP does not support simultaneous and joint use of C-SR and J-TX.

For another example, the value of joint C-SR and C-JX field equals to 0 means that the i-th SAP supports simultaneous and joint use of C-SR and J-TX; and the value of joint C-SR and C-JX field equals to 1 means that the i-th SAP does not support simultaneous and joint use of C-SR and J-TX.

In some embodiments, in case that the i-th SAP does not support J-TX, the C-SR specific information field does not include the joint C-SR and J-TX field, or value of the joint C-SR and J-TX field indicates that the i-th SAP does not support simultaneous and joint use of C-SR and J-TX.

Specifically, in the first frame, the joint C-SR and C-UL MU MIMO field is configured to indicate whether the i-th SAP supports simultaneous and joint use of C-SR and C-UL MU MIMO. For example, as shown in FIG. 8, the joint C-SR and C-UL MU MIMO field may occupy 1 bit.

For example, the value of joint C-SR and C-UL MU MIMO field equals to 1 means that the i-th SAP supports simultaneous and joint use of C-SR and C-UL MU MIMO; and the value of joint C-SR and C-UL MU MIMO field equals to 0 means that the i-th SAP does not support simultaneous and joint use of C-SR and C-UL MU MIMO.

For another example, the value of joint C-SR and C-UL MU MIMO field equals to 0 means that the i-th SAP supports simultaneous and joint use of C-SR and C-UL MU MIMO; and the value of joint C-SR and C-UL MU MIMO field equals to 1 means that the i-th SAP does not support simultaneous and joint use of C-SR and C-UL MU MIMO.

In some embodiments, in the first frame, in case that the i-th SAP does not support C-UL MU MIMO, the C-SR specific information field does not include the joint C-SR and C-UL MU MIMO field, or value of the joint C-SR and C-UL MU MIMO field indicates that the i-th SAP does not support simultaneous and joint use of C-SR and C-UL MU MIMO.

In some embodiments, in the first frame, the J-TX specific information field includes at least one of following: a J-TX for single user field, a J-TX for multi-user field, a J-TX with diversity field, a J-TX with multiplexing field, a full bandwidth J-TX field, and a partial bandwidth J-TX field.

In some embodiments, in the first frame, the J-TX specific information field includes at least one of following: a J-TX for multi-user field, a J-TX with diversity field, a J-TX with multiplexing field, a full bandwidth J-TX field, and a partial bandwidth J-TX field. That is, the J-TX specific information field may not include a J-TX for single user field (J-TX for Single User), since with respect to AP supporting J-TX, J-TX for Single User is a basic capability. Specifically, for example, in case that the J-TX specific information field does not include the J-TX for single user field, the i-th SAP supports performing joint transmission for a same user by default.

In some embodiments, in the first frame, the J-TX specific information field includes at least one of following: a J-TX for single user field, a J-TX for multi-user field, a J-TX with multiplexing field, a full bandwidth J-TX field, or a partial bandwidth J-TX field. That is, the J-TX specific information field may not include a J-TX with diversity field (J-TX with Diversity subfield), since with respect to AP supporting J-TX, J-TX with Diversity is a basic capability. Specifically, for example, in case that the J-TX specific information field does not include the J-TX with diversity field, the i-th SAP supports joint transmission of diversity type by default.

In some embodiments, in the first frame, the J-TX specific information field includes at least one of following: a J-TX for single user field, a J-TX for multi-user field, a J-TX with diversity field, a J-TX with multiplexing field, and a partial bandwidth J-TX field. That is, the J-TX specific information field may not include a full bandwidth J-TX field (Full Bandwidth J-TX subfield), since with respect to AP supporting J-TX, Full Bandwidth J-TX is a basic capability. Specifically, for example, in case that the J-TX specific information field does not include the full bandwidth J-TX field, the i-th SAP supports joint transmission in full bandwidth by default.

Specifically, in the first frame, the J-TX for single user field (J-TX for Single User subfield) is configured to indicate whether the i-th SAP supports performing joint transmission for a same user. For example, as shown in FIG. 8, the J-TX for single user field is an optional field, and may occupy 1 bit when it is present.

For example, the value of J-TX for single user field equals to 1 means that the i-th SAP supports performing joint transmission for the same user; and the value of J-TX for single user field equals to 0 means that the i-th SAP does not support performing joint transmission for the same user.

For another example, the value of J-TX for single user field equals to 0 means that the i-th SAP supports performing joint transmission for the same user; and the value of J-TX for single user field equals to 1 means that the i-th SAP does not support performing joint transmission for the same user.

Specifically, in the first frame, the J-TX for multi-user field (J-TX for Multiple User subfield) is configured to indicate whether the i-th SAP supports performing joint transmission for multiple users. For example, as shown in FIG. 8, the J-TX for single user field is an optional field, and may occupy 1 bit when it is present.

For example, the value of J-TX for multi-user field equals to 1 means that the i-th SAP supports performing joint transmission for multiple users; and the value of J-TX for multi-user field equals to 0 means that the i-th SAP does not support performing joint transmission for multiple users.

For another example, the value of J-TX for multi-user field equals to 0 means that the i-th SAP supports performing joint transmission for multiple users; and the value of J-TX for multi-user field equals to 1 means that the i-th SAP does not support performing joint transmission for multiple users.

Specifically, in the first frame, the J-TX with diversity field (J-TX with Diversity subfield) is configured to indicate whether the i-th SAP supports joint transmission of diversity type. For example, as shown in FIG. 8, the J-TX with diversity field is an optional field, and may occupy 1 bit when it is present.

For example, the value of J-TX with diversity field equals to 1 means that the i-th SAP supports the joint transmission of diversity type; and the value of J-TX with diversity field equals to 0 means that the i-th SAP does not support the joint transmission of diversity type.

For another example, the value of J-TX with diversity field equals to 0 means that the i-th SAP supports the joint transmission of diversity type; and the value of J-TX with diversity field equals to 1 means that the i-th SAP does not support the joint transmission of diversity type.

Specifically, in the first frame, the J-TX with multiplexing field (J-TX with Multiplexing subfield) is configured to indicate whether the i-th SAP supports joint transmission of multiplexing type. That is, multiple APs transmit different data/frames to the user, to improve communication throughput of the user. For example, as shown in FIG. 8, the J-TX with multiplexing field may occupy 1 bit.

For example, the value of J-TX with multiplexing field equals to 1 means that the i-th SAP supports the joint transmission of multiplexing type; and the value of J-TX with multiplexing field equals to 0 means that the i-th SAP does not support the joint transmission of multiplexing type.

For another example, the value of J-TX with multiplexing field equals to 0 means that the i-th SAP supports the joint transmission of multiplexing type; and the value of J-TX with multiplexing field equals to 1 means that the i-th SAP does not support the joint transmission of multiplexing type.

Specifically, in the first frame, the full bandwidth J-TX field (Full Bandwidth J-TX subfield) is configured to indicate whether the i-th SAP supports joint transmission in full bandwidth. For example, as shown in FIG. 8, the full bandwidth J-TX field is an optional field, and may occupy 1 bit when it is present.

For example, the value of full bandwidth J-TX field equals to 1 means that the i-th SAP supports joint transmission in full bandwidth; and the value of full bandwidth J-TX field equals to 0 means that the i-th SAP does not support joint transmission in full bandwidth.

For another example, the value of full bandwidth J-TX field equals to 0 means that the i-th SAP supports joint transmission in full bandwidth; and the value of full bandwidth J-TX field equals to 1 means that the i-th SAP does not support joint transmission in full bandwidth.

Specifically, in the first frame, the partial bandwidth J-TX field (Partial Bandwidth J-TX subfield) is configured to indicate whether the i-th SAP supports joint transmission in partial bandwidth. For example, as shown in FIG. 8, the partial bandwidth J-TX field may occupy 1 bit.

For example, the value of partial bandwidth J-TX field equals to 1 means that the i-th SAP supports joint transmission in partial bandwidth; and the value of partial bandwidth J-TX field equals to 0 means that the i-th SAP does not support joint transmission in partial bandwidth.

For another example, the value of partial bandwidth J-TX field equals to 0 means that the i-th SAP supports joint transmission in the partial bandwidth; and the value of partial bandwidth J-TX field equals to 1 means that the i-th SAP does not support joint transmission in partial bandwidth.

In some embodiments, in the first frame, in case that the J-TX specific information field does not include the J-TX for single user field, the i-th SAP supports performing joint transmission for the same user by default; and/or, in case that the J-TX specific information field does not include the J-TX with diversity field, the i-th SAP supports the joint transmission of diversity type by default; and/or, in case that the J-TX specific information field does not include the full bandwidth J-TX field, the i-th SAP supports joint transmission in full bandwidth by default.

In some embodiments, in the first frame, the C-UL MU MIMO specific information field includes at least one of a detect and discard field and a mitigate as interference field.

Specifically, in the first frame, the detect and discard field (Detect and Discard) is configured to indicate whether the i-th SAP supports receiving and demodulating other users' data/frames and then discarding in a C-UL-MU MIMO mode, to obtain useful data/frames. For example, as shown in FIG. 8, the detect and discard field may occupy 1 bit.

For example, the value of detect and discard field equals to 1 means that the i-th SAP supports receiving and demodulating other users' data/frames and then discarding in the C-UL-MU MIMO mode, to obtain useful data/frames; and the value of detect and discard field equals to 0 means that the i-th SAP does not support receiving and demodulating other users' data/frames and then discarding, in the C-UL-MU MIMO mode, to obtain useful data/frames.

For another example, the value of detect and discard field equals to 0 means that the i-th SAP supports receiving and demodulating other users' data/frames and then discarding in the C-UL-MU MIMO mode, to obtain useful data/frames; and the value of detect and discard field equals to 1 means that the i-th SAP does not support receiving and demodulating other users' data/frames and then discarding, in the C-UL-MU MIMO mode, to obtain useful data/frames.

Specifically, in the first frame, the mitigate as interference field (Mitigate as Interference) is configured to indicate whether the i-th SAP supports treating other users' data as interference directly, and receiving and demodulating a target user's data/frame directly, in the C-UL-MU MIMO mode. For example, as shown in FIG. 8, the mitigate as interference field may occupy 1 bit.

For example, the value of mitigate as interference field equals to 1 means that the i-th SAP supports treating other users' data as interference directly and receiving and demodulating the target user's data/frame directly in the C-UL-MU MIMO mode; and the value of mitigate as interference field equals to 0 means that the i-th SAP does not support treating other users' data as interference directly and receiving and demodulating the target user's data/frame directly in the C-UL-MU MIMO mode.

For another example, the value of mitigate as interference field equals to 0 means that the i-th SAP supports treating other users' data as interference directly and receiving and demodulating the target user's data/frame directly in the C-UL-MU MIMO mode; and the value of mitigate as interference field equals to 1 means that the i-th SAP does not support treating other users' data as interference directly and receiving and demodulating the target user's data/frame directly in the C-UL-MU MIMO mode.

In some embodiments, in the first frame, the common information field (Common Info field) includes an AP candidate set setup method field, an AP roles support field, and a sounding method support field.

In some embodiments, in the first frame, the AP candidate set setup method field (AP Candidate Set Setup Method subfield) includes at least one of a By STA field (By STA subfield) and a By AP field (By AP subfield).

Specifically, in the first frame, the By AP field (By AP subfield) is configured to indicate whether the i-th SAP supports that the multi-AP candidate set is formed by APs recommended by STA. For example, as shown in FIG. 8, the By STA field may occupy 1 bit.

For example, the value of By STA field equals to 1 means that the i-th SAP supports that the multi-AP candidate set is formed by APs recommended by the STA; and the value of By STA field equals to 0 means that the i-th SAP does not support that the multi-AP candidate set is formed by APs recommended by the STA.

For another example, the value of By STA field equals to 0 means that the i-th SAP supports that the multi-AP candidate set is formed by APs recommended by the STA; and the value of By STA field equals to 1 means that the i-th SAP does not support that the multi-AP candidate set is formed by APs recommended by the STA.

Specifically, in the first frame, the By AP field (By AP subfield) is configured to indicate whether the i-th SAP supports that the multi-AP candidate set is formed by APs selected by the MAP directly. For example, as shown in FIG. 8, the By AP field may occupy 1 bit.

For example, the value of By AP field equals to 1 means that the i-th SAP supports that the multi-AP candidate set is formed by APs selected by the MAP directly; and the value of By AP field equals to 0 means that the i-th SAP does not support that the multi-AP candidate set is formed by APs selected by the MAP directly.

For another example, the value of By AP field equals to 0 means that the i-th SAP supports that the multi-AP candidate set is formed by APs selected by the MAP directly; and the value of By AP field equals to 1 means that the i-th SAP does not support that the multi-AP candidate set is formed by APs selected by the MAP directly.

In some embodiments, in the first frame, the AP roles support field (AP Roles Support subfield) includes a MAP role (Master AP Role) field, a SAP role (Slave AP Role) field, a coordinating AP role field, a coordinated AP role field, a sharing AP role field, and a shared AP role field. For example, as shown in FIG. 8, the MAP role field may occupy 1 bit, the SAP role field may occupy 1 bit, the coordinating AP role field may occupy 1 bit, the coordinated AP role field may occupy 1 bit, the sharing AP role field may occupy 1 bit, and the shared AP role field may occupy 1 bit.

Specifically, in a multi-AP candidate set setup phase, AP indicated by the MAP role field initiates a multi-AP candidate set setup request to AP indicated by the SAP role field; in a channel sounding phase, a coordinating AP indicated by the coordinating AP role field initiates sounding, and AP indicated by the coordinated AP role field participates in the sounding; and in a preparation phase and/or a transmission phase, AP indicated by the sharing AP role field shares a Transmission Opportunity (TXOP) resource thereof to AP indicated by the shared AP role field, to perform coordination transmission.

In some embodiments, in the first frame, the sounding method support field includes at least one of a sequential sounding field and a joint sounding field.

In some embodiments, in the first frame, the sounding method support field includes only the joint sounding field. Since with respect to AP supporting multi-AP coordination, sequential sounding is a basic capability, it is unnecessary to specifically indicate whether sequential sounding is supported, and AP supports this capability by default.

Specifically, in the first frame, the sequential sounding field (Sequential Sounding Subfield) is configured to indicate whether the i-th SAP supports multiple APs to perform channel sounding sequentially. For example, as shown in FIG. 8, the sequential sounding field is an optional field, and may occupy 1 bit when it is present.

For example, the value of sequential sounding field equals to 1 means that the i-th SAP supports multiple APs to perform channel sounding sequentially; and the value of sequential sounding field equals to 0 means that the i-th SAP does not support multiple APs to perform channel sounding sequentially.

For another example, the value of sequential sounding field equals to 0 means that the i-th SAP supports multiple APs to perform channel sounding sequentially; and value of sequential sounding field equals to 1 means that the i-th SAP does not support multiple APs to perform channel sounding sequentially.

Specifically, in the first frame, the joint sounding field (Joint Sounding subfield) is configured to indicate whether the i-th SAP supports multiple APs to perform channel sounding simultaneously and synchronously. For example, as shown in FIG. 8, the joint sounding field may occupy 1 bit.

For example, the value of joint sounding field equals to 1 means that the i-th SAP supports multiple APs to perform channel sounding simultaneously and synchronously; and value of joint sounding field equals to 0 means that the i-th SAP does not support multiple APs to perform channel sounding simultaneously and synchronously.

For another example, the value of joint sounding field equals to 0 means that the i-th SAP supports multiple APs to perform channel sounding simultaneously and synchronously; and the value of joint sounding field equals to 1 means that the i-th SAP does not support multiple APs to perform channel sounding simultaneously and synchronously.

In some embodiments, in case that the sounding method support field does not include the sequential sounding field, the i-th SAP supports multiple APs to perform channel sounding sequentially by default.

In some embodiments, in the first frame, the common information field includes an AP candidate set setup method field, an AP roles support field, and a joint sounding support field. That is, it is unnecessary to specifically indicate, in the common information field, whether the i-th SAP supports multiple APs to perform channel sounding sequentially, and the i-th SAP supports multiple APs to perform channel sounding sequentially by default. Since with respect to AP supporting multi-AP coordination, sequential sounding is a basic capability, it is unnecessary to specifically indicate whether sequential sounding is supported, and AP supports this capability by default.

Specifically, in the first frame, the joint sounding support field is configured to indicate whether the i-th SAP supports multiple APs to perform channel sounding simultaneously and synchronously.

For example, the value of joint sounding support field equals to 1 means that the i-th SAP supports multiple APs to perform channel sounding simultaneously and synchronously; and the value of joint sounding support field equals to 0 means that the i-th SAP does not support multiple APs to perform channel sounding simultaneously and synchronously.

For another example, the value of joint sounding support field equals to 0 means that the i-th SAP supports multiple APs to perform channel sounding simultaneously and synchronously; and the value of joint sounding support field equals to 1 means that the i-th SAP does not support multiple APs to perform channel sounding simultaneously and synchronously.

Specifically, the AP candidate set setup method field is consistent with the above descriptions of the AP candidate set setup method field related to FIG. 8, which not elaborated here.

Specifically, the AP roles support field is consistent with the above descriptions of the AP roles support field related to FIG. 8, which not elaborated here.

In some embodiments, the first frame includes a multi-AP coordination capability field, and the multi-AP coordination capability field includes at least one of a common information field and a multi-AP scheme support field.

The common information field is configured to indicate a multi-AP candidate set setup method, a role supported by the i-th SAP in a multi-AP transmission mechanism, and a channel sounding method supported by the i-th SAP; and the multi-AP scheme support field is configured to indicate multi-AP coordination mode(s) supported by the i-th SAP.

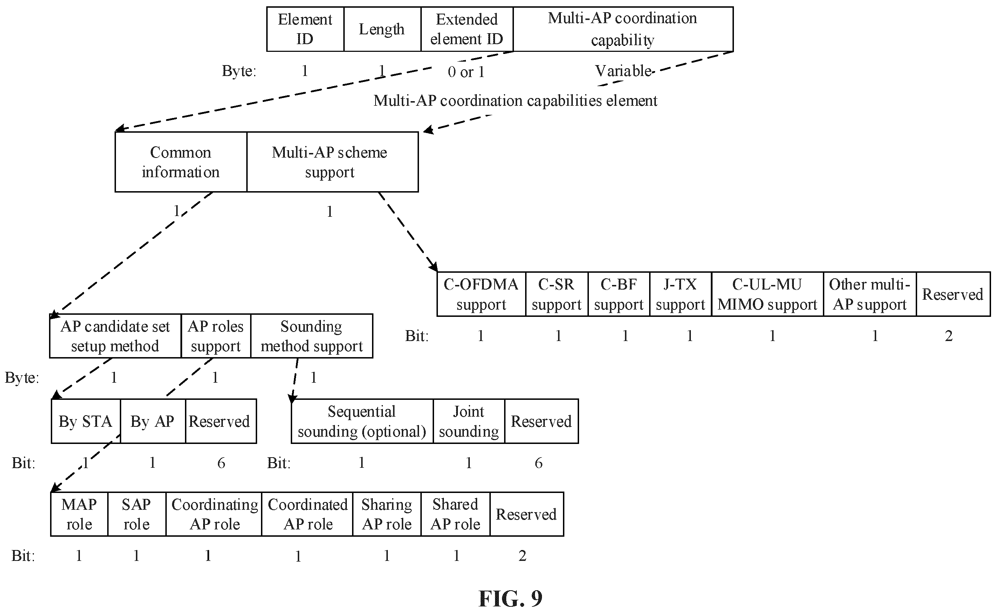

Specifically, as shown in FIG. 9, the common information field may occupy 1 byte, and the multi-AP scheme support field may occupy 1 byte.

It should be noted that the common information field is consistent with the above descriptions of the common information field, which not elaborated here.

In some embodiments, in the first frame, the multi-AP scheme support field includes at least one of following: a C-OFDMA support field, a C-SR support field, a C-BF support field, a J-TX support field, and a C-UL MU MIMO support field.

In some embodiments, in the first frame, the multi-AP scheme support field includes at least one of following: a C-SR support field, a C-BF support field, a J-TX support field, and a C-UL MU MIMO support field. That is, the multi-AP scheme support field may not include a C-OFDMA support field, since the multi-AP coordination capability field itself implicitly indicates that the i-th SAP indicates UL C-OFDMA and DL C-OFDMA.

Specifically, in the first frame, the C-OFDMA support field is configured to indicate whether the i-th SAP supports C-OFDMA. For example, as shown in FIG. 9, the C-OFDMA support field occupies 1 bit.

For example, the value of C-OFDMA support field equals to 1 means that the i-th SAP supports C-OFDMA; and the value of C-OFDMA support field equals to 0 means that the i-th SAP does not support C-OFDMA.

For another example, the value of C-OFDMA support field equals to 0 means that the i-th SAP supports C-OFDMA; and the value of C-OFDMA support field equals to 1 means that the i-th SAP does not support C-OFDMA.

In some embodiments, in the first frame, in case that the multi-AP scheme support field does not include the C-OFDMA support field, the multi-AP coordination capability field itself implicitly indicates that the i-th SAP indicates UL C-OFDMA and DL C-OFDMA.

Specifically, in the first frame, the C-SR support field is configured to indicate whether the i-th SAP supports C-SR. For example, as shown in FIG. 9, the C-SR support field occupies 1 bit.

For example, the value of C-SR support field equals to 1 means that the i-th SAP supports C-SR; and the value of C-SR support field equals to 0 means that the i-th SAP does not support C-SR.

For another example, the value of C-SR support field equals to 0 means that the i-th SAP supports C-SR; and the value of C-SR support field equals to 1 means that the i-th SAP does not support C-SR.

Specifically, in the first frame, the C-BF support field is configured to indicate whether the i-th SAP supports C-BF. For example, as shown in FIG. 9, the C-BF support field occupies 1 bit.

For example, the value of C-BF support field equals to 1 means that the i-th SAP supports C-BF; and the value of C-BF support field equals to 0 means that the i-th SAP does not support C-BF.

For another example, the value of C-BF support field equals to 0 means that the i-th SAP supports C-BF; and the value of C-BF support field equals to 1 means that the i-th SAP does not support C-BF.

Specifically, in the first frame, the J-TX support field is configured to indicate whether the i-th SAP supports J-TX. For example, as shown in FIG. 9, the J-TX support field occupies 1 bit.

For example, the value of J-TX support field equals to 1 means that the i-th SAP supports J-TX; and the value of J-TX support field equals to 0 means that the i-th SAP does not support J-TX.

For another example, the value of J-TX support field equals to 0 means that the i-th SAP supports J-TX; and the value of J-TX support field equals to 1 means that the i-th SAP does not support J-TX.

Specifically, in the first frame, the C-UL MU MIMO support field is configured to indicate whether the i-th SAP supports C-UL MU MIMO. For example, as shown in FIG. 9, the C-UL MU MIMO support field occupies 1 bit.

For example, the value of C-UL MU MIMO support field equals to 1 means that the i-th SAP supports C-UL MU MIMO; and the value of C-UL MU MIMO support field equals to 0 means that the i-th SAP does not support C-UL MU MIMO.

For another example, the value of C-UL MU MIMO support field equals to 0 means that the i-th SAP supports C-UL MU MIMO; and the value of C-UL MU MIMO support field equals to 1 means that the i-th SAP does not support C-UL MU MIMO.

In some embodiments, the MAP may allocate ID information of the n multi-AP candidate set(s). That is, in a process of the MAP determining the n multi-AP candidate set(s) based on multi-AP coordination capability information of the m SAP(s), the MAP may allocate ID information of the n multi-AP candidate set(s).

In some embodiments, the MAP allocates ID information of the m SAP(s) in the n multi-AP candidate set(s). That is, in a process of the MAP determining the n multi-AP candidate set(s) based on multi-AP coordination capability information of the m SAP(s), the MAP allocates ID information of the m SAP(s) in the n multi-AP candidate set(s).

In some embodiments, the MAP allocates role information of the m SAP(s) in multi-AP coordination. That is, in a process of the MAP determining the n multi-AP candidate set(s) based on multi-AP coordination capability information of the m SAP(s), the MAP allocates role information of the m SAP(s) in multi-AP coordination.

In some embodiments, the MAP allocates multi-AP coordination mechanism(s) respectively available to each of the n multi-AP candidate set(s). That is, in a process of the MAP determining the n multi-AP candidate set(s) based on multi-AP coordination capability information of the m SAP(s), the MAP allocates multi-AP coordination mechanism(s) respectively available to each of the n multi-AP candidate set(s).

In some embodiments, the MAP allocates sounding method(s) respectively available to each of the n multi-AP candidate set(s). That is, in a process of the MAP determining the n multi-AP candidate set(s) based on multi-AP coordination capability information of the m SAP(s), the MAP allocates sounding method(s) respectively available to each of the n multi-AP candidate set(s).

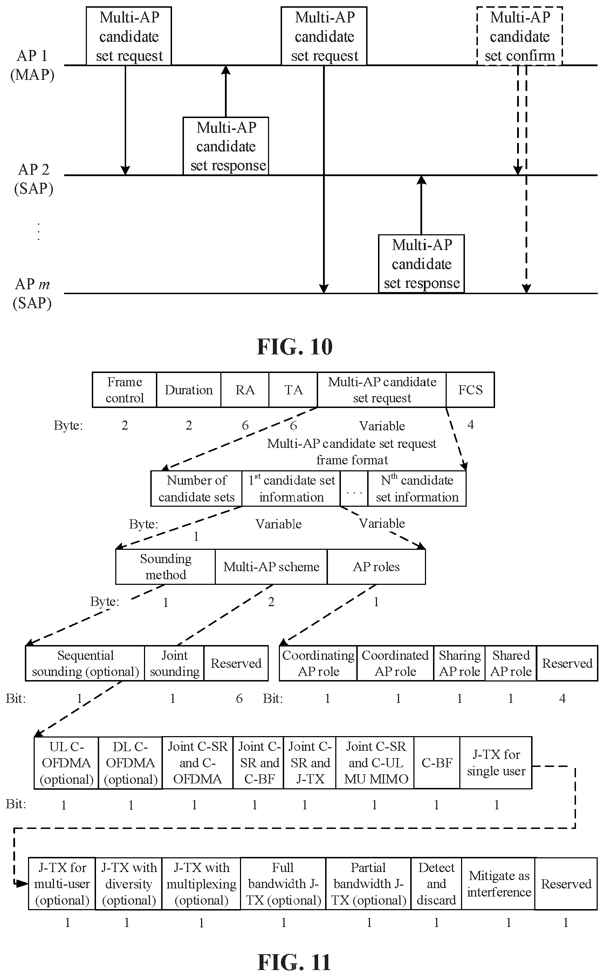

In some embodiments, the first request information sent by the MAP to an i-th SAP of the m SAP(s) is sent through a second frame, and 1 ≤ i ≤ m. For example, the second frame is a multi-AP candidate set request frame. As shown in FIG. 10, the MAP sends the multi-AP candidate set request frame to the m SAP(s) respectively, to request setup of n multi-AP candidate set(s).

In some embodiments, the second frame includes a multi-AP candidate set request field, and the multi-AP candidate set request field includes n candidate set information field(s) and a number of candidate sets field. The n candidate set information field(s) indicate information related to the n multi-AP candidate set(s) respectively, and the number of candidate sets field is configured to indicate the number of candidate set information fields included in the multi-AP candidate set request field. That is, the number of candidate sets field may indicate value of n.

Specifically, as shown in FIG. 11, in the second frame, bytes occupied by the multi-AP candidate set request field may be variable, the number of candidate sets field may occupy 1 byte, and bytes occupied by each candidate set information field may be variable. Furthermore, the second frame may further include a frame control field (occupying 2 bytes), a duration field (occupying 2 bytes), a Receiving Address (RA) (occupying 6 bytes), a Transmission Address (TA), and a Frame Check Sequence (FCS) (occupying 4 bytes).

In some embodiments, in the second frame, candidate set information field(s) of the n candidate set information field(s) include at least one of following: a sounding method field, a multi-AP scheme field, and an AP roles field

In some embodiments, in the second frame, candidate set information field(s) of the n candidate set information field(s) include at least one of following: a joint sounding support field, a multi-AP scheme field, and an AP roles field.

Specifically, for example, in case that the candidate set information field(s) of the n candidate set information field(s) include the joint sounding support field, a multi-AP candidate set corresponding to a current candidate set information field supports multiple APs to perform channel sounding sequentially by default.

In some embodiments, in the second frame, the sounding method field is configured to indicate a channel sounding method supported by a multi-AP candidate set corresponding to a current candidate set information field, the multi-AP scheme field is configured to indicate a multi-AP coordination mode supported by the multi-AP candidate set corresponding to the current candidate set information field, the AP roles field is configured to indicate a multi-AP coordination role supported by the i-th SAP in the multi-AP candidate set corresponding to the current candidate set information field, and the joint sounding support field is configured to indicate whether the multi-AP candidate set corresponding to the current candidate set information field supports multiple APs to perform channel sounding simultaneously and synchronously.

Specifically, for example, as shown in FIG. 11, in the second frame, the candidate set information field(s) of the n candidate set information field(s) include a sounding method field (occupying 1 byte), a multi-AP scheme field (occupying 2 bytes), and an AP roles field (occupying 1 byte).

**In** some embodiments, in the second frame, candidate set information field(s) of the n candidate set information field(s) include at least one of following: a VBSS ID field, a candidate set ID field, a sounding method field, a multi-AP scheme field, a number of APs field, and multiple AP information fields.

In some embodiments, in the second frame, candidate set information field(s) of the n candidate set information field(s) include at least one of following: a VBSS ID field, a candidate set ID field, a joint sounding support field, a multi-AP scheme field, a number of APs field, and multiple AP information fields.

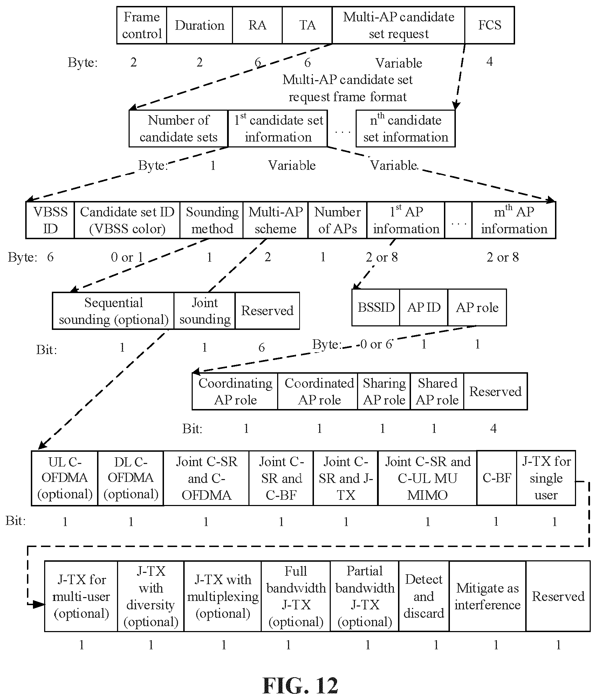

Specifically, in the second frame, the VBSS ID field is configured to indicate VBSS ID of a multi-AP candidate set corresponding to a current candidate set information field. For example, as shown in FIG. 12, the VBSS ID field (occupies 6 bytes).

Specifically, in the second frame, the candidate set ID field is configured to indicate ID of the multi-AP candidate set corresponding to the current candidate set information field.

In some embodiments, in the second frame, the candidate set ID field may also be replaced by a VBSS color field, and the VBSS color field may be configured to indicate the multi-AP candidate set corresponding to the current candidate set information field.

For example, as shown in FIG. 12, the candidate set ID field or the VBSS color field (occupies 0 or 1 byte).

Specifically, in the second frame, the sounding method field is configured to indicate a channel sounding method supported by the multi-AP candidate set corresponding to the current candidate set information field. For example, the sounding method field (occupies 1 byte) as shown in FIG. 11 and FIG. 12.

Specifically, in the second frame, the multi-AP scheme field is configured to indicate a multi-AP coordination mode supported by the multi-AP candidate set corresponding to the current candidate set information field. For example, the multi-AP scheme field (occupies 2 bytes) as shown in FIG. 11 and FIG. 12.

Specifically, in the second frame, the number of APs field is configured to indicate the number of member APs contained in the multi-AP candidate set corresponding to the current candidate set information field. For example, the number of APs field (occupies 1 byte) as shown in FIG. 12.

Specifically, in the second frame, a m-th AP information field of multiple AP information fields is configured to indicate information related to an m-th member AP of the member APs contained in the multi-AP candidate set corresponding to the current candidate set information field. For example, as shown in FIG. 12, an AP information field of multiple AP information fields (occupies 2 or 8 bytes).

Specifically, in the second frame, the joint sounding support field is configured to indicate whether the multi-AP candidate set corresponding to the current candidate set information field supports multiple APs to perform channel sounding simultaneously and synchronously. For example, the joint sounding support field may occupy 1 bit.

Specifically, for example, in case that the candidate set information field(s) of the n candidate set information field(s) include the joint sounding support field, the multi-AP candidate set corresponding to the current candidate set information field supports multiple APs to perform channel sounding sequentially by default.

In some embodiments, in case that the candidate set information field(s) of the n candidate set information field(s) include the joint sounding support field, the i-th SAP supports multiple APs to perform channel sounding sequentially by default.

In some embodiments, in the second frame, the sounding method field includes at least one of a sequential sounding field and a joint sounding field.

In some embodiments, in the second frame, the sounding method field includes only the joint sounding field.

Specifically, in the second frame, the sequential sounding field is configured to indicate whether the multi-AP candidate set corresponding to the current candidate set information field supports multiple APs to perform channel sounding sequentially.

Specifically, in the second frame, the joint sounding field is configured to indicate whether the multi-AP candidate set corresponding to the current candidate set information field supports multiple APs to perform channel sounding simultaneously and synchronously.

In some embodiments, in the second frame, in case that the sounding method support field does not include the sequential sounding field, the multi-AP candidate set corresponding to the current candidate set information field supports multiple APs to perform channel sounding sequentially by default.

In some embodiments, in the second frame, the multi-AP scheme field includes at least one of following: a UL C-OFDMA field, a DL C-OFDMA field, a joint C-SR and C-OFDMA field, a joint C-SR and C-BF field, a joint C-SR and J-TX field, a joint C-SR and C-UL MU MIMO field, a C-BF Field, a J-TX for single user field, a J-TX for multi-user field, a J-TX with diversity field, a J-TX with multiplexing field, a full bandwidth J-TX field, a partial bandwidth J-TX field, a detect and discard field, and a mitigate as interference field.

In some embodiments, in the second frame, the multi-AP scheme field includes at least one of following: a joint C-SR and C-OFDMA field, a joint C-SR and C-BF field, a joint C-SR and J-TX field, a joint C-SR and C-UL MU MIMO field, a C-BF Field, a J-TX for single user field, a J-TX for multi-user field, a J-TX with diversity field, a J-TX with multiplexing field, a full bandwidth J-TX field, a partial bandwidth J-TX field, a detect and discard field, and a mitigate as interference field.

Specifically, in the second frame, the UL C-OFDMA field is configured to indicate whether the multi-AP candidate set corresponding to the current candidate set information field supports UL C-OFDMA. For example, as shown in FIG. 11 and FIG. 12, the UL C-OFDMA field is an optional field, and may occupy 1 bit when it is present.

For example, in the second frame, the value of UL C-OFDMA field equals to 1 means that the multi-AP candidate set corresponding to the current candidate set information field supports UL C-OFDMA; and the value of UL C-OFDMA field equals to 0 means that the multi-AP candidate set corresponding to the current candidate set information field does not support UL C-OFDMA.

For another example, in the second frame, the value of UL C-OFDMA field equals to 0 means that the multi-AP candidate set corresponding to the current candidate set information field supports UL C-OFDMA; and the value of UL C-OFDMA field equals to 1 means that the multi-AP candidate set corresponding to the current candidate set information field does not support UL C-OFDMA.

Specifically, in the second frame, the DL C-OFDMA field is configured to indicate whether the multi-AP candidate set corresponding to the current candidate set information field supports DL C-OFDMA. For example, as shown in FIG. 11 and FIG. 12, the DL C-OFDMA field is an optional field, and may occupy 1 bit when it is present.

For example, in the second frame, the value of DL C-OFDMA field equals to 1 means that the multi-AP candidate set corresponding to the current candidate set information field supports DL C-OFDMA; and the value of DL C-OFDMA field equals to 0 means that the multi-AP candidate set corresponding to the current candidate set information field does not support DL C-OFDMA.

For another example, in the second frame, the value of DL C-OFDMA field equals to 0 means that the multi-AP candidate set corresponding to the current candidate set information field supports DL C-OFDMA; and the value of DL C-OFDMA field equals to 1 means that the multi-AP candidate set corresponding to the current candidate set information field does not support DL C-OFDMA.

Specifically, in the second frame, the joint C-SR and C-OFDMA field (Joint C-SR and C-OFDMA) is configured to indicate whether the multi-AP candidate set corresponding to the current candidate set information field supports simultaneous and joint use of C-SR and C-OFDMA. For example, as shown in FIG. 11 and FIG. 12, the joint C-SR and C-OFDMA field may occupy 1 bit.

For example, in the second frame, the value of joint C-SR and C-OFDMA field equals to 1 means that the multi-AP candidate set corresponding to the current candidate set information field supports simultaneous and joint use of C-SR and C-OFDMA; and the value of joint C-SR and C-OFDMA field equals to 0 means that the multi-AP candidate set corresponding to the current candidate set information field does not support simultaneous and joint use of C-SR and C-OFDMA.

For another example, in the second frame, the value of joint C-SR and C-OFDMA field equals to 0 means that the multi-AP candidate set corresponding to the current candidate set information field supports simultaneous and joint use of C-SR and C-OFDMA; and the value of joint C-SR and C-OFDMA field equals to 1 means that the multi-AP candidate set corresponding to the current candidate set information field does not support simultaneous and joint use of C-SR and C-OFDMA.

Specifically, in the second frame, the joint C-SR and C-BF field (Joint C-SR and C-BF) is configured to indicate whether the multi-AP candidate set corresponding to the current candidate set information field supports simultaneous and joint use of C-SR and C-BF. For example, as shown in FIG. 11 and FIG. 12, the joint C-SR and C-BF field may occupy 1 bit.

For example, in the second frame, the value of joint C-SR and C-BF field equals to 1 means that the multi-AP candidate set corresponding to the current candidate set information field supports simultaneous and joint use of C-SR and C-BF; and the value of joint C-SR and C-BF field equals to 0 means that the multi-AP candidate set corresponding to the current candidate set information field does not support simultaneous and joint use of C-SR and C-BF.

For another example, in the second frame, the value of joint C-SR and C-BF field equals to 0 means that the multi-AP candidate set corresponding to the current candidate set information field supports simultaneous and joint use of C-SR and C-BF; and the value of joint C-SR and C-BF field equals to 1 means that the multi-AP candidate set corresponding to the current candidate set information field does not support simultaneous and joint use of C-SR and C-BF.

Specifically, in the second frame, the joint C-SR and J-TX field (Joint C-SR and J-TX) is configured to indicate whether the multi-AP candidate set corresponding to the current candidate set information field supports simultaneous and joint use of C-SR and J-TX. For example, as shown in FIG. 11 and FIG. 12, the joint C-SR and J-TX field may occupy 1 bit.

For example, in the second frame, the value of joint C-SR and J-TX field equals to 1 means that the multi-AP candidate set corresponding to the current candidate set information field supports simultaneous and joint use of C-SR and J-TX; and the value of joint C-SR and J-TX field equals to 0 means that the multi-AP candidate set corresponding to the current candidate set information field does not support simultaneous and joint use of C-SR and J-TX.

For another example, in the second frame, the value of joint C-SR and J-TX field equals to 0 means that the multi-AP candidate set corresponding to the current candidate set information field supports simultaneous and joint use of C-SR and J-TX; and the value of joint C-SR and J-TX field equals to 1 means that the multi-AP candidate set corresponding to the current candidate set information field does not support simultaneous and joint use of C-SR and J-TX.

Specifically, in the second frame, the joint C-SR and C-UL MU MIMO field (Joint C-SR and C-UL MU MIMO) is configured to indicate whether the multi-AP candidate set corresponding to the current candidate set information field supports simultaneous and joint use of C-SR and C-UL MU MIMO. For example, as shown in FIG. 11 and FIG. 12, the joint C-SR and C-UL MU MIMO field may occupy 1 bit.

For example, in the second frame, the value of joint C-SR and C-UL MU MIMO field equals to 1 means that the multi-AP candidate set corresponding to the current candidate set information field supports simultaneous and joint use of C-SR and C-UL MU MIMO; and the value of joint C-SR and C-UL MU MIMO field equals to 0 means that the multi-AP candidate set corresponding to the current candidate set information field does not support simultaneous and joint use of C-SR and C-UL MU MIMO.

For another example, in the second frame, the value of joint C-SR and C-UL MU MIMO field equals to 0 means that the multi-AP candidate set corresponding to the current candidate set information field supports simultaneous and joint use of C-SR and C-UL MU MIMO; and the value of joint C-SR and C-UL MU MIMO field equals to 1 means that the multi-AP candidate set corresponding to the current candidate set information field does not support simultaneous and joint use of C-SR and C-UL MU MIMO.

Specifically, in the second frame, the C-BF field is configured to indicate whether the multi-AP candidate set corresponding to the current candidate set information field supports C-BF. For example, as shown in FIG. 11 and FIG. 12, the C-BF field may occupy 1 bit.

For example, in the second frame, the value of C-BF field equals to 1 means that the multi-AP candidate set corresponding to the current candidate set information field supports C-BF; and the value of C-BF field equals to 0 means that the multi-AP candidate set corresponding to the current candidate set information field does not support C-BF.

For another example, in the second frame, the value of C-BF field equals to 0 means that the multi-AP candidate set corresponding to the current candidate set information field supports C-BF; and the value of C-BF field equals to 1 means that the multi-AP candidate set corresponding to the current candidate set information field does not support C-BF.

Specifically, in the second frame, the J-TX for single user field is configured to indicate whether the multi-AP candidate set corresponding to the current candidate set information field supports performing joint transmission for a same user. For example, as shown in FIG. 11 and FIG. 12, the J-TX for single user field may occupy 1 bit.

For example, in the second frame, the J-TX for single user field = 1 means that the multi-AP candidate set corresponding to the current candidate set information field supports performing joint transmission for the same user; and the J-TX for single user field = 0 means that the multi-AP candidate set corresponding to the current candidate set information field does not support performing joint transmission for the same user.

For another example, in the second frame, the J-TX for single user field = 0 means that the multi-AP candidate set corresponding to the current candidate set information field supports performing joint transmission for the same user; and the J-TX for single user field = 1 means that the multi-AP candidate set corresponding to the current candidate set information field does not support performing joint transmission for the same user.

Specifically, in the second frame, the J-TX for multi-user field is configured to indicate whether the multi-AP candidate set corresponding to the current candidate set information field supports performing joint transmission for multiple users. For example, as shown in FIG. 11 and FIG. 12, the J-TX for multi-user field is an optional field, and may occupy 1 bit when it is present.

For example, in the second frame, the J-TX for multi-user field = 1 means that the multi-AP candidate set corresponding to the current candidate set information field supports performing joint transmission for multiple users; and the J-TX for multi-user field = 0 means that the multi-AP candidate set corresponding to the current candidate set information field does not support performing joint transmission for multiple users.

For another example, in the second frame, the J-TX for multi-user field = 0 means that the multi-AP candidate set corresponding to the current candidate set information field supports performing joint transmission for multiple users; and the J-TX for multi-user field = 1 means that the multi-AP candidate set corresponding to the current candidate set information field does not support performing joint transmission for multiple users.

Specifically, in the second frame, the J-TX with diversity field is configured to indicate whether the multi-AP candidate set corresponding to the current candidate set information field supports joint transmission of diversity type. For example, as shown in FIG. 11 and FIG. 12, the J-TX with diversity field is an optional field, and may occupy 1 bit when it is present.

For example, in the second frame, the J-TX with diversity field = 1 means that the multi-AP candidate set corresponding to the current candidate set information field supports joint transmission of diversity type; and the J-TX with diversity field = 0 means that the multi-AP candidate set corresponding to the current candidate set information field does not support joint transmission of diversity type.

For another example, in the second frame, the J-TX with diversity field = 0 means that the multi-AP candidate set corresponding to the current candidate set information field supports joint transmission of diversity type; and the J-TX with diversity field = 1 means that the multi-AP candidate set corresponding to the current candidate set information field does not support joint transmission of diversity type.

Specifically, in the second frame, the J-TX with multiplexing field is configured to indicate whether the multi-AP candidate set corresponding to the current candidate set information field supports joint transmission of multiplexing type. For example, as shown in FIG. 11 and FIG. 12, the J-TX with multiplexing field is an optional field, and may occupy 1 bit when it is present.

For example, in the second frame, the J-TX with multiplexing field = 1 means that the multi-AP candidate set corresponding to the current candidate set information field supports joint transmission of multiplexing type; and the J-TX with multiplexing field = 0 means that the multi-AP candidate set corresponding to the current candidate set information field does not support joint transmission of multiplexing type.

For another example, in the second frame, the J-TX with multiplexing field = 0 means that the multi-AP candidate set corresponding to the current candidate set information field supports joint transmission of multiplexing type; and the J-TX with multiplexing field = 1 means that the multi-AP candidate set corresponding to the current candidate set information field does not support joint transmission of multiplexing type.

Specifically, in the second frame, the full bandwidth J-TX field is configured to indicate whether the multi-AP candidate set corresponding to the current candidate set information field supports joint transmission in full bandwidth. For example, as shown in FIG. 11 and FIG. 12, the full bandwidth J-TX field is an optional field, and may occupy 1 bit when it is present.

For example, in the second frame, the full bandwidth J-TX field = 1 means that the multi-AP candidate set corresponding to the current candidate set information field supports joint transmission in full bandwidth; and the full bandwidth J-TX field = 0 means that the multi-AP candidate set corresponding to the current candidate set information field does not support joint transmission in full bandwidth.

For another example, in the second frame, the full bandwidth J-TX field = 0 means that the multi-AP candidate set corresponding to the current candidate set information field supports joint transmission in full bandwidth; and the full bandwidth J-TX field = 1 means that the multi-AP candidate set corresponding to the current candidate set information field does not support joint transmission in full bandwidth.

Specifically, in the second frame, the partial bandwidth J-TX field is configured to indicate whether the multi-AP candidate set corresponding to the current candidate set information field supports joint transmission in partial bandwidth. For example, as shown in FIG. 11 and FIG. 12, the partial bandwidth J-TX field is an optional field, and may occupy 1 bit when it is present.

For example, in the second frame, the partial bandwidth J-TX field = 1 means that the multi-AP candidate set corresponding to the current candidate set information field supports joint transmission in partial bandwidth; and the partial bandwidth J-TX field = 0 means that the multi-AP candidate set corresponding to the current candidate set information field does not support joint transmission in partial bandwidth.

For another example, in the second frame, the partial bandwidth J-TX field = 0 means that the multi-AP candidate set corresponding to the current candidate set information field supports joint transmission in partial bandwidth; and the partial bandwidth J-TX field = 1 means that the multi-AP candidate set corresponding to the current candidate set information field does not support joint transmission in partial bandwidth.

Specifically, in the second frame, the detect and discard field is configured to indicate whether the multi-AP candidate set corresponding to the current candidate set information field supports receiving and demodulating other users' data/frames and then discarding in a C-UL-MU MIMO mode, to obtain useful data/frames. For example, as shown in FIG. 11 and FIG. 12, the detect and discard field may occupy 1 bit.

For example, in the second frame, the detect and discard field = 1 means that the multi-AP candidate set corresponding to the current candidate set information field supports receiving and demodulating other users' data/frames and then discarding in the C-UL-MU MIMO mode, to obtain useful data/frames; and the detect and discard field = 0 means that the multi-AP candidate set corresponding to the current candidate set information field does not support receiving and demodulating other users' data/frames and then discarding in the C-UL-MU MIMO mode, to obtain useful data/frames.

For another example, in the second frame, the detect and discard field = 0 means that the multi-AP candidate set corresponding to the current candidate set information field supports receiving and demodulating other users' data/frames and then discarding in the C-UL-MU MIMO mode, to obtain useful data/frames; and the detect and discard field = 1 means that the multi-AP candidate set corresponding to the current candidate set information field does not support receiving and demodulating other users' data/frames and then discarding in the C-UL-MU MIMO mode, to obtain useful data/frames.

Specifically, in the second frame, the mitigate as interference field is configured to indicate whether the multi-AP candidate set corresponding to the current candidate set information field supports treating other users' data as interference directly, and receiving and demodulating a target user's data/frame directly in the C-UL-MU MIMO mode. For example, as shown in FIG. 11 and FIG. 12, the mitigate as interference field may occupy 1 bit.

For example, in the second frame, the mitigate as interference field = 1 means that the multi-AP candidate set corresponding to the current candidate set information field supports treating other users' data as interference directly, and receiving and demodulating the target user's data/frame directly in the C-UL-MU MIMO mode; and the mitigate as interference field = 0 means that the multi-AP candidate set corresponding to the current candidate set information field does not support treating other users' data as interference directly, and receiving and demodulating the target user's data/frame directly in the C-UL-MU MIMO mode.

For another example, in the second frame, the mitigate as interference field = 0 means that the multi-AP candidate set corresponding to the current candidate set information field supports treating other users' data as interference directly, and receiving and demodulating the target user's data/frame directly in the C-UL-MU MIMO mode; and the mitigate as interference field = 1 means that the multi-AP candidate set corresponding to the current candidate set information field does not support treating other users' data as interference directly, and receiving and demodulating the target user's data/frame directly in the C-UL-MU MIMO mode.

In some embodiments, in the second frame, in case that the multi-AP scheme field does not include the UL C-OFDMA field and the DL C-OFDMA field, the multi-AP candidate set corresponding to the current candidate set information field supports UL C-OFDMA and DL C-OFDMA by default.

In some embodiments, in the second frame, in case that value of the J-TX for single user field indicates that the multi-AP candidate set corresponding to the current candidate set information field does not support performing joint transmission for the same user, the multi-AP scheme field does not include the J-TX for multi-user field, or, value of the J-TX for multi-user field indicates that the multi-AP candidate set corresponding to the current candidate set information field does not support performing joint transmission for multiple users.

In some embodiments, in the second frame, in case that value of the J-TX for single user field indicates that the multi-AP candidate set corresponding to the current candidate set information field does not support performing joint transmission for the same user, the multi-AP scheme field does not include the J-TX with diversity field, or, value of the J-TX with diversity field indicates that the multi-AP candidate set corresponding to the current candidate set information field does not support the diversity type of joint transmission.

In some embodiments, in the second frame, in case that value of the J-TX for single user field indicates that the multi-AP candidate set corresponding to the current candidate set information field does not support performing joint transmission for the same user, the multi-AP scheme field does not include the J-TX with multiplexing field, or, value of the J-TX with multiplexing field indicates that the multi-AP candidate set corresponding to the current candidate set information field does not support the multiplexing type of joint transmission.

In some embodiments, in the second frame, in case that value of the J-TX for single user field indicates that the multi-AP candidate set corresponding to the current candidate set information field does not support performing joint transmission for the same user, the multi-AP scheme field does not include the full bandwidth J-TX field, or, value of the full bandwidth J-TX field indicates that the multi-AP candidate set corresponding to the current candidate set information field does not support joint transmission in full bandwidth.

In some embodiments, in the second frame, in case that value of the J-TX for single user field indicates that the multi-AP candidate set corresponding to the current candidate set information field does not support performing joint transmission for the same user, the multi-AP scheme field does not include the partial bandwidth J-TX field, or, value of the partial bandwidth J-TX field indicates that the multi-AP candidate set corresponding to the current candidate set information field does not support joint transmission in partial bandwidth.

In some embodiments, in the second frame, in case that value of the J-TX for single user field indicates that the multi-AP candidate set corresponding to the current candidate set information field supports performing joint transmission for the same user, the multi-AP scheme field does not include the J-TX with diversity field and the full bandwidth J-TX field.

In some embodiments, in the second frame, in case that the multi-AP scheme field does not include the J-TX with diversity field, the multi-AP candidate set corresponding to the current candidate set information field supports joint transmission of diversity type by default.

In some embodiments, in the second frame, in case that the multi-AP scheme field does not include the full bandwidth J-TX field, the multi-AP candidate set corresponding to the current candidate set information field supports joint transmission in full bandwidth by default.

In some embodiments, in the second frame, the multi-AP scheme field includes at least one of following: a C-OFDMA support field, a C-SR support field, a C-BF support field, a J-TX support field, and a C-UL MU MIMO support field.

In some embodiments, in the second frame, the multi-AP scheme field includes at least one of following: a C-SR support field, a C-BF support field, a J-TX support field, and a C-UL MU MIMO support field.

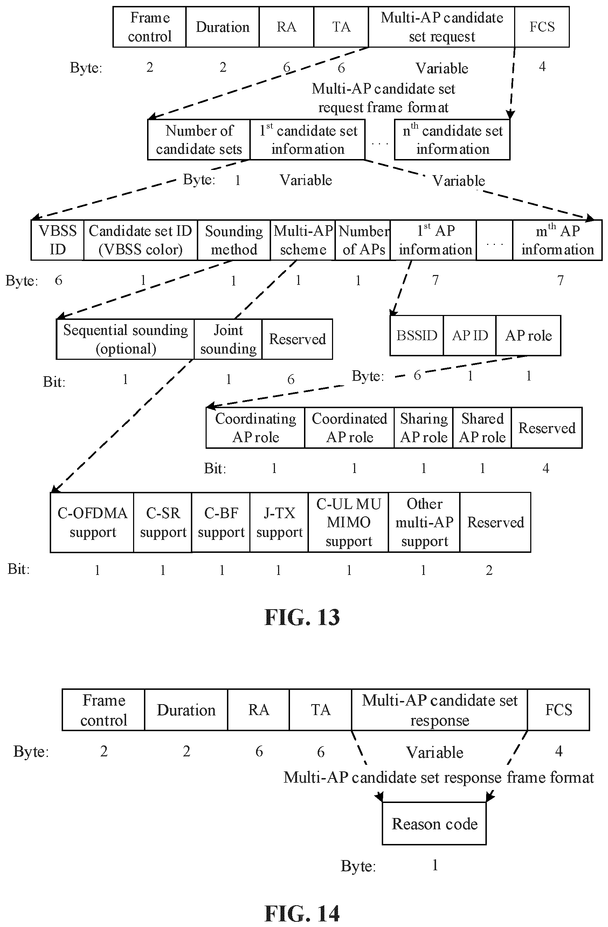

Specifically, the C-OFDMA support field (C-OFDMA Support) is configured to indicate whether the multi-AP candidate set corresponding to the current candidate set information field supports C-OFDMA. For example, as shown in FIG. 13, the C-OFDMA support field may occupy 1 bit.

For example, the value of C-OFDMA support field equals to 1 means that the multi-AP candidate set corresponding to the current candidate set information field supports C-OFDMA; and the value of C-OFDMA support field equals to 0 means that the multi-AP candidate set corresponding to the current candidate set information field does not support C-OFDMA.

For another example, the value of C-OFDMA support field equals to 0 means that the multi-AP candidate set corresponding to the current candidate set information field supports C-OFDMA; and the value of C-OFDMA support field equals to 1 means that the multi-AP candidate set corresponding to the current candidate set information field does not support C-OFDMA.

Specifically, the C-SR support field is configured to indicate whether the multi-AP candidate set corresponding to the current candidate set information field supports C-SR. For example, as shown in FIG. 13, the C-SR support field may occupy 1 bit.

For example, the value of C-SR support field equals to 1 means that the multi-AP candidate set corresponding to the current candidate set information field supports C-SR; and the value of C-SR support field equals to 0 means that the multi-AP candidate set corresponding to the current candidate set information field does not support C-SR.

For another example, the value of C-SR support field equals to 0 means that the multi-AP candidate set corresponding to the current candidate set information field supports C-SR; and the value of C-SR support field equals to 1 means that the multi-AP candidate set corresponding to the current candidate set information field does not support C-SR.

Specifically, the C-BF support field is configured to indicate whether the multi-AP candidate set corresponding to the current candidate set information field supports C-BF. For example, as shown in FIG. 13, the C-BF support field may occupy 1 bit.

For example, the value of C-BF support field equals to 1 means that the multi-AP candidate set corresponding to the current candidate set information field supports C-BF; and the value of C-BF support field equals to 0 means that the multi-AP candidate set corresponding to the current candidate set information field does not support C-BF.

For another example, the value of C-BF support field equals to 0 means that the multi-AP candidate set corresponding to the current candidate set information field supports C-BF; and the value of C-BF support field equals to 1 means that the multi-AP candidate set corresponding to the current candidate set information field does not support C-BF.

Specifically, the J-TX support field is configured to indicate whether the multi-AP candidate set corresponding to the current candidate set information field supports J-TX. For example, as shown in FIG. 13, the J-TX support field may occupy 1 bit.

For example, the value of J-TX support field equals to 1 means that the multi-AP candidate set corresponding to the current candidate set information field supports J-TX; and the value of J-TX support field equals to 0 means that the multi-AP candidate set corresponding to the current candidate set information field does not support J-TX.

For another example, the value of J-TX support field equals to 0 means that the multi-AP candidate set corresponding to the current candidate set information field supports J-TX; and the value of J-TX support field equals to 1 means that the multi-AP candidate set corresponding to the current candidate set information field does not support J-TX.

Specifically, the C-UL MU MIMO support field is configured to indicate whether the multi-AP candidate set corresponding to the current candidate set information field supports C-UL MU MIMO. For example, as shown in FIG. 13, the C-UL MU MIMO support field may occupy 1 bit.

For example, the value of C-UL MU MIMO support field equals to 1 means that the multi-AP candidate set corresponding to the current candidate set information field supports C-UL MU MIMO; and the value of C-UL MU MIMO support field equals to 0 value of C-UL MU MIMO support field equals to 0 means that the multi-AP candidate set corresponding to the current candidate set information field does not support C-UL MU MIMO.

For another example, the value of C-UL MU MIMO support field equals to 0 means that the multi-AP candidate set corresponding to the current candidate set information field supports C-UL MU MIMO; and the value of C-UL MU MIMO support field equals to 1 means that the multi-AP candidate set corresponding to the current candidate set information field does not support C-UL MU MIMO.

In some embodiments, in the second frame, in case that the multi-AP scheme field does not include the C-OFDMA support field, the multi-AP candidate set corresponding to the current candidate set information field supports UL C-OFDMA and DL C-OFDMA by default.

In some embodiments, in the second frame, AP information fields of multiple AP information fields include at least one of following: a Basic Service Set (BSS) ID field, an AP ID field, and an AP roles field.

Specifically, in the second frame, the BSS ID field is configured to indicate BSS ID of AP indicated by a current AP information field. For example, as shown in FIG. 12 and FIG. 13, the BSS ID field may occupy 6 bytes.

Specifically, in the second frame, the AP ID field is configured to indicate ID of the AP indicated by the current AP information field. For example, as shown in FIG. 12 and FIG. 13, the AP ID field may occupy 1 byte.

Specifically, in the second frame, the AP roles field is configured to indicate a multi-AP coordination role supported by the AP indicated by the current AP information field. For example, as shown in FIG. 12 and FIG. 13, the AP roles field may occupy 1 byte.

In some embodiments, in the second frame, the AP roles field includes at least one of following: a coordinating AP role field, a coordinated AP role field, a sharing AP role field, and a shared AP role field.

Specifically, in a channel sounding phase, a coordinating AP indicated by the coordinating AP role field initiates sounding, and AP indicated by the coordinated AP role field participates in the sounding. In a preparation phase and/or a transmission phase, AP indicated by the sharing AP role field shares a TXOP resource thereof to AP indicated by the shared AP role field, to perform coordination transmission.

For example, as shown in FIG. 11 to FIG. 13, the coordinating AP role (Coordinating AP Role) field may occupy 1 bit, the coordinated AP role (Coordinated AP Role) field may occupy 1 bit, the sharing AP role (Sharing AP Role) field may occupy 1 bit, and the shared AP role (Shared AP Role) field may occupy 1 bit.

It should be noted that other fields in FIG. 13 may refer to the above relevant descriptions in FIG. 11 and FIG. 12, which not elaborated here.

According to the claimed invention, first response information sent by an i-th SAP of the m SAP(s) includes reason code information; the reason code information is configured to indicate whether the i-th SAP accepts the first request information sent by the MAP, and 1 ≤ i ≤ m.

In some embodiments, the reason code information may also be other indication information, which are not limited in the disclosure.

In some embodiments, the first response information sent by the i-th SAP further includes at least one of: a list of STAs associated with the i-th SAP, and a priority of a STA, participating in a multi-AP transmission or receiving mechanism, of the STAs associated with the i-th SAP.

In some embodiments, the list of the STA(s) includes identifier (ID) of at least one STA and multi-AP transmission mechanism(s) possessed by various STA(s) of the at least one STA.

The first response information sent by an i-th SAP of the m SAP(s) is sent through a third frame, and 1 ≤ i ≤ m. For example, the third frame is a multi-AP candidate set response (Multi-AP Candidate Set Response) frame.

The third frame includes a multi-AP candidate set response field (occupying a variable number of bytes), and the multi-AP candidate set response field includes a reason code (Reason Code) field (occupying 1 byte), as shown in FIG. 14.

Furthermore, as shown in FIG. 14, the third frame further includes a frame control field (occupying 2 bytes), a duration field (occupying 2 bytes), a RA field (occupying 6 bytes), a TA field (occupying 6 bytes), and a FCS field (occupying 4 bytes).

In the third frame, value of the reason code field is configured to indicate at least one of:
the i-th SAP accepts a multi-AP candidate set setup request of the MAP;
the i-th SAP rejects the multi-AP candidate set setup request of the MAP, here, reason for rejection is that a BSS of the i-th SAP has a large load and is unable to participate in multi-AP coordination transmission; and
[the i-th SAP rejects the multi-AP candidate set setup request of the MAP, here, reason for rejection is unknown.

For example, the value of reason code field equals to 0: means that the i-th SAP accepts the multi-AP candidate set setup request of the MAP; the value of reason code field equals to 1: means that the i-th SAP rejects the multi-AP candidate set setup request of the MAP, and the reason for rejection is that the BSS of the i-th SAP has a large load and is unable to participate in multi-AP coordination transmission; and the value of reason code field equals to 2: means that the i-th SAP rejects the multi-AP candidate set setup request of the MAP, and the reason for rejection is unknown.

In some embodiments, the reason code (Reason Code) field may also be a response code (Response Code) field.

In some embodiments, in the third frame, the multi-AP candidate set response field further includes a number of associated STAs field and multiple STA information fields.

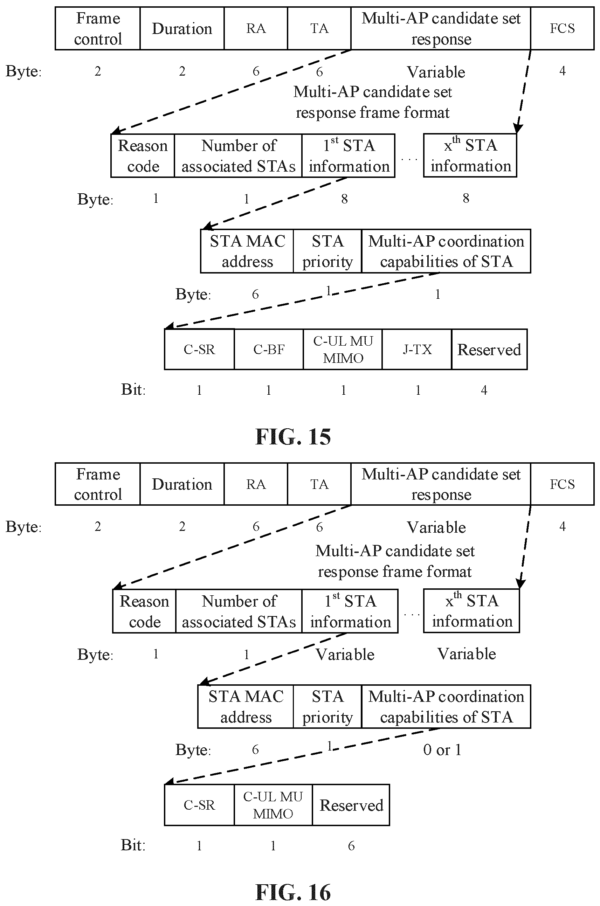

Specifically, in the third frame, the number of associated STAs field (Number of Associated STAs field) is configured to indicate the number of STAs associated with the i-th SAP. For example, as shown in FIG. 15 and FIG. 16, the number of associated STAs field may occupy 1 byte.

Specifically, in the third frame, an x-th STA information field of multiple STA information fields (x^{th} STA Info. field) is configured to indicate multi-AP coordination related information of an x-th STA of STAs associated with the i-th SAP, and x is a positive integer. For example, as shown in FIG. 15, STA information field(s) of multiple STA information fields may occupy 8 bytes. For another example, as shown in FIG. 16, STA information field(s) of multiple STA information fields may occupy a variable number of bytes.

In some embodiments, in the third frame, STA information field(s) of multiple STA information fields include at least one of following: a STA Media Access Control (MAC) address field, a STA priority field, and a multi-AP coordination capabilities of STA field.

Specifically, in the third frame, the STA MAC address field (STA MAC Address subfield) is configured to indicate a MAC address of STA indicated by a current STA information field. For example, as shown in FIG. 15 and FIG. 16, the STA MAC address field may occupy 6 bytes.

Specifically, in the third frame, the STA priority field (STA Priority subfield) is configured to indicate a priority, of participating in a multi-AP transmission or receiving mechanism, of the STA indicated by the current STA information field. For example, as shown in FIG. 15 and FIG. 16, the STA priority field may occupy 1 byte.

Specifically, in the third frame, the multi-AP coordination capabilities of STA field (Multi-AP Coordination Capabilities of STA subfield) is configured to indicate capability information, of participating in multi-AP coordination, of the STA indicated by the current STA information field. For example, as shown in FIG. 15 and FIG. 16, the multi-AP coordination capabilities of STA field may occupy 1 byte.

In some embodiments, in the third frame, the multi-AP coordination capabilities of STA field includes at least one of following: a C-SR field, a C-BF field, a C-UL MU MIMO field, and a J-TX field. For example, as shown in FIG. 15, the multi-AP coordination capabilities of STA field includes a C-SR field (occupying 1 byte), a C-BF field (occupying 1 byte), a C-UL MU MIMO field (occupying 1 byte), and a J-TX field (occupying 1 byte).

In some embodiments, in the third frame, the multi-AP coordination capabilities of STA field includes at least one of a C-SR field and a C-UL MU MIMO field. For example, as shown in FIG. 16, the multi-AP coordination capabilities of STA field includes a C-SR field (occupying 1 byte), and a C-UL MU MIMO field (occupying 1 byte).

Specifically, in the third frame, the C-SR field is configured to indicate whether the STA indicated by the current STA information field supports C-SR, for example, as shown in FIG. 15 and FIG. 16.

For example, the value of C-SR field equals to 1 means that the STA indicated by the current STA information field supports C-SR; and the value of C-SR field equals to 0 means that the STA indicated by the current STA information field does not support C-SR.

For example, the value of C-SR field equals to 0 means that the STA indicated by the current STA information field supports C-SR; and the value of C-SR field equals to 1 means that the STA indicated by the current STA information field does not support C-SR.

Specifically, the C-BF field is configured to indicate whether the STA indicated by the current STA information field supports C-BF, for example, as shown in FIG. 15.

For example, the value of C-BF field equals to 1 means that the STA indicated by the current STA information field supports C-BF; and the value of C-BF field equals to 0 means that the STA indicated by the current STA information field does not support C-BF.

For example, the value of C-BF field equals to 0 means that the STA indicated by the current STA information field supports C-BF; and the value of C-BF field equals to 1 means that the STA indicated by the current STA information field does not support C-BF.

Specifically, the C-UL MU MIMO field is configured to indicate whether the STA indicated by the current STA information field supports C-UL MU MIMO, for example, as shown in FIG. 15 and FIG. 16.

For example, the value of C-UL MU MIMO field equals to 1 means that the STA indicated by the current STA information field supports C-UL MU MIMO; and the value of C-UL MU MIMO field equals to 0 means that the STA indicated by the current STA information field does not support C-UL MU MIMO.

For another example, the value of C-UL MU MIMO field equals to 0 means that the STA indicated by the current STA information field supports C-UL MU MIMO; and the value of C-UL MU MIMO field equals to 1 means that the STA indicated by the current STA information field does not support C-UL MU MIMO.

Specifically, the J-TX field is configured to indicate whether the STA indicated by the current STA information field supports J-TX, for example, as shown in FIG. 15.

For example, the value of J-TX field equals to 1 means that the STA indicated by the current STA information field supports J-TX; and the value of J-TX field equals to 0 means that the STA indicated by the current STA information field does not support J-TX.

For another example, the value of J-TX field equals to 0 means that the STA indicated by the current STA information field supports J-TX; and the value of J-TX field equals to 1 means that the STA indicated by the current STA information field does not support J-TX.

In some embodiments, in the third frame, in case that the multi-AP coordination capabilities of STA field does not include the C-BF field, the multi-AP coordination capabilities of STA field implicitly indicates that the STA indicated by the current STA information field supports C-BF.

In some embodiments, in the third frame, in case that the multi-AP coordination capabilities of STA field does not include the J-TX field, the multi-AP coordination capabilities of STA field implicitly indicates that the STA indicated by the current STA information field supports J-TX.

In some embodiments, in the third frame, the multi-AP coordination capabilities of STA field itself may implicitly indicate that the STA indicated by the current STA information field supports UL C-OFDMA and DL C-OFDMA.

It should be noted that C-OFDMA is a function implemented at the AP side, and it is unnecessary for the STA to indicate whether this function is supported.

In some embodiments, the first response information sent by an i-th SAP of the m SAP(s) is sent through an Acknowledgement (ACK) frame, and 1 ≤ i ≤ m; the ACK frame is configured to indicate that the i-th SAP accepts the first request information sent by the MAP. That is, in case that the first response information sent by the i-th SAP is sent through the ACK frame, the i-th SAP accepts the multi-AP candidate set setup request of the MAP by default.

In some embodiments, the MAP sends first confirmation information, and the first confirmation information is configured to indicate the s multi-AP candidate set(s).

Specifically, after confirming setup of the s multi-AP candidate set(s), the MAP may send the first confirmation information, as shown in FIG. 10, the first confirmation information may be sent through a multi-AP candidate set confirm (Multi-AP Candidate Set Confirm) frame.

In some embodiments, the first confirmation information is sent by broadcast or multicast.

In some embodiments, the first confirmation information is sent through a fourth frame. For example, the fourth frame is a multi-AP candidate set confirm (Multi-AP Candidate Set Confirm) frame.

In some embodiments, the fourth frame includes a multi-AP candidate set request field, and the multi-AP candidate set request field includes s candidate set information field(s) and a number of candidate sets field; the s candidate set information field(s) indicate information related to the s multi-AP candidate set(s) respectively, and the number of candidate sets field is configured to indicate the number of candidate set information fields included in the multi-AP candidate set request field.

In some embodiments, a RA field of the fourth frame is configured to indicate a MAC address of a receiving device of the fourth frame.

Specifically, for example, in case that the first confirmation information is sent by broadcast, the RA field is a broadcast address.

Specifically, for example, in case that the first confirmation information is sent by multicast, the RA field is a multicast address, and the multicast address corresponds to SAP accepting a multi-AP candidate set setup request of the MAP.

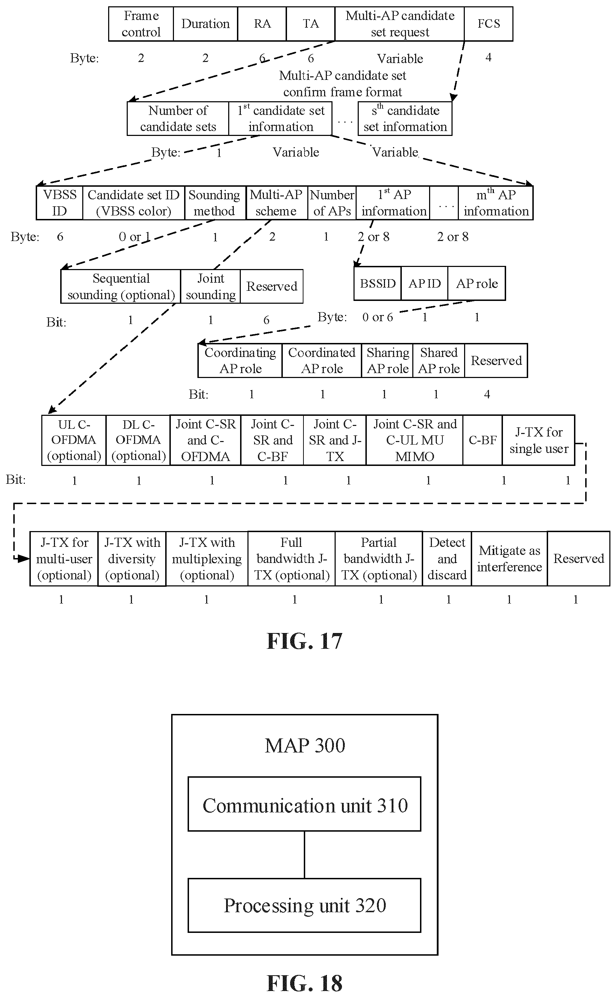

Specifically, for example, the fourth frame may be as shown in FIG. 17, and specific fields may refer to the above relevant descriptions of the second frame and FIG. 12, which not elaborated here.

Therefore, in the embodiments of the disclosure, a process of setting up the multi-AP candidate set is designed, it not only clarifies which specific multi-AP coordination capability information should be broadcast by the AP, but also designs parameter settings required during setup of the multi-AP candidate set in detail, to provide sufficient information for setup of the multi-AP candidate set, which may better set up the multi-AP candidate set suitable for different scenarios and requirements, so that multi-AP coordination transmission may be achieved.

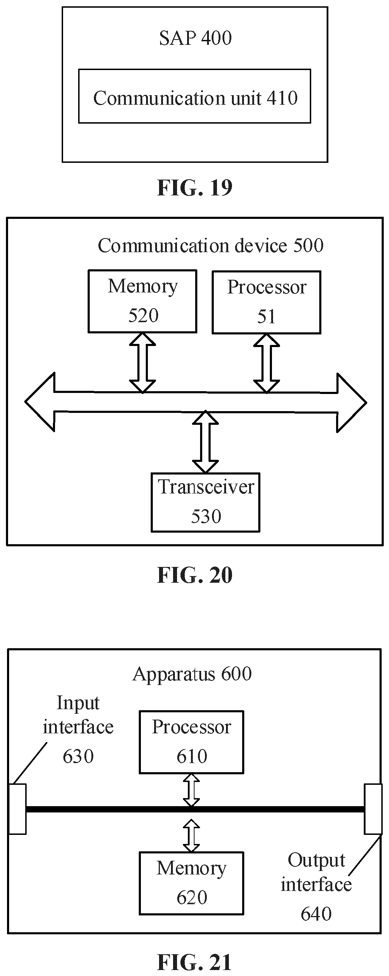

The method embodiments of the disclosure are described in detail as above with reference to FIG. 6 to FIG. 17. The apparatus embodiments of the disclosure are described in detail below with reference to FIG. 18 and FIG. 19. It should be understood that the apparatus embodiments and the method embodiments correspond to each other, and similar descriptions may refer to the method embodiments.

FIG. 18 shows a schematic block diagram of a MAP 300 according to an embodiment of the disclosure. As shown in FIG. 18, the MAP 300 includes a communication unit 310 and a processing unit 320.

The communication unit 310 is configured to acquire multi-AP coordination capability information of m SAP(s).

The processing unit 320 is configured to determine n multi-AP candidate set(s) according to the multi-AP coordination capability information of the m SAP(s).

The communication unit 310 is further configured to send first request information to the m SAP(s) respectively, and the first request information is configured to request setup of the n multi-AP candidate set(s).

The processing unit 320 is further configured to set up s multi-AP candidate set(s) of the n multi-AP candidate set(s) according to first response information sent by a part or all of the m SAP(s) with respect to the first request information.

m, n and s are all positive integers, and s ≤ n.

In some embodiments, the processing unit 320 is further configured to allocate ID information of the n multi-AP candidate set(s); and/or
the processing unit 320 is further configured to allocate ID information of the m SAP(s) in the n multi-AP candidate set(s); and/or
the processing unit 320 is further configured to allocate role information of the m SAP(s) in multi-AP coordination; and/or
the processing unit 320 is further configured to allocate multi-AP coordination mechanism(s) respectively available to each of the n multi-AP candidate set(s); and/or
the processing unit 320 is further configured to allocate sounding method(s) respectively available to each of the n multi-AP candidate set(s).

In some embodiments, the multi-AP coordination capability information of an i-th SAP of the m SAP(s) is sent through a first frame, and the first frame is a beacon frame or a management frame, and 1 ≤ i ≤ m.

In some embodiments, the first frame includes a multi-AP coordination capability field.

The multi-AP coordination capability field includes at least one of following: a multi-AP coordination control field, a common information field, a C-OFDMA specific information field, a C-SR specific information field, a J-TX specific information field, and a C-UL MU MIMO specific information field; or
the multi-AP coordination capability field includes at least one of following: a multi-AP coordination control field, a common information field, a C-SR specific information field, a J-TX specific information field, and a C-UL MU MIMO specific information field.

The multi-AP coordination control field is configured to indicate field(s) related to multi-AP coordination mode(s) specifically included in the multi-AP coordination capability field; the common information field is configured to indicate a multi-AP candidate set setup method, a role supported by the i-th SAP in a multi-AP transmission mechanism, and a channel sounding method supported by the i-th SAP; the C-OFDMA specific information field is configured to indicate a C-OFDMA type supported by the i-th SAP; the C-SR specific information field is configured to indicate a C-SR type supported by the i-th SAP; the J-TX specific information field is configured to indicate a J-TX type supported by the i-th SAP; and the C-UL MU MIMO specific information field is configured to indicate a C-UL-MU MIMO type supported by the i-th SAP.

In some embodiments, the first frame includes a multi-AP coordination capability field.

The multi-AP coordination capability field includes at least one of following: a common information field and a multi-AP scheme support field.

The common information field is configured to indicate a multi-AP candidate set setup method, a role supported by the i-th SAP in a multi-AP transmission mechanism, and a channel sounding method supported by the i-th SAP; and the multi-AP scheme support field is configured to indicate multi-AP coordination mode(s) supported by the i-th SAP.

In some embodiments, the multi-AP scheme support field includes at least one of following: a C-OFDMA support field, a C-SR support field, a C-BF support field, a J-TX support field, and a C-UL MU MIMO support field; or
the multi-AP scheme support field includes at least one of following: a C-SR support field, a C-BF support field, a J-TX support field, and a C-UL MU MIMO support field.

The C-OFDMA support field is configured to indicate whether the i-th SAP supports C-OFDMA, the C-SR support field is configured to indicate whether the i-th SAP supports C-SR, the C-BF support field is configured to indicate whether the i-th SAP supports C-BF, the J-TX support field is configured to indicate whether the i-th SAP supports J-TX, and the C-UL MU MIMO support field is configured to indicate whether the i-th SAP supports C-UL MU MIMO.

In some embodiments, in case that the multi-AP scheme support field does not include the C-OFDMA support field, the multi-AP coordination capability field itself implicitly indicates that the i-th SAP indicates UL C-OFDMA and DL C-OFDMA.

In some embodiments, the multi-AP coordination control field includes at least one of following: a C-OFDMA present field, a C-SR present field, a C-BF support field, a J-TX present field, and a C-UL MU MIMO present field; or, the multi-AP coordination control field includes at least one of following: a C-SR present field, a C-BF support field, a J-TX present field, and a C-UL MU MIMO present field.

The C-OFDMA present field is configured to indicate whether the multi-AP coordination capability field includes the C-OFDMA specific information field, and the C-OFDMA present field is configured to indicate whether the i-th SAP supports C-OFDMA;
the C-SR present field is configured to indicate whether the multi-AP coordination capability field includes the C-SR specific information field, and the C-SR present field is configured to indicate whether the i-th SAP supports C-SR;
the C-BF support field is configured to indicate whether the i-th SAP supports C-BF;
the J-TX present field is configured to indicate whether the multi-AP coordination capability field includes the J-TX specific information field, and the J-TX present field is configured to indicate whether the i-th SAP supports J-TX; and
the C-UL MU MIMO present field is configured to indicate whether the multi-AP coordination capability field includes the C-UL MU MIMO specific information field, and the C-UL MU MIMO present field is configured to indicate whether the i-th SAP supports C-UL MU MIMO.

In some embodiments, in case that the multi-AP scheme support field does not include the C-OFDMA present field, the multi-AP coordination capability field itself implicitly indicates that the i-th SAP supports UL C-OFDMA and DL C-OFDMA.

In some embodiments, the common information field includes an AP candidate set setup method field, an AP roles support field, and a sounding method support field.

The AP candidate set setup method field includes at least one of a By STA field and a By AP field. The By STA field is configured to indicate whether the i-th SAP supports that the multi-AP candidate set is formed by APs recommended by STA, and the By AP field is configured to indicate whether the i-th SAP supports that the multi-AP candidate set is formed by APs selected by the MAP directly.

The AP roles support field includes a MAP role field, a SAP role field, a coordinating AP role field, a coordinated AP role field, a sharing AP role field, and a shared AP role field; in a multi-AP candidate set setup phase, AP indicated by the MAP role field initiates a multi-AP candidate set setup request to AP indicated by the SAP role field; in a channel sounding phase, a coordinating AP indicated by the coordinating AP role field initiates sounding, and AP indicated by the coordinated AP role field participates in the sounding; and in a preparation phase and/or a transmission phase, AP indicated by the sharing AP role field shares a TXOP resource thereof to AP indicated by the shared AP role field, to perform coordination transmission.

The sounding method support field includes at least one of following: a sequential sounding field and a joint sounding field; or, the sounding method support field includes only the joint sounding field; the sequential sounding field is configured to indicate whether the i-th SAP supports multiple APs to perform channel sounding sequentially, and the joint sounding field is configured to indicate whether the i-th SAP supports multiple APs to perform channel sounding simultaneously and synchronously.

In some embodiments, in case that the sounding method support field does not include the sequential sounding field, the i-th SAP supports multiple APs to perform channel sounding sequentially by default.

In some embodiments, the common information field includes an AP candidate set setup method field, an AP roles support field, and a joint sounding support field.

The AP candidate set setup method field includes at least one of a By STA field and a By AP field. The By STA field is configured to indicate whether the i-th SAP supports that the multi-AP candidate set is formed by APs recommended by STA, and the By AP field is configured to indicate whether the i-th SAP supports that the multi-AP candidate set is formed by APs selected by the MAP directly.

The AP roles support field includes a MAP role field, a SAP role field, a coordinating AP role field, a coordinated AP role field, a sharing AP role field, and a shared AP role field; in a multi-AP candidate set setup phase, AP indicated by the MAP role field initiates a multi-AP candidate set setup request to AP indicated by the SAP role field; in a channel sounding phase, a coordinating AP indicated by the coordinating AP role field initiates sounding, and AP indicated by the coordinated AP role field participates in the sounding; and in a preparation phase and/or a transmission phase, AP indicated by the sharing AP role field shares a TXOP resource thereof to AP indicated by the shared AP role field, to perform coordination transmission.

The joint sounding support field is configured to indicate whether the i-th SAP supports multiple APs to perform channel sounding simultaneously and synchronously.

In some embodiments, the i-th SAP supports multiple APs to perform channel sounding sequentially by default.

In some embodiments, the C-OFDMA specific information field includes a UL C-OFDMA field and a DL C-OFDMA field.

The UL C-OFDMA field is configured to indicate whether the i-th SAP supports UL C-OFDMA, and the DL C-OFDMA field is configured to indicate whether the i-th SAP supports DL C-OFDMA.

In some embodiments, the C-SR specific information field includes at least one of following: a joint C-SR and C-OFDMA field, a joint C-SR and C-BF field, a joint C-SR and J-TX field, and a joint C-SR and C-UL MU MIMO field.

The joint C-SR and C-OFDMA field is configured to indicate whether the i-th SAP supports simultaneous and joint use of C-SR and C-OFDMA, the joint C-SR and C-BF field is configured to indicate whether the i-th SAP supports simultaneous and joint use of C-SR and C-BF, the joint C-SR and J-TX field is configured to indicate whether the i-th SAP supports simultaneous and joint use of C-SR and J-TX, and the joint C-SR and C-UL MU MIMO field is configured to indicate whether the i-th SAP supports simultaneous and joint use of C-SR and C-UL MU MIMO.

In some embodiments, in case that the i-th SAP does not support C-BF, the C-SR specific information field does not include the joint C-SR and C-BF field, or value of the joint C-SR and C-BF field indicates that the i-th SAP does not support simultaneous and joint use of C-SR and C-BF; and/or
in case that the i-th SAP does not support J-TX, the C-SR specific information field does not include the joint C-SR and J-TX field, or value of the joint C-SR and J-TX field indicates that the i-th SAP does not support simultaneous and joint use of C-SR and J-TX; and/or
in case that the i-th SAP does not support C-UL MU MIMO, the C-SR specific information field does not include the joint C-SR and C-UL MU MIMO field, or value of the joint C-SR and C-UL MU MIMO field indicates that the i-th SAP does not support simultaneous and joint use of C-SR and C-UL MU MIMO.

In some embodiments, the J-TX specific information field includes at least one of following: a J-TX for single user field, a J-TX for multi-user field, a J-TX with diversity field, a J-TX with multiplexing field, a full bandwidth J-TX field, and a partial bandwidth J-TX field; or
the J-TX specific information field includes at least one of following: a J-TX for multi-user field, a J-TX with diversity field, a J-TX with multiplexing field, a full bandwidth J-TX field, and a partial bandwidth J-TX field; or
the J-TX specific information field includes at least one of following: a J-TX for single user field, a J-TX for multi-user field, a J-TX with multiplexing field, a full bandwidth J-TX field, and a partial bandwidth J-TX field; or
the J-TX specific information field includes at least one of following: a J-TX for single user field, a J-TX for multi-user field, a J-TX with diversity field, a J-TX with multiplexing field, and a partial bandwidth J-TX field.

The J-TX for single user field is configured to indicate whether the i-th SAP supports performing joint transmission for a same user, the J-TX for multi-user field is configured to indicate whether the i-th SAP supports performing joint transmission for multiple users, the J-TX with diversity field is configured to indicate whether the i-th SAP supports joint transmission of diversity type, the J-TX with multiplexing field is configured to indicate whether the i-th SAP supports joint transmission of multiplexing type, the full bandwidth J-TX field is configured to indicate whether the i-th SAP supports joint transmission in full bandwidth, and the partial bandwidth J-TX field is configured to indicate whether the i-th SAP supports joint transmission in partial bandwidth.

In some embodiments, in case that the J-TX specific information field does not include the J-TX for single user field, the i-th SAP supports performing joint transmission for the same user by default; and/or
in case that the J-TX specific information field does not include the J-TX with diversity field, the i-th SAP supports joint transmission of diversity type by default; and/or
in case that the J-TX specific information field does not include the full bandwidth J-TX field, the i-th SAP supports joint transmission in full bandwidth by default.

In some embodiments, the C-UL MU MIMO specific information field includes at least one of a detect and discard field and a mitigate as interference field.

The detect and discard field is configured to indicate whether the i-th SAP supports receiving and demodulating other users' data/frames and then discarding in a C-UL-MU MIMO mode, to obtain useful data/frames.

The mitigate as interference field is configured to indicate whether the i-th SAP supports treating other users' data as interference directly, and receiving and demodulating a target user's data/frame directly in the C-UL-MU MIMO mode.

In some embodiments, the first request information sent by the MAP to an i-th SAP of the m SAP(s) is sent through a second frame, and 1 ≤ i ≤ m.

The second frame includes a multi-AP candidate set request field, and the multi-AP candidate set request field includes n candidate set information field(s) and a number of candidate sets field.

The n candidate set information field(s) indicate information related to the n multi-AP candidate set(s) respectively, and the number of candidate sets field is configured to indicate a number of candidate set information fields included in the multi-AP candidate set request field.

In some embodiments, candidate set information field(s) of the n candidate set information field(s) include at least one of following: a sounding method field, a multi-AP scheme field, andr an AP roles field; or
candidate set information field(s) of the n candidate set information field(s) include at least one of following: a joint sounding support field, a multi-AP scheme field, and an AP roles field.

The sounding method field is configured to indicate a channel sounding method supported by a multi-AP candidate set corresponding to a current candidate set information field, the multi-AP scheme field is configured to indicate a multi-AP coordination mode supported by the multi-AP candidate set corresponding to the current candidate set information field, the AP roles field is configured to indicate a multi-AP coordination role supported by the i-th SAP in the multi-AP candidate set corresponding to the current candidate set information field, and the joint sounding support field is configured to indicate whether the multi-AP candidate set corresponding to the current candidate set information field supports multiple APs to perform channel sounding simultaneously and synchronously.

In some embodiments, candidate set information field(s) of the n candidate set information field(s) include at least one of following: a VBSS ID field, a candidate set ID field, a sounding method field, a multi-AP scheme field, a number of APs field, and multiple AP information fields.

The VBSS ID field is configured to indicate VBSS ID of a multi-AP candidate set corresponding to a current candidate set information field, the candidate set ID field is configured to indicate ID of the multi-AP candidate set corresponding to the current candidate set information field, the sounding method field is configured to indicate a channel sounding method supported by the multi-AP candidate set corresponding to the current candidate set information field, the multi-AP scheme field is configured to indicate a multi-AP coordination mode supported by the multi-AP candidate set corresponding to the current candidate set information field, the number of APs field is configured to indicate a number of member APs contained in the multi-AP candidate set corresponding to the current candidate set information field, an m-th AP information field of multiple AP information fields is configured to indicate information related to an m-th member AP of the member APs contained in the multi-AP candidate set corresponding to the current candidate set information field, and the joint sounding support field is configured to indicate whether the multi-AP candidate set corresponding to the current candidate set information field supports multiple APs to perform channel sounding simultaneously and synchronously.

In some embodiments, in case that the candidate set information fields of the n candidate set information field(s) include the joint sounding support field, the i-th SAP supports multiple APs to perform channel sounding sequentially by default.

In some embodiments, the sounding method field includes at least one of a sequential sounding field and a joint sounding field; or
the sounding method field includes only the joint sounding field.

The sequential sounding field is configured to indicate whether the multi-AP candidate set corresponding to the current candidate set information field supports multiple APs to perform channel sounding sequentially, and the joint sounding field is configured to indicate whether the multi-AP candidate set corresponding to the current candidate set information field supports multiple APs to perform channel sounding simultaneously and synchronously.

In some embodiments, in case that the sounding method support field does not include the sequential sounding field, the multi-AP candidate set corresponding to the current candidate set information field supports multiple APs to perform channel sounding sequentially by default.

In some embodiments, the multi-AP scheme field includes at least one of following: a UL C-OFDMA field, a DL C-OFDMA field, a joint C-SR and C-OFDMA field, a joint C-SR and C-BF field, a joint C-SR and J-TX field, a joint C-SR and C-UL MU MIMO field, a C-BF Field, a J-TX for single user field, a J-TX for multi-user field, a J-TX with diversity field, a J-TX with multiplexing field, a full bandwidth J-TX field, a partial bandwidth J-TX field, a detect and discard field, and a mitigate as interference field; or
the multi-AP scheme field includes at least one of following: a joint C-SR and C-OFDMA field, a joint C-SR and C-BF field, a joint C-SR and J-TX field, a joint C-SR and C-UL MU MIMO field, a C-BF Field, a J-TX for single user field, a J-TX for multi-user field, a J-TX with diversity field, a J-TX with multiplexing field, a full bandwidth J-TX field, a partial bandwidth J-TX field, a detect and discard field, and a mitigate as interference field.

The UL C-OFDMA field is configured to indicate whether the multi-AP candidate set corresponding to the current candidate set information field supports UL C-OFDMA, the DL C-OFDMA field is configured to indicate whether the multi-AP candidate set corresponding to the current candidate set information field supports DL C-OFDMA, the joint C-SR and C-OFDMA field is configured to indicate whether the multi-AP candidate set corresponding to the current candidate set information field supports simultaneous and joint use of C-SR and C-OFDMA, the joint C-SR and C-BF field is configured to indicate whether the multi-AP candidate set corresponding to the current candidate set information field supports simultaneous and joint use of C-SR and C-BF, the joint C-SR and J-TX field is configured to indicate whether the multi-AP candidate set corresponding to the current candidate set information field supports simultaneous and joint use of C-SR and J-TX, the joint C-SR and C-UL MU MIMO field is configured to indicate whether the multi-AP candidate set corresponding to the current candidate set information field supports simultaneous and joint use of C-SR and C-UL MU MIMO, the C-BF field is configured to indicate whether the multi-AP candidate set corresponding to the current candidate set information field supports C-BF, the J-TX for single user field is configured to indicate whether the multi-AP candidate set corresponding to the current candidate set information field supports performing joint transmission for a same user, the J-TX for multi-user field is configured to indicate whether the multi-AP candidate set corresponding to the current candidate set information field supports performing joint transmission for multiple users, the J-TX with diversity field is configured to indicate whether the multi-AP candidate set corresponding to the current candidate set information field supports joint transmission of diversity type, the J-TX with multiplexing field is configured to indicate whether the multi-AP candidate set corresponding to the current candidate set information field supports joint transmission of multiplexing type, the full bandwidth J-TX field is configured to indicate whether the multi-AP candidate set corresponding to the current candidate set information field supports joint transmission in full bandwidth, the partial bandwidth J-TX field is configured to indicate whether the multi-AP candidate set corresponding to the current candidate set information field supports joint transmission in partial bandwidth, the detect and discard field is configured to indicate whether the multi-AP candidate set corresponding to the current candidate set information field supports receiving and demodulating other users' data/frames and then discarding in a C-UL-MU MIMO mode, to obtain useful data/frames, and the mitigate as interference field is configured to indicate whether the multi-AP candidate set corresponding to the current candidate set information field supports treating other users' data as interference directly, and receiving and demodulating a target user's data/frame directly in the C-UL-MU MIMO mode.

In some embodiments, in case that the multi-AP scheme field does not include the UL C-OFDMA field and the DL C-OFDMA field, the multi-AP candidate set corresponding to the current candidate set information field supports UL C-OFDMA and DL C-OFDMA by default.

In some embodiments, in case that value of the J-TX for single user field indicates that the multi-AP candidate set corresponding to the current candidate set information field does not support performing joint transmission for the same user,
the multi-AP scheme field does not include the J-TX for multi-user field, or, value of the J-TX for multi-user field indicates that the multi-AP candidate set corresponding to the current candidate set information field does not support performing joint transmission for multiple users; and/or
the multi-AP scheme field does not include the J-TX with diversity field, or, value of the J-TX with diversity field indicates that the multi-AP candidate set corresponding to the current candidate set information field does not support joint transmission of diversity type; and/or
the multi-AP scheme field does not include the J-TX with multiplexing field, or, value of the J-TX with multiplexing field indicates that the multi-AP candidate set corresponding to the current candidate set information field does not support joint transmission of multiplexing type; and/or
the multi-AP scheme field does not include the full bandwidth J-TX field, or, value of the full bandwidth J-TX field indicates that the multi-AP candidate set corresponding to the current candidate set information field does not support joint transmission in full bandwidth; and/or
the multi-AP scheme field does not include the partial bandwidth J-TX field, or, value of the partial bandwidth J-TX field indicates that the multi-AP candidate set corresponding to the current candidate set information field does not support joint transmission in partial bandwidth.

In some embodiments, in case that value of the J-TX for single user field indicates that the multi-AP candidate set corresponding to the current candidate set information field supports performing joint transmission for the same user, the multi-AP scheme field does not include the J-TX with diversity field and the full bandwidth J-TX field.

In some embodiments, the multi-AP candidate set corresponding to the current candidate set information field supports joint transmission of diversity type by default; and/or, the multi-AP candidate set corresponding to the current candidate set information field supports joint transmission in full bandwidth by default.

In some embodiments, the multi-AP scheme field includes at least one of following: a C-OFDMA support field, a C-SR support field, a C-BF support field, a J-TX support field, and a C-UL MU MIMO support field; or
the multi-AP scheme field includes at least one of following: a C-SR support field, a C-BF support field, a J-TX support field, and a C-UL MU MIMO support field.

The C-OFDMA support field is configured to indicate whether the multi-AP candidate set corresponding to the current candidate set information field supports C-OFDMA, the C-SR support field is configured to indicate whether the multi-AP candidate set corresponding to the current candidate set information field supports C-SR, the C-BF support field is configured to indicate whether the multi-AP candidate set corresponding to the current candidate set information field supports C-BF, the J-TX support field is configured to indicate whether the multi-AP candidate set corresponding to the current candidate set information field supports J-TX, and the C-UL MU MIMO support field is configured to indicate whether the multi-AP candidate set corresponding to the current candidate set information field supports C-UL MU MIMO.

In some embodiments, in case that the multi-AP scheme field does not include the C-OFDMA support field, the multi-AP candidate set corresponding to the current candidate set information field supports UL C-OFDMA and DL C-OFDMA by default.

In some embodiments, AP information fields of multiple AP information fields include at least one of following: a BSS ID field, an AP ID field, and an AP roles field.

The BSS ID field is configured to indicate BSS ID of AP indicated by a current AP information field, the AP ID field is configured to indicate ID of the AP indicated by the current AP information field, and the AP roles field is configured to indicate a multi-AP coordination role supported by the AP indicated by the current AP information field.

In some embodiments, the AP roles field includes at least one of following: a coordinating AP role field, a coordinated AP role field, a sharing AP role field, and a shared AP role field.

In a channel sounding phase, a coordinating AP indicated by the coordinating AP role field initiates sounding, and AP indicated by the coordinated AP role field participates in the sounding; and in a preparation phase and/or a transmission phase, AP indicated by the sharing AP role field shares a TXOP resource thereof to AP indicated by the shared AP role field, to perform coordination transmission.

In some embodiments, the first response information sent by an i-th SAP of the m SAP(s) includes reason code information; the reason code information is configured to indicate whether the i-th SAP accepts the first request information sent by the MAP, and 1 ≤ i ≤ m.

In some embodiments, the first response information sent by the i-th SAP further includes at least one of following: a list of STA(s) associated with the i-th SAP, and a priority of a STA, participating in a multi-AP transmission or receiving mechanism, of the STA(s) associated with the i-th SAP.

The list of the STAs includes D of at least one STA and multi-AP transmission mechanism(s) possessed by various STA(s) of the at least one STA.

The first response information sent by an i-th SAP of the m SAP(s) is sent through a third frame, and 1 ≤ i ≤ m.

The third frame includes a multi-AP candidate set response field, and the multi-AP candidate set response field includes a reason code field.

Value of the reason code field is configured to indicate at least one of following:
the i-th SAP accepts a multi-AP candidate set setup request of the MAP;
the i-th SAP rejects the multi-AP candidate set setup request of the MAP, here, reason for rejection is that a BSS of the i-th SAP has a large load and is unable to participate in multi-AP coordination transmission; and
the i-th SAP rejects the multi-AP candidate set setup request of the MAP, here, reason for rejection is unknown.

In some embodiments, the multi-AP candidate set response field further includes a number of associated STAs field and multiple STA information fields.

The number of associated STAs field is configured to indicate a number of STAs associated with the i-th SAP, an x-th STA information field of multiple STA information fields is configured to indicate multi-AP coordination related information of an x-th STA of STAs associated with the i-th SAP, and x is a positive integer.

In some embodiments, STA information fields of multiple STA information fields include at least one of following: a STA MAC address field, a STA priority field, and a multi-AP coordination capabilities of STA field.

The STA MAC address field is configured to indicate a MAC address of STA indicated by a current STA information field, the STA priority field is configured to indicate a priority of the STA indicated by the current STA information field participating in a multi-AP transmission or receiving mechanism, and the multi-AP coordination capabilities of STA field is configured to indicate capability information of the STA indicated by the current STA information field participating in multi-AP coordination.

In some embodiments, the multi-AP coordination capabilities of STA field includes at least one of following: a C-SR field, a C-BF field, a C-UL MU MIMO field, and a J-TX field; or
the multi-AP coordination capabilities of STA field includes at least one of a C-SR field and a C-UL MU MIMO field.

The C-SR field is configured to indicate whether the STA indicated by the current STA information field supports C-SR, the C-BF field is configured to indicate whether the STA indicated by the current STA information field supports C-BF, the C-UL MU MIMO field is configured to indicate whether the STA indicated by the current STA information field supports C-UL MU MIMO, and the J-TX field is configured to indicate whether the STA indicated by the current STA information field supports J-TX.

In some embodiments, in case that the multi-AP coordination capabilities of STA field does not include the C-BF field, the multi-AP coordination capabilities of STA field implicitly indicates that the STA indicated by the current STA information field supports C-BF; and/or
in case that the multi-AP coordination capabilities of STA field does not include the J-TX field, the multi-AP coordination capabilities of STA field implicitly indicates that the STA indicated by the current STA information field supports J-TX.

In some embodiments, the multi-AP coordination capabilities of STA field itself implicitly indicates that the STA indicated by the current STA information field supports ULC-OFDMA and DL C-OFDMA.

In some embodiments, the first response information sent by an i-th SAP of the m SAP(s) is sent through an ACK frame, and 1 ≤ i ≤ m.

The ACK frame is configured to indicate that the i-th SAP accepts the first request information sent by the MAP.

In some embodiments, the communication unit 310 is further configured to send first confirmation information, and the first confirmation information is configured to indicate the s multi-AP candidate set(s).

In some embodiments, the first confirmation information is sent by broadcast or multicast.

In some embodiments, the first confirmation information is sent through a fourth frame.

The fourth frame includes a multi-AP candidate set request field, and the multi-AP candidate set request field includes s candidate set information field(s) and a number of candidate sets field.

The s candidate set information field(s) indicate information related to the s multi-AP candidate set(s) respectively, and the number of candidate sets field is configured to indicate a number of candidate set information fields included in the multi-AP candidate set request field.

In some embodiments, a RA field of the fourth frame is configured to indicate a MAC address of a receiving device of the fourth frame.

In case that the first confirmation information is sent by broadcast, the RA field is a broadcast address;
in case that the first confirmation information is sent by multicast, the RA field is a multicast address, and the multicast address corresponds to SAP accepting a multi-AP candidate set setup request of the MAP.

In some embodiments, the above communication unit may be a communication interface or a transceiver, or an input/output (I/O) interface of a communication chip or SOC. The above processing unit may be one or more processors.

It should be understood that the MAP 300 according to the embodiment of the disclosure may correspond to the MAP in the method embodiments of the disclosure, and the foregoing and other operations and/or functions of each unit in the MAP 300 implement corresponding processes of the MAP in the method 200 shown in FIG. 6 to FIG. 17 respectively, which are not elaborated here, for the sake of brevity.

FIG. 19 shows a schematic block diagram of a SAP 400 according to an embodiment of the disclosure. As shown in FIG. 19, the SAP 400 includes a communication unit 410.

The communication unit 410 is configured to broadcast multi-AP coordination capability information thereof.

The communication unit 410 is further configured to receive first request information sent by a MAP, the first request information is configured to request setup of n multi-AP candidate set(s), and n is a positive integer.

The communication unit 410 is further configured to send first response information to the MAP, and the first response information is configured to indicate whether the SAP accepts the first request information sent by the MAP.

In some embodiments, the multi-AP coordination capability information is sent through a first frame, and the first frame is a beacon frame or a management frame.

In some embodiments, the first frame includes a multi-AP coordination capability field.

The multi-AP coordination capability field includes at least one of following: a multi-AP coordination control field, a common information field, a C-OFDMA specific information field, a C-SR specific information field, a J-TX specific information field, and a C-UL MU MIMO specific information field; or
the multi-AP coordination capability field includes at least one of following: a multi-AP coordination control field, a common information field, a C-SR specific information field, a J-TX specific information field, and a C-UL MU MIMO specific information field.

The multi-AP coordination control field is configured to indicate field(s) related to multi-AP coordination mode(s) specifically included in the multi-AP coordination capability field; the common information field is configured to indicate a multi-AP candidate set setup method, a role supported by the SAP in a multi-AP transmission mechanism, and a channel sounding method supported by the SAP; the C-OFDMA specific information field is configured to indicate a C-OFDMA type supported by the SAP; the C-SR specific information field is configured to indicate a C-SR type supported by the SAP; the J-TX specific information field is configured to indicate a J-TX type supported by the SAP; and the C-UL MU MIMO specific information field is configured to indicate a C-UL-MU MIMO type supported by the SAP.

In some embodiments, the first frame includes a multi-AP coordination capability field.

The multi-AP coordination capability field includes at least one of a common information field and a multi-AP scheme support field.

The common information field is configured to indicate a multi-AP candidate set setup method, a role supported by the SAP in a multi-AP transmission mechanism, and a channel sounding method supported by the SAP; and the multi-AP scheme support field is configured to indicate multi-AP coordination mode(s) supported by the SAP.

In some embodiments, the multi-AP scheme support field includes at least one of following: a C-OFDMA support field, a C-SR support field, a C-BF support field, a J-TX support field, and a C-UL MU MIMO support field; or
the multi-AP scheme support field includes at least one of following: a C-SR support field, a C-BF support field, a J-TX support field, and a C-UL MU MIMO support field.

The C-OFDMA support field is configured to indicate whether the SAP supports C-OFDMA, the C-SR support field is configured to indicate whether the SAP supports C-SR, the C-BF support field is configured to indicate whether the SAP supports C-BF, the J-TX support field is configured to indicate whether the SAP supports J-TX, and the C-UL MU MIMO support field is configured to indicate whether the SAP supports C-UL MU MIMO.

In some embodiments, in case that the multi-AP scheme support field does not include the C-OFDMA support field, the multi-AP coordination capability field itself implicitly indicates that the SAP indicates UL C-OFDMA and DL C-OFDMA.

In some embodiments, the multi-AP coordination control field includes at least one of following: a C-OFDMA present field, a C-SR present field, a C-BF support field, a J-TX present field, and a C-UL MU MIMO present field; or, the multi-AP coordination control field includes at least one of following: a C-SR present field, a C-BF support field, a J-TX present field, and a C-UL MU MIMO present field.

The C-OFDMA present field is configured to indicate whether the multi-AP coordination capability field includes the C-OFDMA specific information field, and the C-OFDMA present field is configured to indicate whether the SAP supports C-OFDMA;
the C-SR present field is configured to indicate whether the multi-AP coordination capability field includes the C-SR specific information field, and the C-SR present field is configured to indicate whether the SAP supports C-SR;
the C-BF support field is configured to indicate whether the SAP supports C-BF;
the J-TX present field is configured to indicate whether the multi-AP coordination capability field includes the J-TX specific information field, and the J-TX present field is configured to indicate whether the SAP supports J-TX; and
the C-UL MU MIMO present field is configured to indicate whether the multi-AP coordination capability field includes the C-UL MU MIMO specific information field, and the C-UL MU MIMO present field is configured to indicate whether the SAP supports C-UL MU MIMO.

In some embodiments, in case that the multi-AP scheme support field does not include the C-OFDMA present field, the multi-AP coordination capability field itself implicitly indicates that the SAP supports UL C-OFDMA and DL C-OFDMA.

In some embodiments, the common information field includes an AP candidate set setup method field, an AP roles support field, and a sounding method support field.

The AP candidate set setup method field includes at least one of a By STA field and a By AP field. The By STA field is configured to indicate whether the SAP supports that the multi-AP candidate set is formed by APs recommended by STA, and the By AP field is configured to indicate whether the SAP supports that the multi-AP candidate set is formed by APs selected by the MAP directly.

The AP roles support field includes a MAP role field, a SAP role field, a coordinating AP role field, a coordinated AP role field, a sharing AP role field, and a shared AP role field; in a multi-AP candidate set setup phase, AP indicated by the MAP role field initiates a multi-AP candidate set setup request to AP indicated by the SAP role field; in a channel sounding phase, a coordinating AP indicated by the coordinating AP role field initiates sounding, and AP indicated by the coordinated AP role field participates in the sounding; and in a preparation phase and/or a transmission phase, AP indicated by the sharing AP role field shares a TXOP resource thereof to AP indicated by the shared AP role field, to perform coordination transmission.

The sounding method support field includes at least one of following: a sequential sounding field and a joint sounding field; or, the sounding method support field includes only the joint sounding field; the sequential sounding field is configured to indicate whether the SAP supports multiple APs to perform channel sounding sequentially, and the joint sounding field is configured to indicate whether the SAP supports multiple APs to perform channel sounding simultaneously and synchronously.

In some embodiments, in case that the sounding method support field does not include the sequential sounding field, the SAP supports multiple APs to perform channel sounding sequentially by default.

In some embodiments, the common information field includes an AP candidate set setup method field, an AP roles support field, and a joint sounding support field.

The AP candidate set setup method field includes at least one of a By STA field, a By AP field; the By STA field is configured to indicate whether the SAP supports that the multi-AP candidate set is formed by APs recommended by STA, and the By AP field is configured to indicate whether the SAP supports that the multi-AP candidate set is formed by APs selected by the MAP directly.

The AP roles support field includes a MAP role field, a SAP role field, a coordinating AP role field, a coordinated AP role field, a sharing AP role field, and a shared AP role field; in a multi-AP candidate set setup phase, AP indicated by the MAP role field initiates a multi-AP candidate set setup request to AP indicated by the SAP role field; in a channel sounding phase, a coordinating AP indicated by the coordinating AP role field initiates sounding, and AP indicated by the coordinated AP role field participates in the sounding; and in a preparation phase and/or a transmission phase, AP indicated by the sharing AP role field shares a TXOP resource thereof to AP indicated by the shared AP role field, to perform coordination transmission.

The joint sounding support field is configured to indicate whether the SAP supports multiple APs to perform channel sounding simultaneously and synchronously.

In some embodiments, the i-th SAP supports multiple APs to perform channel sounding sequentially by default.

In some embodiments, the C-OFDMA specific information field includes a UL C-OFDMA field and a DL C-OFDMA field.

The UL C-OFDMA field is configured to indicate whether the SAP supports UL C-OFDMA, and the DL C-OFDMA field is configured to indicate whether the SAP supports DL C-OFDMA.

In some embodiments, the C-SR specific information field includes at least one of following: a joint C-SR and C-OFDMA field, a joint C-SR and C-BF field, a joint C-SR and J-TX field, and a joint C-SR and C-UL MU MIMO field.

The joint C-SR and C-OFDMA field is configured to indicate whether the SAP supports simultaneous and joint use of C-SR and C-OFDMA, the joint C-SR and C-BF field is configured to indicate whether the SAP supports simultaneous and joint use of C-SR and C-BF, the joint C-SR and J-TX field is configured to indicate whether the SAP supports simultaneous and joint use of C-SR and J-TX, and the joint C-SR and C-UL MU MIMO field is configured to indicate whether the SAP supports simultaneous and joint use of C-SR and C-UL MU MIMO.

In some embodiments, in case that the SAP does not support C-BF, the C-SR specific information field does not include the joint C-SR and C-BF field, or value of the joint C-SR and C-BF field indicates that the SAP does not support simultaneous and joint use of C-SR and C-BF; and/or
in case that the SAP does not support J-TX, the C-SR specific information field does not include the joint C-SR and J-TX field, or value of the joint C-SR and J-TX field indicates that the SAP does not support simultaneous and joint use of C-SR and J-TX; and/or
in case that the SAP does not support C-UL MU MIMO, the C-SR specific information field does not include the joint C-SR and C-UL MU MIMO field, or value of the joint C-SR and C-UL MU MIMO field indicates that the SAP does not support simultaneous and joint use of C-SR and C-UL MU MIMO.

In some embodiments, the J-TX specific information field includes at least one of following: a J-TX for single user field, a J-TX for multi-user field, a J-TX with diversity field, a J-TX with multiplexing field, a full bandwidth J-TX field, and a partial bandwidth J-TX field; or
the J-TX specific information field includes at least one of following: a J-TX for multi-user field, a J-TX with diversity field, a J-TX with multiplexing field, a full bandwidth J-TX field, and a partial bandwidth J-TX field; or
the J-TX specific information field includes at least one of following: a J-TX for single user field, a J-TX for multi-user field, a J-TX with multiplexing field, a full bandwidth J-TX field, and a partial bandwidth J-TX field; or
the J-TX specific information field includes at least one of following: a J-TX for single user field, a J-TX for multi-user field, a J-TX with diversity field, a J-TX with multiplexing field, and a partial bandwidth J-TX field.

The J-TX for single user field is configured to indicate whether the SAP supports performing joint transmission for a same user, the J-TX for multi-user field is configured to indicate whether the SAP supports performing joint transmission for multiple users, the J-TX with diversity field is configured to indicate whether the SAP supports joint transmission of diversity type, the J-TX with multiplexing field is configured to indicate whether the SAP supports joint transmission of multiplexing type, the full bandwidth J-TX field is configured to indicate whether the SAP supports joint transmission in full bandwidth, and the partial bandwidth J-TX field is configured to indicate whether the SAP supports joint transmission in partial bandwidth.

In some embodiments, in case that the J-TX specific information field does not include the J-TX for single user field, the SAP supports performing joint transmission for the same user by default; and/or
in case that the J-TX specific information field does not include the J-TX with diversity field, the SAP supports joint transmission of diversity type by default; and/or
in case that the J-TX specific information field does not include the full bandwidth J-TX field, the SAP supports joint transmission in full bandwidth by default.

In some embodiments, the C-UL MU MIMO specific information field includes at least one of a detect and discard field and a mitigate as interference field.

The detect and discard field is configured to indicate whether the SAP supports receiving and demodulating other users' data/frames and then discarding in a C-UL-MU MIMO mode, to obtain useful data/frames.

The mitigate as interference field is configured to indicate whether the SAP supports treating other users' data as interference directly, and receiving and demodulating a target user's data/frame directly in the C-UL-MU MIMO mode.

In some embodiments, the first request information is sent through a second frame.

The second frame includes a multi-AP candidate set request field, and the multi-AP candidate set request field includes n candidate set information field(s) and a number of candidate sets field.

The n candidate set information field(s) indicate information related to the n multi-AP candidate set(s) respectively, and the number of candidate sets field is configured to indicate a number of candidate set information fields included in the multi-AP candidate set request field.

In some embodiments, candidate set information field(s) of the n candidate set information field(s) include at least one of following: a sounding method field, a multi-AP scheme field, and an AP roles field; or
candidate set information field(s) of the n candidate set information field(s) include at least one of following: a joint sounding support field, a multi-AP scheme field, and an AP roles field.

The sounding method field is configured to indicate a channel sounding method supported by a multi-AP candidate set corresponding to a current candidate set information field, the multi-AP scheme field is configured to indicate a multi-AP coordination mode supported by the multi-AP candidate set corresponding to the current candidate set information field, the AP roles field is configured to indicate a multi-AP coordination role supported by the i-th SAP in the multi-AP candidate set corresponding to the current candidate set information field, and the joint sounding support field is configured to indicate whether the multi-AP candidate set corresponding to the current candidate set information field supports multiple APs to perform channel sounding simultaneously and synchronously.

In some embodiments, candidate set information fields of the n candidate set information field(s) include at least one of following: a VBSS ID field, a candidate set ID field, a sounding method field, a multi-AP scheme field, a number of APs field, and multiple AP information fields; or, candidate set information field(s) of the n candidate set information field(s) include at least one of following: a VBSS ID field, a candidate set ID field, a joint sounding support field, a multi-AP scheme field, a number of APs field, and multiple AP information fields.

The VBSS ID field is configured to indicate VBSS ID of a multi-AP candidate set corresponding to a current candidate set information field, the candidate set ID field is configured to indicate ID of the multi-AP candidate set corresponding to the current candidate set information field, the sounding method field is configured to indicate a channel sounding method supported by the multi-AP candidate set corresponding to the current candidate set information field, the multi-AP scheme field is configured to indicate a multi-AP coordination mode supported by the multi-AP candidate set corresponding to the current candidate set information field, the number of APs field is configured to indicate a number of member APs contained in the multi-AP candidate set corresponding to the current candidate set information field, an m-th AP information field of multiple AP information fields is configured to indicate information related to an m-th member AP of the member APs contained in the multi-AP candidate set corresponding to the current candidate set information field, and the joint sounding support field is configured to indicate whether the multi-AP candidate set corresponding to the current candidate set information field supports multiple APs to perform channel sounding simultaneously and synchronously.

In some embodiments, in case that the candidate set information field(s) of the n candidate set information field(s) include the joint sounding support field, the SAP supports multiple APs to perform channel sounding sequentially by default.

In some embodiments, the sounding method field includes at least one of a sequential sounding field and a joint sounding field; or
the sounding method field includes only the joint sounding field.

The sequential sounding field is configured to indicate whether the multi-AP candidate set corresponding to the current candidate set information field supports multiple APs to perform channel sounding sequentially, and the joint sounding field is configured to indicate whether the multi-AP candidate set corresponding to the current candidate set information field supports multiple APs to perform channel sounding simultaneously and synchronously.

In some embodiments, in case that the sounding method support field does not include the sequential sounding field, the multi-AP candidate set corresponding to the current candidate set information field supports multiple APs to perform channel sounding sequentially by default.

In some embodiments, the multi-AP scheme field includes at least one of following: a UL C-OFDMA field, a DL C-OFDMA field, a joint C-SR and C-OFDMA field, a joint C-SR and C-BF field, a joint C-SR and J-TX field, a joint C-SR and C-UL MU MIMO field, a C-BF Field, a J-TX for single user field, a J-TX for multi-user field, a J-TX with diversity field, a J-TX with multiplexing field, a full bandwidth J-TX field, a partial bandwidth J-TX field, a detect and discard field, and a mitigate as interference field; or
the multi-AP scheme field includes at least one of following: a joint C-SR and C-OFDMA field, a joint C-SR and C-BF field, a joint C-SR and J-TX field, a joint C-SR and C-UL MU MIMO field, a C-BF Field, a J-TX for single user field, a J-TX for multi-user field, a J-TX with diversity field, a J-TX with multiplexing field, a full bandwidth J-TX field, a partial bandwidth J-TX field, a detect and discard field, and a mitigate as interference field.

The UL C-OFDMA field is configured to indicate whether the multi-AP candidate set corresponding to the current candidate set information field supports UL C-OFDMA, the DL C-OFDMA field is configured to indicate whether the multi-AP candidate set corresponding to the current candidate set information field supports DL C-OFDMA, the joint C-SR and C-OFDMA field is configured to indicate whether the multi-AP candidate set corresponding to the current candidate set information field supports simultaneous and joint use of C-SR and C-OFDMA, the joint C-SR and C-BF field is configured to indicate whether the multi-AP candidate set corresponding to the current candidate set information field supports simultaneous and joint use of C-SR and C-BF, the joint C-SR and J-TX field is configured to indicate whether the multi-AP candidate set corresponding to the current candidate set information field supports simultaneous and joint use of C-SR and J-TX, the joint C-SR and C-UL MU MIMO field is configured to indicate whether the multi-AP candidate set corresponding to the current candidate set information field supports simultaneous and joint use of C-SR and C-UL MU MIMO, the C-BF field is configured to indicate whether the multi-AP candidate set corresponding to the current candidate set information field supports C-BF, the J-TX for single user field is configured to indicate whether the multi-AP candidate set corresponding to the current candidate set information field supports performing joint transmission for a same user, the J-TX for multi-user field is configured to indicate whether the multi-AP candidate set corresponding to the current candidate set information field supports performing joint transmission for multiple users, the J-TX with diversity field is configured to indicate whether the multi-AP candidate set corresponding to the current candidate set information field supports joint transmission of diversity type, the J-TX with multiplexing field is configured to indicate whether the multi-AP candidate set corresponding to the current candidate set information field supports joint transmission of multiplexing type, the full bandwidth J-TX field is configured to indicate whether the multi-AP candidate set corresponding to the current candidate set information field supports joint transmission in full bandwidth, the partial bandwidth J-TX field is configured to indicate whether the multi-AP candidate set corresponding to the current candidate set information field supports joint transmission in partial bandwidth, the detect and discard field is configured to indicate whether the multi-AP candidate set corresponding to the current candidate set information field supports receiving and demodulating other users' data/frames and then discarding in a C-UL-MU MIMO mode, to obtain useful data/frames, and the mitigate as interference field is configured to indicate whether the multi-AP candidate set corresponding to the current candidate set information field supports treating other users' data as interference directly, and receiving and demodulating a target user's data/frame directly in the C-UL-MU MIMO mode.

In some embodiments, in case that the multi-AP scheme field does not include the UL C-OFDMA field and the DL C-OFDMA field, the multi-AP candidate set corresponding to the current candidate set information field supports UL C-OFDMA and DL C-OFDMA by default.

In some embodiments, in case that value of the J-TX for single user field indicates that the multi-AP candidate set corresponding to the current candidate set information field does not support performing joint transmission for the same user,
the multi-AP scheme field does not include the J-TX for multi-user field, or, value of the J-TX for multi-user field indicates that the multi-AP candidate set corresponding to the current candidate set information field does not support performing joint transmission for multiple users; and/or
the multi-AP scheme field does not include the J-TX with diversity field, or, value of the J-TX with diversity field indicates that the multi-AP candidate set corresponding to the current candidate set information field does not support joint transmission of diversity type; and/or
the multi-AP scheme field does not include the J-TX with multiplexing field, or, value of the J-TX with multiplexing field indicates that the multi-AP candidate set corresponding to the current candidate set information field does not support joint transmission of multiplexing type; and/or
the multi-AP scheme field does not include the full bandwidth J-TX field, or, value of the full bandwidth J-TX field indicates that the multi-AP candidate set corresponding to the current candidate set information field does not support joint transmission in full bandwidth; and/or
the multi-AP scheme field does not include the partial bandwidth J-TX field, or, value of the partial bandwidth J-TX field indicates that the multi-AP candidate set corresponding to the current candidate set information field does not support joint transmission in partial bandwidth.

In some embodiments, in case that value of the J-TX for single user field indicates that the multi-AP candidate set corresponding to the current candidate set information field supports performing joint transmission for the same user, the multi-AP scheme field does not include the J-TX with diversity field and the full bandwidth J-TX field.

In some embodiments, the multi-AP candidate set corresponding to the current candidate set information field supports joint transmission of diversity type by default; and/or, the multi-AP candidate set corresponding to the current candidate set information field supports joint transmission in full bandwidth by default.

In some embodiments, the multi-AP scheme field includes at least one of following: a C-OFDMA support field, a C-SR support field, a C-BF support field, a J-TX support field, and a C-UL MU MIMO support field; or
the multi-AP scheme field includes at least one of following: a C-SR support field, a C-BF support field, a J-TX support field, and a C-UL MU MIMO support field.

The C-OFDMA support field is configured to indicate whether the multi-AP candidate set corresponding to the current candidate set information field supports C-OFDMA, the C-SR support field is configured to indicate whether the multi-AP candidate set corresponding to the current candidate set information field supports C-SR, the C-BF support field is configured to indicate whether the multi-AP candidate set corresponding to the current candidate set information field supports C-BF, the J-TX support field is configured to indicate whether the multi-AP candidate set corresponding to the current candidate set information field supports J-TX, and the C-UL MU MIMO support field is configured to indicate whether the multi-AP candidate set corresponding to the current candidate set information field supports C-UL MU MIMO.

In some embodiments, in case that the multi-AP scheme field does not include the C-OFDMA support field, the multi-AP candidate set corresponding to the current candidate set information field supports UL C-OFDMA and DL C-OFDMA by default.

In some embodiments, AP information fields of multiple AP information fields include at least one of following: a BSS ID field, an AP ID field, and an AP roles field.

The BSS ID field is configured to indicate BSS ID of AP indicated by a current AP information field, the AP ID field is configured to indicate ID of the AP indicated by the current AP information field, and the AP roles field is configured to indicate a multi-AP coordination role supported by the AP indicated by the current AP information field.

In some embodiments, the AP roles field includes at least one of following: a coordinating AP role field, a coordinated AP role field, a sharing AP role field, and a shared AP role field.

In a channel sounding phase, a coordinating AP indicated by the coordinating AP role field initiates sounding, and AP indicated by the coordinated AP role field participates in the sounding; and in a preparation phase and/or a transmission phase, AP indicated by the sharing AP role field shares a TXOP resource thereof to AP indicated by the shared AP role field, to perform coordination transmission.

In some embodiments, the first response information includes reason code information; the reason code information is configured to indicate whether the SAP accepts the first request information sent by the MAP.

In some embodiments, the first response information sent by the SAP further includes at least one of following: a list of STA(s) associated with the SAP, and a priority of a STA, participating in a multi-AP transmission or receiving mechanism, of the STA(s) associated with the SAP.

The list of the STA(s) includes ID of at least one STA and a multi-AP transmission mechanism(s) possessed by various STA(s) of the at least one STA.

The first response information sent by the SAP is sent through a third frame.

The third frame includes a multi-AP candidate set response field, and the multi-AP candidate set response field includes a reason code field.

Value of the reason code field is configured to indicate at least one of following:
the SAP accepts a multi-AP candidate set setup request of the MAP;
the SAP rejects the multi-AP candidate set setup request of the MAP, here, reason for rejection is that a BSS of the SAP has a large load and is unable to participate in multi-AP coordination transmission; and
the SAP rejects the multi-AP candidate set setup request of the MAP, here, reason for rejection is unknown.

In some embodiments, the multi-AP candidate set response field further includes a number of associated STAs field and multiple STA information fields.

The number of associated STAs field is configured to indicate a number of STAs associated with the SAP, an x-th STA information field of multiple STA information fields is configured to indicate multi-AP coordination related information of an x-th STA of STAs associated with the SAP, and x is a positive integer.

In some embodiments, STA information fields of multiple STA information fields include at least one of following: a STA MAC address field, a STA priority field, and a multi-AP coordination capabilities of STA field.

The STA MAC address field is configured to indicate a MAC address of STA indicated by a current STA information field, the STA priority field is configured to indicate a priority of the STA indicated by the current STA information field participating in a multi-AP transmission or receiving mechanism, and the multi-AP coordination capabilities of STA field is configured to indicate capability information of the STA indicated by the current STA information field participating in multi-AP coordination.

In some embodiments, the multi-AP coordination capabilities of STA field includes at least one of following: a C-SR field, a C-BF field, a C-UL MU MIMO field, and a J-TX field; or
the multi-AP coordination capabilities of STA field includes at least one of a C-SR field and a C-UL MU MIMO field.

The C-SR field is configured to indicate whether the STA indicated by the current STA information field supports C-SR, the C-BF field is configured to indicate whether the STA indicated by the current STA information field supports C-BF, the C-UL MU MIMO field is configured to indicate whether the STA indicated by the current STA information field supports C-UL MU MIMO, and the J-TX field is configured to indicate whether the STA indicated by the current STA information field supports J-TX.

In some embodiments, in case that the multi-AP coordination capabilities of STA field does not include the C-BF field, the multi-AP coordination capabilities of STA field implicitly indicates that the STA indicated by the current STA information field supports C-BF; and/or
in case that the multi-AP coordination capabilities of STA field does not include the J-TX field, the multi-AP coordination capabilities of STA field implicitly indicates that the STA indicated by the current STA information field supports J-TX.

In some embodiments, the multi-AP coordination capabilities of STA field itself implicitly indicates that the STA indicated by the current STA information field supports UL C-OFDMA and DL C-OFDMA.

In some embodiments, the first response information sent by the SAP is sent through an ACK frame.

The ACK frame is configured to indicate that the SAP accepts the first request information sent by the MAP.

In some embodiments, the communication unit 410 is further configured to acquire first confirmation information sent by the MAP, and the first confirmation information is configured to indicate s multi-AP candidate set(s).

s is a positive integer, and s ≤ n.

In some embodiments, the first confirmation information is sent by broadcast or multicast.

In some embodiments, the first confirmation information is sent through a fourth frame.

The fourth frame includes a multi-AP candidate set request field, and the multi-AP candidate set request field includes s candidate set information field(s) and a number of candidate sets field.

The s candidate set information field(s) indicate information related to the s multi-AP candidate set(s) respectively, and the number of candidate sets field is configured to indicate a number of candidate set information fields included in the multi-AP candidate set request field.

In some embodiments, a RA field of the fourth frame is configured to indicate a MAC address of a receiving device of the fourth frame.

In case that the first confirmation information is sent by broadcast, the RA field is a broadcast address;
in case that the first confirmation information is sent by multicast, the RA field is a multicast address, and the multicast address corresponds to SAP accepting a multi-AP candidate set setup request of the MAP.

In some embodiments, the above communication unit may be a communication interface or a transceiver, or an I/O interface of a communication chip or SOC. The above processing unit may be one or more processors.

It should be understood that the SAP 400 according to the embodiment of the disclosure may correspond to the SAP in the method embodiments of the disclosure, and the foregoing and other operations and/or functions of each unit in the SAP 400 implement corresponding processes of the SAP in the method 200 shown in FIG. 6 to FIG. 17 respectively, which are not elaborated here, for the sake of brevity.

FIG. 20 is a schematic structural diagram of a communication device 500 provided according to an embodiment of the disclosure. The communication device 500 shown in FIG. 20 includes a processor 510, and the processor 510 may call and run a computer program from a memory, to implement the methods in the embodiments of the disclosure.

In some embodiments, as shown in FIG. 20, the communication device 500 may further include a memory 520. The processor 510 may call and run a computer program from the memory 520, to implement the methods in the embodiments of the disclosure.

The memory 520 may be a separate device independent of the processor 510, or may be integrated in the processor 510.

In some embodiments, as shown in FIG. 20, the communication device 500 may further include a transceiver 530, and the processor 510 may control the transceiver 530 to communicate with other devices. Specifically, the processor 510 may control the transceiver 530 to send information or data to other devices, or receive information or data sent by other devices.

The transceiver 530 may include a transmitter and a receiver. The transceiver 530 may further include an antenna, and there may be one or more antennas in number.

In some embodiments, the communication device 500 may specifically be the MAP in the embodiments of the disclosure, and the communication device 500 may implement corresponding processes implemented by the MAP in each method of the embodiments of the disclosure, which are not elaborated here, for the sake of brevity.

In some embodiments, the communication device 500 may specifically be the SAP in the embodiments of the disclosure, and the communication device 500 may implement corresponding processes implemented by the SAP in each method of the embodiments of the disclosure, which are not elaborated here, for the sake of brevity.

FIG. 21 is a schematic structural diagram of an apparatus according to an embodiment of the disclosure. The apparatus 600 shown in FIG. 21 includes a processor 610, and the processor 610 may call and run a computer program from a memory, to implement the methods in the embodiments of the disclosure.

In some embodiments, as shown in FIG. 21, the apparatus 600 may further include a memory 620. The processor 610 may call and run a computer program from the memory 620, to implement the methods in the embodiments of the disclosure.

The memory 620 may be a separate device independent of the processor 610, or may be integrated in the processor 610.

In some embodiments, the apparatus 600 may further include an input interface 630. The processor 610 may control the input interface 630 to communicate with other devices or chips. Specifically, the processor 610 may control the input interface 630 to acquire information or data sent by other devices or chips.

In some embodiments, the apparatus 600 may further include an output interface 640. The processor 610 may control the output interface 640 to communicate with other devices or chips. Specifically, the processor 610 may control the output interface 640 to output information or data to other devices or chips.

In some embodiments, the apparatus may be applied to the MAP in the embodiments of the disclosure, and the apparatus may implement corresponding processes implemented by the MAP in each method of the embodiments of the disclosure, which are not elaborated here, for the sake of brevity.

In some embodiments, the apparatus may be applied to the SAP in the embodiments of the disclosure, and the apparatus may implement corresponding processes implemented by the SAP in each method of the embodiments of the disclosure, which are not elaborated here, for the sake of brevity.

In some embodiments, the apparatus mentioned in the embodiment of the disclosure may also be a chip. For example, the apparatus may be a system-level chip, a system chip, a chip system, or a SOC chip, etc.

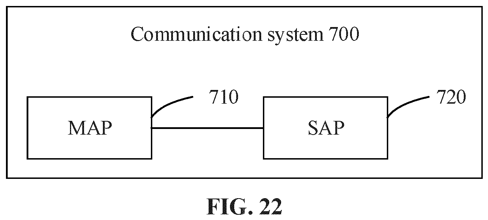

FIG. 22 is a schematic block diagram of a communication system 700 provided according to an embodiment of the disclosure. As shown in FIG. 22, the communication system 700 includes a MAP 710 and a SAP 720.

The MAP 710 may be configured to implement corresponding functions implemented by the MAP in the above methods, and the SAP 720 may be configured to implement corresponding functions implemented by the SAP in the above methods, which are not elaborated here, for the sake of brevity.

It should be understood that the processor in the embodiments of the disclosure may be an integrated circuit chip with signal processing capability. During implementation, each operation of the above method embodiments may be completed by an integrated logic circuit in form of hardware in a processor or instructions in form of software. The above processor may be a general-purpose processor, a Digital Signal Processor (DSP), an Application Specific Integrated Circuit (ASIC), a Field Programmable Gate Array (FPGA) or other programmable logic devices, a discrete gate or transistor logic device, a discrete hardware component, so that various methods, operations and logic block diagrams disclosed in the embodiments of the disclosure may be implemented or executed. The general-purpose processor may be a microprocessor, or the processor may be any conventional processor, etc. Operations of the methods disclosed in combination with the embodiments of the disclosure may be directly embodied as being performed and completed by a hardware decoding processor, or by a combination of hardware in the decoding processor and software modules. The software modules may be located in a mature storage medium in the field, such as a random memory, a flash memory, a Read-Only Memory (ROM), a Programmable ROM (PROM), or an electrically erasable programmable memory, a register, etc. The storage medium is located in a memory, and the processor reads information in the memory, and completes operations of the above methods in combination with hardware thereof.

It may be understood that the memory in the embodiments of the disclosure may be a volatile memory or a non-volatile memory, or may include both volatile and non-volatile memories. The non-volatile memory may be a ROM, a PROM, an Erasable PROM (EPROM), an Electrically EPROM (EEPROM) or a flash memory. The volatile memory may be a Random Access Memory (RAM) which is used as an external cache. By way of exemplary rather than limiting descriptions, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It should be noted that the memories of the systems and methods described here are intended to include, but are not limited to these and any other suitable types of memories.

It should be understood that the above memories are exemplary rather than limiting descriptions. For example, the memory in the embodiments of the disclosure may also be a SRAM, a DRAM, a SDRAM, a DDR SDRAM, an ESDRAM, a SLDRAM, a DR RAM, etc. That is, the memory in the embodiments of the disclosure is intended to include, but is not limited to these and any other suitable types of memories.

An embodiment of the disclosure further provides a computer-readable storage medium, and the computer-readable storage medium is configured to store a computer program.

In some embodiments, the computer-readable storage medium may be applied to the MAP in the embodiments of the disclosure, and the computer program enables a computer to execute corresponding processes implemented by the MAP in each method of the embodiments of the disclosure, which are not elaborated here, for the sake of brevity.

In some embodiments, the computer-readable storage medium may be applied to the SAP in the embodiments of the disclosure, and the computer program enables a computer to execute corresponding processes implemented by the SAP in each method of the embodiments of the disclosure, which are not elaborated here, for the sake of brevity.

An embodiment of the disclosure further provides a computer program product, and the computer program product includes computer program instructions.

In some embodiments, the computer program product may be applied to the MAP in the embodiments of the disclosure, and the computer program instructions enable a computer to execute corresponding processes implemented by the MAP in each method of the embodiments of the disclosure, which are not elaborated here, for the sake of brevity.

In some embodiments, the computer program product may be applied to the SAP in the embodiments of the disclosure, and the computer program instructions enable a computer to execute corresponding processes implemented by the SAP in each method of the embodiments of the disclosure, which are not elaborated here, for the sake of brevity.

An embodiment of the disclosure further provides a computer program.

In some embodiments, the computer program may be applied to the MAP in the embodiments of the disclosure, and the computer program enables a computer to execute corresponding processes implemented by the MAP in each method of the embodiments of the disclosure when the computer program is run on the computer, which are not elaborated here, for the sake of brevity.

In some embodiments, the computer program may be applied to the SAP in the embodiments of the disclosure, and the computer program enables a computer to execute corresponding processes implemented by the SAP in each method of the embodiments of the disclosure when the computer program is run on the computer, which are not elaborated here, for the sake of brevity.

It may be appreciated by those of ordinary skill in the art that units and algorithm steps of each example described in combination with the embodiments disclosed here may be implemented by electronic hardware, or a combination of computer software and electronic hardware. Whether these functions are executed by hardware or software, depends on specific applications and design constraints of the technical solutions. Professional technicians may use different methods in each specific application to implement the described functions, however, such implementation should not be considered as going beyond the scope of the disclosure.

It may be clearly understood by those skilled in the art that for the sake of convenience and brevity of descriptions, specific working processes of the above systems, apparatuses and units may refer to corresponding processes in the foregoing method embodiments, which are not elaborated here.

In several embodiments provided in the disclosure, it should be understood that the disclosed systems, apparatuses and methods may be implemented in other ways. For example, the above apparatus embodiments are only illustrative. For example, division of the units is only a logical function division. In an actual implementation, there may be other division manners. For example, multiple units or components may be combined or may be integrated into another system, or some features may be ignored or may not be executed. In another point, mutual coupling or direct coupling or communication connection as shown or discussed may be indirect coupling or communication connection through some interfaces, apparatuses or units, and may be in electrical, mechanical or other forms.

The units described as separate components may be or may not be physically separated, and the components displayed as units may be or may not be physical units, that is, they may be located at one place, or may be distributed on multiple network units. Part or all of the units may be selected according to actual requirements, to achieve the purpose of the solutions of the embodiments.

Furthermore, each function unit in each embodiment of the disclosure may be integrated into one processing unit, or each unit may separately exist physically, or two or more units may be integrated into one unit.

When the functions are implemented in form of a software function unit and sold or used as an independent product, the functions may be stored in a computer-readable storage medium. Based on such understanding, the technical solutions of the disclosure substantially or parts making contributions to the related art or part of the technical solutions may be embodied in form of a software product, and the computer software product is stored in a storage medium, including several instructions to enable a computer device (which may be a personal computer, a server, or a network device, etc.) to execute all or part of operations of the method described in each embodiment of the disclosure. The foregoing storage medium includes various media capable of storing program codes, such as a U disk, a mobile hard disk, a ROM, a RAM, a magnetic disk or an optical disk, etc.

The scope of protection of the disclosure should be subjected to the scope of protection of the claims.

## Claims

1. A method for wireless communication, comprising:
broadcasting (S210), by a Slave Access Point, SAP, multi-Access Point, multi-AP, coordination capability information of the SAP;
receiving, by the SAP, first request information sent by a Master Access Point, MAP, wherein the first request information is configured to request setup of n multi-AP candidate set(s), and n is a positive integer; and
sending (S250), by the SAP, first response information to the MAP, wherein the first response information is configured to indicate whether the SAP accepts the first request information sent by the MAP,
wherein the first response information sent by the SAP is sent through a third frame,
wherein the third frame comprises a multi-AP candidate set response field, and the multi-AP candidate set response field comprises a reason code field,
wherein value of the reason code field is configured to indicate at least one of following:
the SAP accepts a multi-AP candidate set setup request of the MAP;
the SAP rejects the multi-AP candidate set setup request of the MAP, wherein reason for rejection is that a Basic Service Set, BSS, of the SAP has a large load and is unable to participate in multi-AP coordination transmission; and
the SAP rejects the multi-AP candidate set setup request of the MAP, wherein reason for rejection is unknown.

2. The method of claim 1, wherein the multi-AP coordination capability information is sent through a first frame, and the first frame is a beacon frame or a management frame.

3. The method of claim 2, wherein the first frame comprises a multi-AP coordination capability field,
the multi-AP coordination capability field comprises at least one of following: a common information field and a multi-AP scheme support field,
wherein the common information field is configured to indicate a multi-AP candidate set setup method, a role supported by the SAP in a multi-AP transmission mechanism, and a channel sounding method supported by the SAP; and the multi-AP scheme support field is configured to indicate multi-AP coordination mode(s) supported by the SAP.

4. The method of claim 1, wherein the multi-AP candidate set response field further comprises a number of associated stations (STAs) field and a plurality of STA information fields,
wherein the number of associated STAs field is configured to indicate a number of STAs associated with the SAP, an x-th STA information field of the plurality of STA information fields is configured to indicate multi-AP coordination related information of an x-th STA of STAs associated with the SAP, and x is a positive integer.

5. The method of claim 4, wherein STA information fields of the plurality of STA information fields comprise at least one of following: a STA Media Access Control (MAC) address field, a STA priority field, and a multi-AP coordination capabilities of STA field,
wherein the STA MAC address field is configured to indicate a MAC address of STA indicated by a current STA information field, the STA priority field is configured to indicate a priority of the STA indicated by the current STA information field participating in a multi-AP transmission or receiving mechanism, and the multi-AP coordination capabilities of STA field is configured to indicate capability information of the STA indicated by the current STA information field participating in multi-AP coordination.

6. The method of claim 1, wherein identity, ID, information of the n multi-AP candidate set(s) is allocated by the MAP, and/or, role information of the SAP in multi-AP coordination is allocated by the MAP.

7. The method of any one of claims 1 to 6, wherein the first request information sent by the MAP to the SAP is sent through a second frame,
wherein the second frame comprises a multi-AP candidate set request field, and the multi-AP candidate set request field comprises n candidate set information field(s) and a number of candidate sets field,
wherein the n candidate set information field(s) indicate information related to the n multi-AP candidate set(s) respectively, and the number of candidate sets field is configured to indicate a number of candidate set information fields comprised in the multi-AP candidate set request field.

8. The method of claim 7, wherein candidate set information field(s) of the n candidate set information field(s) comprise at least one of following: a sounding method field, a multi-AP scheme field, and an AP roles field; or
candidate set information field(s) of the n candidate set information field(s) comprise at least one of following: a joint sounding support field, a multi-AP scheme field, and an AP roles field,
wherein the sounding method field is configured to indicate a channel sounding method supported by a multi-AP candidate set corresponding to a current candidate set information field, the multi-AP scheme field is configured to indicate a multi-AP coordination mode supported by the multi-AP candidate set corresponding to the current candidate set information field, the AP roles field is configured to indicate a multi-AP coordination role supported by the SAP in the multi-AP candidate set corresponding to the current candidate set information field, and the joint sounding support field is configured to indicate whether the multi-AP candidate set corresponding to the current candidate set information field supports a plurality of APs to perform channel sounding simultaneously and synchronously.

9. The method of claim 7, wherein candidate set information field(s) of the n candidate set information field(s) comprise at least one of following: a Virtual Basic Service Set (VBSS) identity (ID) field, a candidate set ID field, a sounding method field, a multi-AP scheme field, a number of APs field, and a plurality of AP information fields; or
candidate set information field(s) of the n candidate set information field(s) comprise at least one of following: a VBSS ID field, a candidate set ID field, a joint sounding support field, a multi-AP scheme field, a number of APs field, andr a plurality of AP information fields,
wherein the VBSS ID field is configured to indicate VBSS ID of a multi-AP candidate set corresponding to a current candidate set information field, the candidate set ID field is configured to indicate ID of the multi-AP candidate set corresponding to the current candidate set information field, the sounding method field is configured to indicate a channel sounding method supported by the multi-AP candidate set corresponding to the current candidate set information field, the multi-AP scheme field is configured to indicate a multi-AP coordination mode supported by the multi-AP candidate set corresponding to the current candidate set information field, the number of APs field is configured to indicate a number of member APs contained in the multi-AP candidate set corresponding to the current candidate set information field, an m-th AP information field of the plurality of AP information fields is configured to indicate information related to an m-th member AP of the member APs contained in the multi-AP candidate set corresponding to the current candidate set information field, and the joint sounding support field is configured to indicate whether the multi-AP candidate set corresponding to the current candidate set information field supports a plurality of APs to perform channel sounding simultaneously and synchronously.

10. The method of claim 8 or 9, wherein in case that the candidate set information field(s) of the n candidate set information field(s) comprise the joint sounding support field, the SAP supports the plurality of APs to perform channel sounding sequentially by default.

11. The method of claim 8 or 9, wherein the sounding method field comprises at least one of following: a sequential sounding field and a joint sounding field; or
the sounding method field comprises only the joint sounding field,
wherein the sequential sounding field is configured to indicate whether the multi-AP candidate set corresponding to the current candidate set information field supports the plurality of APs to perform channel sounding sequentially, and the joint sounding field is configured to indicate whether the multi-AP candidate set corresponding to the current candidate set information field supports the plurality of APs to perform channel sounding simultaneously and synchronously.

12. The method of claim 11, wherein in case that the sounding method support field does not comprise the sequential sounding field, the multi-AP candidate set corresponding to the current candidate set information field supports the plurality of APs to perform channel sounding sequentially by default.

13. The method of claim 8 or 9, wherein the multi-AP scheme field comprises at least one of following: an uplink, UL, Coordinated Orthogonal Frequency Division Multiple Access, C-OFDMA, field, a downlink, DL, C-OFDMA field, a joint Coordinated Spatial Reuse, C-SR, and C-OFDMA field, a joint C-SR and Coordinated Beamforming, C-BF, field, a joint C-SR and Joint transmission, J-TX, field, a joint C-SR and Coordinated Uplink Multiple-User Multiple Input Multiple Output, C-UL MU MIMO, field, a C-BF Field, a J-TX for single user field, a J-TX for multi-user field, a J-TX with diversity field, a J-TX with multiplexing field, a full bandwidth J-TX field, a partial bandwidth J-TX field, a detect and discard field, and a mitigate as interference field; or
the multi-AP scheme field comprises at least one of following: a joint C-SR and C-OFDMA field, a joint C-SR and C-BF field, a joint C-SR and J-TX field, a joint C-SR and C-UL MU MIMO field, a C-BF Field, a J-TX for single user field, a J-TX for multi-user field, a J-TX with diversity field, a J-TX with multiplexing field, a full bandwidth J-TX field, a partial bandwidth J-TX field, a detect and discard field, and a mitigate as interference field,
wherein the UL C-OFDMA field is configured to indicate whether the multi-AP candidate set corresponding to the current candidate set information field supports UL C-OFDMA, the DL C-OFDMA field is configured to indicate whether the multi-AP candidate set corresponding to the current candidate set information field supports DL C-OFDMA, the joint C-SR and C-OFDMA field is configured to indicate whether the multi-AP candidate set corresponding to the current candidate set information field supports simultaneous and joint use of C-SR and C-OFDMA, the joint C-SR and C-BF field is configured to indicate whether the multi-AP candidate set corresponding to the current candidate set information field supports simultaneous and joint use of C-SR and C-BF, the joint C-SR and J-TX field is configured to indicate whether the multi-AP candidate set corresponding to the current candidate set information field supports simultaneous and joint use of C-SR and J-TX, the joint C-SR and C-UL MU MIMO field is configured to indicate whether the multi-AP candidate set corresponding to the current candidate set information field supports simultaneous and joint use of C-SR and C-UL MU MIMO, the C-BF field is configured to indicate whether the multi-AP candidate set corresponding to the current candidate set information field supports C-BF, the J-TX for single user field is configured to indicate whether the multi-AP candidate set corresponding to the current candidate set information field supports performing joint transmission for a same user, the J-TX for multi-user field is configured to indicate whether the multi-AP candidate set corresponding to the current candidate set information field supports performing joint transmission for a plurality of users, the J-TX with diversity field is configured to indicate whether the multi-AP candidate set corresponding to the current candidate set information field supports joint transmission of diversity type, the J-TX with multiplexing field is configured to indicate whether the multi-AP candidate set corresponding to the current candidate set information field supports joint transmission of multiplexing type, the full bandwidth J-TX field is configured to indicate whether the multi-AP candidate set corresponding to the current candidate set information field supports joint transmission in full bandwidth, the partial bandwidth J-TX field is configured to indicate whether the multi-AP candidate set corresponding to the current candidate set information field supports joint transmission in partial bandwidth, the detect and discard field is configured to indicate whether the multi-AP candidate set corresponding to the current candidate set information field supports receiving and demodulating other users' data/frames and then discarding in a C-UL-MU MIMO mode, to obtain useful data/frames, and the mitigate as interference field is configured to indicate whether the multi-AP candidate set corresponding to the current candidate set information field supports treating other users' data as interference directly, and receiving and demodulating a target user's data/frame directly in the C-UL-MU MIMO mode.

14. The method of claim 13, wherein in case that the multi-AP scheme field does not comprise the UL C-OFDMA field and the DL C-OFDMA field, the multi-AP candidate set corresponding to the current candidate set information field supports UL C-OFDMA and DL C-OFDMA by default.

15. A Slave Access Point, SAP, comprising a processor and a memory, wherein the memory is configured to store a computer program, the processor is configured to call and run the computer program stored in the memory, to execute the method of any one of claims 1 to 14.

## Patentansprüche

1. Verfahren zur Drahtloskommunikation, umfassend:
Broadcasting (S210), durch einen Slave-Zugangspunkt, SAP, von Multi-Zugangspunkt- bzw. Multi-AP-Koordinationsfähigkeitsinformationen des SAP;
Empfangen, durch den SAP, erster Anforderungsinformationen, die durch einen Master-Zugangspunkt, MAP, gesendet werden, wobei die ersten Anforderungsinformationen dazu ausgelegt sind, die Einrichtung von n Multi-AP-Kandidatensätzen anzufordern, und wobei n eine positive ganze Zahl ist; und
Senden (S250), durch den SAP, erster Antwortinformationen an den MAP, wobei die ersten Antwortinformationen dazu ausgelegt sind, anzugeben, ob der SAP die ersten Anforderungsinformationen annimmt, die durch den MAP gesendet werden,
wobei die ersten Antwortinformationen, die durch den SAP gesendet werden, über einen dritten Rahmen gesendet werden,
wobei der dritte Rahmen ein Multi-AP-Kandidatensatz-Antwort-Feld umfasst, und das Multi-AP-Kandidatensatz-Antwort-Feld ein Ursachencode-Feld umfasst,
wobei ein Wert des Ursachencodes dazu ausgelegt ist, mindestens eines von Folgendem anzugeben:
der SAP nimmt eine Multi-AP-Kandidatensatz-Einrichtungsanforderung des MAP an;
der SAP lehnt die Multi-AP-Kandidatensatz-Einrichtungsanforderung des MAP ab, wobei eine Ursache für die Ablehnung darin besteht, dass ein Basisdienstsatz, BSS, des SAP eine große Last aufweist und nicht in der Lage ist, an einer Multi-AP-Koordinationsübertragung teilzunehmen; und
der SAP lehnt die Multi-AP-Kandidatensatz-Einrichtungsanforderung des MAP ab, wobei die Ursache für die Ablehnung unbekannt ist.

2. Verfahren nach Anspruch 1, wobei die Multi-AP-Koordinationsfähigkeitsinformationen über einen ersten Rahmen gesendet werden, und der erste Rahmen ein Beacon-Rahmen oder ein Managementrahmen ist.

3. Verfahren nach Anspruch 2, wobei der erste Rahmen ein Multi-AP-Koordinationsfähigkeit-Feld umfasst,
wobei das Multi-AP-Koordinationsfähigkeit-Feld mindestens eines von Folgendem umfasst: ein gemeinsames Informationsfeld und ein Multi-AP-Schemaunterstützung-Feld,
wobei das gemeinsame Informationsfeld dazu ausgelegt ist, ein Multi-AP-Kandidatensatz-Einrichtungsverfahren, eine Rolle, die durch den SAP in einem Multi-AP-Übertragungsmechanismus unterstützt wird, und ein Kanalsondierungsverfahren, das durch den SAP unterstützt wird, anzugeben; und das Multi-AP-Schemaunterstützung-Feld dazu ausgelegt ist, einen oder mehrere Multi-AP-Koordinationsmodi anzugeben, die durch den SAP unterstützt werden.

4. Verfahren nach Anspruch 1, wobei das Multi-AP-Kandidatensatz-Antwort-Feld ferner ein Anzahl-von-assoziierten-Stationen(STAs)-Feld und eine Vielzahl von STA-Informationen-Feldern umfasst,
wobei das Anzahl-von-assoziierten-STAs-Feld dazu ausgelegt ist, eine Anzahl von STAs anzugeben, die mit dem SAP assoziiert sind, ein x-tes STA-Informationen-Feld der Vielzahl von STA-Informationen-Feldern dazu ausgelegt ist, Multi-AP-Koordination-bezogene Informationen einer x-ten STA von STAs anzugeben, die mit dem SAP assoziiert ist, und x eine positive ganze Zahl ist.

5. Verfahren nach Anspruch 4, wobei STA-Informationen-Felder der Vielzahl von STA-Informationen-Feldern mindestens eines von Folgendem umfassen: ein STA-Medienzugangssteuerung(MAC)-Adresse-Feld, ein STA-Priorität-Feld und Multi-AP-Koordinationsfähigkeiten-von-STA-Feld,
wobei das STA-MAC-Adresse-Feld dazu ausgelegt ist, eine MAC-Adresse der STA, die durch ein aktuelles STA-Informationen-Feld angegeben wird, anzugeben, das STA-Priorität-Feld dazu ausgelegt ist, eine Priorität der STA, die durch das aktuelle STA-Informationen-Feld angegeben wird und an einem Multi-AP-Übertragungs- oder -Empfangsmechanismus teilnimmt, anzugeben, und das Multi-AP-Koordinationsfähigkeiten-von-STA-Feld dazu ausgelegt ist, Fähigkeitsinformationen der STA, die durch das aktuelle STA-Informationen-Feld angegeben wird und an der Multi-AP-Koordination teilnimmt, anzugeben.

6. Verfahren nach Anspruch 1, wobei Identitäts- bzw. ID-Informationen der n Multi-AP-Kandidatensätze durch den MAP zugewiesen werden und/oder Rolleninformationen des SAP bei einer Multi-AP-Koordination durch den MAP zugewiesen werden.

7. Verfahren nach einem der Ansprüche 1 bis 6, wobei die ersten Anforderungsinformationen, die durch den MAP an den SAP gesendet werden, über einen zweiten Rahmen gesendet werden,
wobei der zweite Rahmen ein Multi-AP-Kandidatensatz-Anforderung-Feld umfasst, und das Multi-AP-Kandidatensatz-Anforderung-Feld n Kandidatensatzinformationen-Felder und ein Anzahl-von-Kandidatensätzen-Feld umfasst,
wobei die n Kandidatensatzinformationen-Felder Informationen bezüglich jeweils der n Multi-AP-Kandidatensätze angeben, und das Anzahl-von-Kandidatensätzen-Feld dazu ausgelegt ist, eine Anzahl von Kandidatensatzinformationen-Feldern anzugeben, die in dem Multi-AP-Kandidatensatz-Anforderung-Feld enthalten sind.

8. Verfahren nach Anspruch 7, wobei ein oder mehrere Kandidatensatzinformationen-Felder der n Kandidatensatzinformationen-Felder mindestens eines von Folgendem umfassen: ein Sondierungsverfahren-Feld, ein Multi-AP-Schema-Feld und ein AP-Rollen-Feld; oder
ein oder mehrere Kandidatensatzinformationen-Felder der n Kandidatensatzinformationen-Felder mindestens eines von Folgendem umfassen: ein Gemeinsame-Sondierungsunterstützung-Feld, ein Multi-AP-Schema-Feld und ein AP-Rollen-Feld,
wobei das Sondierungsverfahren-Feld dazu ausgelegt ist, ein Kanalsondierungsverfahren anzugeben, das durch einen Multi-AP-Kandidatensatz entsprechend einem aktuellen Kandidatensatzinformationen-Feld unterstützt wird, das Multi-AP-Schema-Feld dazu ausgelegt ist, einen Multi-AP-Koordinationsmodus anzugeben, der durch den Multi-AP-Kandidatensatz entsprechend dem aktuellen Kandidatensatzinformationen-Feld unterstützt wird, das AP-Rollen-Feld dazu ausgelegt ist, eine Multi-AP-Koordinationsrolle anzugeben, die durch den SAP in dem Multi-AP-Kandidatensatz entsprechend dem aktuellen Kandidatensatzinformationen-Feld unterstützt wird, und das Gemeinsame-Sondierungsunterstützung-Feld dazu ausgelegt ist, anzugeben, ob der Multi-AP-Kandidatensatz entsprechend dem aktuellen Kandidatensatzinformationen-Feld eine Vielzahl von APs unterstützt, um eine Kanalsondierung gleichzeitig und synchron durchzuführen.

9. Verfahren nach Anspruch 7, wobei ein oder mehrere Kandidatensatzinformationen-Felder der n Kandidatensatzinformationen-Felder mindestens eines von Folgendem umfassen: ein Virtueller-Basisdienstsatz(VBSS)-Identität(ID)-Feld, ein Kandidatensatz-ID-Feld, ein Sondierungsverfahren-Feld, ein Multi-AP-Schema-Feld, ein Anzahl-von-APs-Feld und eine Vielzahl von AP-Informationen-Feldern; oder
ein oder mehrere Kandidatensatzinformationen-Felder der n Kandidatensatzinformationen-Felder mindestens eines von Folgendem umfassen: ein VBSS-ID-Feld, ein Kandidatensatz-ID-Feld, ein Gemeinsame-Sondierungsunterstützung-Feld, ein Multi-AP-Schema-Feld, ein Anzahl-von-APs-Feld und eine Vielzahl von AP-Informationen-Feldern,
wobei das VBSS-ID-Feld dazu ausgelegt ist, eine VBSS-ID eines Multi-AP-Kandidatensatzes entsprechend einem aktuellen Kandidatensatzinformationen-Feld anzugeben, das Kandidatensatz-ID-Feld dazu ausgelegt ist, eine ID des Multi-AP-Kandidatensatzes entsprechend dem aktuellen Kandidatensatzinformationen-Feld anzugeben, das Sondierungsverfahren-Feld dazu ausgelegt ist, ein Kanalsondierungsverfahren anzugeben, das durch den Multi-AP-Kandidatensatz entsprechend dem aktuellen Kandidatensatzinformationen-Feld unterstützt wird, das Multi-AP-Schema-Feld dazu ausgelegt ist, einen Multi-AP-Koordinationsmodus anzugeben, der durch den Multi-AP-Kandidatensatz entsprechend dem aktuellen Kandidatensatzinformationen-Feld unterstützt wird, das Anzahl-von-APs-Feld dazu ausgelegt ist, eine Anzahl von Mitglieds-APs anzugeben, die in dem Multi-AP-Kandidatensatz entsprechend dem aktuellen Kandidatensatzinformationen-Feld enthalten sind, ein m-tes AP-Informationen-Feld der Vielzahl von AP-Informationen-Feldern dazu ausgelegt ist, Informationen bezüglich eines m-ten Mitglieds-AP der Mitglieds-APs anzugeben, die in dem Multi-AP-Kandidatensatz entsprechend dem aktuellen Kandidatensatzinformationen-Feld enthalten sind, und das Gemeinsame-Sondierungsunterstützung-Feld dazu ausgelegt ist, anzugeben, ob der Multi-AP-Kandidatensatz entsprechend dem aktuellen Kandidatensatzinformationen-Feld eine Vielzahl von APs unterstützt, um eine Kanalsondierung gleichzeitig und synchron durchzuführen.

10. Verfahren nach Anspruch 8 oder 9, wobei, falls das eine oder die mehreren Kandidatensatzinformationen-Felder der n Kandidatensatzinformationen-Felder das Gemeinsame-Sondierungsunterstützung-Feld umfassen, der SAP die Vielzahl von APs unterstützt, um die Kanalsondierung standardmäßig sequenziell durchzuführen.

11. Verfahren nach Anspruch 8 oder 9, wobei das Sondierungsverfahren-Feld mindestens eines von Folgendem umfasst: ein Sequenzielle-Sondierung-Feld und ein Gemeinsame-Sondierung-Feld; oder
das Sondierungsverfahren-Feld nur das Gemeinsame-Sondierung-Feld umfasst,
wobei das Sequenzielle-Sondierung-Feld dazu ausgelegt ist, anzugeben, ob der Multi-AP-Kandidatensatz entsprechend dem aktuellen Kandidatensatzinformationen-Feld die Vielzahl von APs unterstützt, um die Kanalsondierung sequenziell durchzuführen, und das Gemeinsame-Sondierung-Feld dazu ausgelegt ist, anzugeben, ob der Multi-AP-Kandidatensatz entsprechend dem aktuellen Kandidatensatzinformationen-Feld die Vielzahl von APs unterstützt, um die Kanalsondierung gleichzeitig und synchron durchzuführen.

12. Verfahren nach Anspruch 11, wobei, falls das Sondierungsverfahren-Feld nicht das Sequenzielle-Sondierung-Feld umfasst, der Multi-AP-Kandidatensatz entsprechend dem aktuellen Kandidatensatzinformationen-Feld die Vielzahl von APs unterstützt, um die Kanalsondierung standardmäßig sequenziell durchzuführen.

13. Verfahren nach Anspruch 8 oder 9, wobei das Multi-AP-Schema-Feld mindestens eines von Folgendem umfasst:
ein Uplink-Koordinierter-Orthogonal-Frequenzmultiplex-Mehrfachzugriff- bzw. UL-C-OFDMA-Feld, ein Downlink- bzw. DL-C-OFDMA-Feld, ein gemeinsames Koordinierte-Räumliche-Wiederverwendung- bzw. C-SR- und C-OFDMA-Feld, ein gemeinsames C-SR- und Koordinierte-Strahlformung- bzw. C-BF-Feld, ein gemeinsames C-SR- und Gemeinsame-Übertragung- bzw. J-TX-Feld, ein gemeinsames C-SR- und Koordinierter-Uplink-Mehrbenutzer-Mehrfacheingang-Mehrfachausgang- bzw. C-UL-MU-MIMO-Feld, ein C-BF-Feld, ein J-TX-für-Einzelbenutzer-Feld, ein J-TX-für Mehrbenutzer-Feld, ein J-TX-mit-Diversität-Feld, ein J-TX-mit-Multiplexing-Feld, ein Vollbandbreiten-J-TX-Feld, ein Teilbandbreiten-J-TX-Feld, ein Detektieren-und-Verwerfen-Feld und ein Mindern-als-Störung-Feld; oder
das Multi-AP-Schema-Feld mindestens eines von Folgendem umfasst: ein gemeinsames C-SR- und C-OFDMA-Feld, ein gemeinsames C-SR- und C-BF-Feld, ein gemeinsames C-SR- und J-TX-Feld, ein gemeinsames C-SR- und C-UL-MU-MIMO-Feld, ein C-BF-Feld, ein J-TX-für-Einzelbenutzer-Feld, ein J-TX-für-Mehrbenutzer-Feld, ein J-TX-mit-Diversität-Feld, ein J-TX-mit-Multiplexing-Feld, ein Vollbandbreiten-J-TX-Feld, ein Teilbandbreiten-J-TX-Feld, ein Detektieren-und-Verwerfen-Feld und ein Mindern-als-Störung-Feld,
wobei das UL-C-OFDMA-Feld dazu ausgelegt ist, anzugeben, ob der Multi-AP-Kandidatensatz entsprechend dem aktuellen Kandidatensatzinformationen-Feld UL-C-OFDMA unterstützt, das DL-C-OFDMA-Feld dazu ausgelegt ist, anzugeben, ob der Multi-AP-Kandidatensatz entsprechend dem aktuellen Kandidatensatzinformationen-Feld DL-C-OFDMA unterstützt, das gemeinsame C-SR- und C-OFDMA-Feld dazu ausgelegt ist, anzugeben, ob der Multi-AP-Kandidatensatz entsprechend dem aktuellen Kandidatensatzinformationen-Feld die gleichzeitige und gemeinsame Verwendung von C-SR und C-OFDMA unterstützt, das gemeinsame C-SR- und C-BF-Feld dazu ausgelegt ist, anzugeben, ob der Multi-AP-Kandidatensatz entsprechend dem aktuellen Kandidatensatzinformationen-Feld die gleichzeitige und gemeinsame Verwendung von C-SR und C-BF unterstützt, das gemeinsame C-SR- und J-TX-Feld dazu ausgelegt ist, anzugeben, ob der Multi-AP-Kandidatensatz entsprechend dem aktuellen Kandidatensatzinformationen-Feld die gleichzeitige und gemeinsame Verwendung von C-SR und J-TX unterstützt, das gemeinsame C-SR- und C-UL-MU-MIMO-Feld dazu ausgelegt ist, anzugeben, ob der Multi-AP-Kandidatensatz entsprechend dem aktuellen Kandidatensatzinformationen-Feld die gleichzeitige und gemeinsame Verwendung von C-SR und C-UL-MU-MIMO unterstützt, das C-BF-Feld dazu ausgelegt ist, anzugeben, ob der Multi-AP-Kandidatensatz entsprechend dem aktuellen Kandidatensatzinformationen-Feld C-BF unterstützt, das J-TX-für-Einzelbenutzer-Feld dazu ausgelegt ist, anzugeben, ob der Multi-AP-Kandidatensatz entsprechend dem aktuellen Kandidatensatzinformationen-Feld das Durchführen einer gemeinsamen Übertragung für einen selben Benutzer unterstützt, das J-TX-für-Mehrbenutzer-Feld dazu ausgelegt ist, anzugeben, ob der Multi-AP-Kandidatensatz entsprechend dem aktuellen Kandidatensatzinformationen-Feld das Durchführen einer gemeinsamen Übertragung für eine Vielzahl von Benutzern unterstützt, das J-TX-mit-Diversität-Feld dazu ausgelegt ist, anzugeben, ob der Multi-AP-Kandidatensatz entsprechend dem aktuellen Kandidatensatzinformationen-Feld eine gemeinsame Übertragung vom Diversitätstyp unterstützt, das J-TX-mit-Multiplexing-Feld dazu ausgelegt ist, anzugeben, ob der Multi-AP-Kandidatensatz entsprechend dem aktuellen Kandidatensatzinformationen-Feld eine gemeinsame Übertragung vom Multiplexingtyp unterstützt, das Vollbandbreiten-J-TX-Feld dazu ausgelegt ist, anzugeben, ob der Multi-AP-Kandidatensatz entsprechend dem aktuellen Kandidatensatzinformationen-Feld eine gemeinsame Übertragung in voller Bandbreite unterstützt, das Teilbandbreiten-J-TX-Feld dazu ausgelegt ist, anzugeben, ob der Multi-AP-Kandidatensatz entsprechend dem aktuellen Kandidatensatzinformationen-Feld eine gemeinsame Übertragung in partieller Bandbreite unterstützt, das Detektieren-und-Verwerfen-Feld dazu ausgelegt ist, anzugeben, ob der Multi-AP-Kandidatensatz entsprechend dem aktuellen Kandidatensatzinformationen-Feld das Empfangen und Demodulieren von Daten/Rahmen anderer Benutzer und dann Verwerfen in einem C-UL-MU-MIMO-Modus unterstützt, um nützliche Daten/Rahmen zu erhalten, und das Mindern-als-Störung-Feld dazu ausgelegt ist, anzugeben, ob der Multi-AP-Kandidatensatz entsprechend dem aktuellen Kandidatensatzinformationen-Feld das Behandeln von Daten anderer Benutzer direkt als Störung und das Empfangen und Demodulieren von Daten/Rahmen eines Zielbenutzers direkt im C-UL-MU-MIMO-Modus unterstützt.

14. Verfahren nach Anspruch 13, wobei, falls das Multi-AP-Schema-Feld nicht das UL-C-OFDMA-Feld und DL-C-OFDMA-Feld umfasst, der Multi-AP-Kandidatensatz entsprechend dem aktuellen Kandidatensatzinformationen-Feld UL-C-OFDMA und DL-C-OFDMA standardmäßig unterstützt.

15. Slave-Zugangspunkt, SAP, der einen Prozessor und einen Speicher umfasst, wobei der Speicher dazu ausgelegt ist, ein Computerprogramm zu speichern, wobei der Prozessor dazu ausgelegt ist, das im Speicher gespeicherte Computerprogramm aufzurufen und auszuführen, um das Verfahren nach einem der Ansprüche 1 bis 14 auszuführen.

## Revendications

1. Procédé de communication sans fil, comprenant :
la diffusion (S210), par un point d'accès esclave, SAP, d'informations de capacité de coordination de points d'accès multiples, multi-AP, du SAP ;
la réception, par le SAP, de première informations de demande envoyées par un point d'accès maître, MAP, dans lequel les premières informations de demande sont configurées pour demander l'établissement de n ensemble(s) candidat(s) multi-AP, et n est un nombre entier positif ; et
l'envoi (S250), par le SAP, de premières informations de réponse au MAP, dans lequel les premières informations de réponse sont configurées pour indiquer si le SAP accepte ou non les premières informations de demande envoyées par le MAP,
dans lequel les premières informations de réponse envoyées par le SAP sont envoyées par le biais d'une troisième trame,
dans lequel la troisième trame comprend un champ de réponse d'ensemble candidat multi-AP, et le champ de réponse d'ensemble candidat multi-AP comprend un champ de code de raison,
dans lequel la valeur du champ de code de raison est configurée pour indiquer au moins l'un des éléments suivants :
le SAP accepte une demande d'établissement d'ensemble candidat multi-AP du MAP ;
le SAP rejette la demande d'établissement d'ensemble candidat multi-AP du MAP, dans lequel une raison du rejet est qu'un ensemble de services de base, BSS, du SAP a une charge importante et est incapable de participer à une transmission de coordination de multi-AP ; et
le SAP rejette la demande d'établissement d'ensemble candidat multi-AP du MAP, dans lequel la raison du rejet est inconnue.

2. Procédé selon la revendication 1, dans lequel les informations de capacité de coordination de multi-AP sont envoyées par le biais d'une première trame, et la première trame est une trame de balise ou une trame de gestion.

3. Procédé selon la revendication 2, dans lequel la première trame comprend un champ de capacité de coordination de multi-AP,
le champ de capacité de coordination de multi-AP comprend au moins l'un des éléments suivants : un champ d'informations commun et un champ de prise en charge de schéma multi-AP,
dans lequel le champ d'informations commun est configuré pour indiquer un procédé d'établissement d'ensemble candidat multi-AP, un rôle pris en charge par le SAP dans un mécanisme de transmission multi-AP, et un procédé de sondage de canal pris en charge par le SAP ; et le champ de prise en charge de schéma multi-AP est configuré pour indiquer un ou des mode(s) de coordination de multi-AP pris en charge par le SAP.

4. Procédé selon la revendication 1, dans lequel le champ de réponse d'ensemble candidat multi-AP comprend en outre un champ de nombre de stations associées (STA) et une pluralité de champs d'informations de STA,
dans lequel le champ de nombre de STA associées est configuré pour indiquer un nombre de STA associées au SAP, un champ d'informations de x-ième STA de la pluralité de champs d'informations de STA est configuré pour indiquer des informations connexes de coordination de multi-AP d'une x-ième STA de STA associées au SAP, et x est un nombre entier positif.

5. Procédé selon la revendication 4, dans lequel des champs d'informations de STA de la pluralité de champs d'informations de STA comprennent au moins l'un des éléments suivants : un champ d'adresse de commande d'accès au prise en charge (MAC) de STA, un champ de priorité de STA, et un champ de capacités de coordination de multi-AP de STA,
dans lequel le champ d'adresse MAC de STA est configuré pour indiquer une adresse MAC de STA indiquée par un champ d'informations de STA actuel, le champ de priorité de STA est configuré pour indiquer une priorité de la STA indiquée par le champ d'informations de STA actuel participant à un mécanisme de transmission ou de réception multi-AP, et le champ de capacités de coordination de multi-AP de STA est configuré pour indiquer des informations de capacité de la STA indiquées par le champ d'informations de STA actuel participant à une coordination de multi-AP.

6. Procédé selon la revendication 1, dans lequel des informations d'identité, ID, du ou des n ensemble(s) candidat(s) multi-AP sont attribuées par le MAP, et/ou, des informations de rôle du SAP dans une coordination de multi-AP sont attribuées par le MAP.

7. Procédé selon l'une quelconque des revendications 1 à 6, dans lequel les premières informations de demande envoyées par le MAP au SAP sont envoyées par le biais d'une deuxième trame,
dans lequel la deuxième trame comprend un champ de demande d'ensemble candidat multi-AP, et le champ de demande d'ensemble candidat multi-AP comprend n champ(s) d'informations d'ensemble candidat et un champ de nombre d'ensembles candidats,
dans lequel le ou les n champ(s) d'informations d'ensemble candidat indique ou indiquent des informations connexes au ou aux n ensemble(s) candidat(s) multi-AP respectivement, et le champ de nombre d'ensembles candidats est configuré pour indiquer un nombre de champs d'informations d'ensemble candidat compris dans le champ de demande d'ensemble candidat multi-AP.

8. Procédé selon la revendication 7, dans lequel un ou des champ(s) d'informations d'ensemble candidat du ou des n champ(s) d'informations d'ensemble candidat comprend ou comprennent au moins l'un des éléments suivants : un champ de procédé de sondage, un champ de schéma multi-AP, et un champ de rôle d'AP ; ou
le ou les champ(s) d'informations d'ensemble candidat du ou des n champ(s) d'informations d'ensemble candidat comprend ou comprennent au moins l'un des éléments suivants : un champ de prise en charge de procédé de sondage, un champ de schéma multi-AP, et un champ de rôle d'AP,
dans lequel le champ de procédé de sondage est configuré pour indiquer un procédé de sondage de canal pris en charge par un ensemble candidat multi-AP correspondant à un champ d'informations d'ensemble candidat actuel, le champ de schéma multi-AP est configuré pour indiquer un mode de coordination de multi-AP pris en charge par l'ensemble candidat multi-AP correspondant au champ d'informations d'ensemble candidat actuel, le champ de rôle d'AP est configuré pour indiquer un rôle de coordination de multi-AP pris en charge par le SAP dans l'ensemble candidat multi-AP correspondant au champ d'informations d'ensemble candidat actuel, et le champ de prise en charge de sondage joint est configuré pour indiquer si l'ensemble candidat multi-AP correspondant au champ d'informations d'ensemble candidat actuel prend ou non en charge une pluralité d'AP pour réaliser un sondage de canal simultanément et de manière synchrone.

9. Procédé selon la revendication 7, dans lequel un ou des champs d'informations d'ensemble candidat du ou des n champ(s) d'informations d'ensemble candidat comprend ou comprennent au moins l'un des éléments suivants : un champ d'identité (ID) d'ensemble de services de base virtuel (VBSS), un champ d'ID d'ensemble candidat, un champ de procédé de sondage, un champ de schéma multi-AP, un champ de nombre d'AP, et une pluralité de champs d'informations d'AP ; ou
un ou des champs d'informations d'ensemble candidat du ou des n champ(s) d'informations d'ensemble candidat comprend ou comprennent au moins l'un des éléments suivants : un champ d'ID de VBSS, un champ d'ID d'ensemble candidat, un champ de prise en charge de sondage joint, un champ de schéma multi-AP, un champ de nombre d'AP, et une pluralité de champs d'informations d'AP,
dans lequel le champ d'ID de VBSS est configuré pour indiquer un ID de VBSS d'un ensemble candidat multi-AP correspondant à un champ d'informations d'ensemble candidat actuel, le champ d'ID d'ensemble candidat est configuré pour indiquer un ID de l'ensemble candidat multi-AP correspondant au champ d'informations d'ensemble candidat actuel, le champ de procédé de sondage est configuré pour indiquer un procédé de sondage de canal pris en charge par l'ensemble candidat multi-AP correspondant au champ d'informations d'ensemble candidat actuel, le champ de schéma multi-AP est configuré pour indiquer un mode de coordination de multi-AP pris en charge par l'ensemble candidat multi-AP correspondant au champ d'informations d'ensemble candidat actuel, le champs de nombre d'AP est configuré pour indiquer un nombre d'AP membres contenus dans l'ensemble candidat multi-AP correspondant au champ d'informations d'ensemble candidat actuel, un champ d'informations de m-ième AP de la pluralité de champs d'informations d'AP est configuré pour indiquer des informations connexes à un m-ième AP membre des AP membres contenus dans l'ensemble candidat multi-AP correspondant au champ d'informations d'ensemble candidat actuel, et le champ de prise en charge de sondage joint est configuré pour indiquer si l'ensemble candidat multi-AP correspondant au champ d'informations d'ensemble candidat actuel prend ou non en charge une pluralité d'AP pour réaliser un sondage de canal simultanément et de manière synchrone.

10. Procédé selon la revendication 8 ou la revendication 9, dans lequel dans le cas où le ou les champ(s) d'informations d'ensemble candidat du ou des n champ(s) d'informations d'ensemble candidat comprend ou comprennent le champ de prise en charge de sondage joint, le SAP prend en charge la pluralité d'AP pour réaliser un sondage de canal séquentiellement par défaut.

11. Procédé selon la revendication 8 ou la revendication 9, dans lequel le champ de procédé de sondage comprend au moins l'un des éléments suivants : un champ de sondage séquentiel et un champ de sondage joint ; ou
le champ de procédé de sondage comprend seulement le champ de sondage joint,
dans lequel le champ de sondage séquentiel est configuré pour indiquer si l'ensemble candidat multi-AP correspondant au champ d'informations d'ensemble candidat actuel prend ou non en charge la pluralité d'AP pour réaliser un sondage de canal séquentiellement, et le champ de sondage joint est configuré pour indiquer si l'ensemble candidat multi-AP correspondant au champ d'informations d'ensemble candidat actuel prend ou non en charge la pluralité d'AP pour réaliser un sondage de canal simultanément et de manière synchrone.

12. Procédé selon la revendication 11, dans lequel dans le cas où le champ de prise en charge de procédé de sondage ne comprend pas le champ de sondage séquentiel, l'ensemble candidat multi-AP correspondant au champ d'informations d'ensemble candidat actuel prend en charge la pluralité d'AP pour réaliser un sondage de canal séquentiellement par défaut.

13. Procédé selon la revendication 8 ou la revendication 9, dans lequel le champ de schéma multi-AP comprend au moins l'un des éléments suivants : un champ d'accès multiple par répartition orthogonale de la fréquence coordonné, C-OFDMA, de liaison montante, UL, un champ C-OFDMA de liaison descendante, DL, un champ de réutilisation spatiale coordonnée, C-SP et C-OFDMA joint, un champ C-SR et de formation de faisceau coordonnée, C-BF joint et, un champ C-SR et de transmission jointe, J-TX joint, un champ C-SR et utilisateurs multiples, entrées multiples, sorties multiples coordonnés de liaison montante, C-UL MU MIMO joint, un champ C-BF, un champ J-TX pour utilisateur unique, un champ J-TX pour utilisateurs multiples, un champ J-TX avec diversité, un champ J-TX avec multiplexage, un champ J-TX largeur de bande complète, un champ J-TX largeur de bande partielle, un champ de détection et de mise au rebut, et un champ d'atténuation en tant qu'interférence ; ou
le champ de schéma multi-AP comprend au moins l'un des éléments suivants : un champ C-SR et C-OFDMA joint, un champ C-SR et C-BF joint, un champ C-SR et J-TX joint, un champ C-SR et C-UL MU MIMO joint, un champ C-BF, un champ J-TX pour utilisateur unique, un champ J-TX pour utilisateurs multiples, un champ J-TX avec diversité, un champ J-TX avec multiplexage, un champ J-TX largeur de bande complète, un champ J-TX largeur de bande partielle, un champ de détection et de mise au rebut, et un champ d'atténuation en tant qu'interférence,
dans lequel le champ UL- OFDMA est configuré pour indiquer si l'ensemble candidat multi-AP correspondant au champ d'informations d'ensemble candidat actuel prend ou non en charge UL C-OFDMA, le champ DL C-OFDMA est configuré pour indiquer si l'ensemble candidat multi-AP correspondant au champ d'informations d'ensemble candidat actuel prend ou non en charge DL C-OFDMA, le champ C-SR et C-OFDMA joint est configuré pour indiquer si l'ensemble candidat multi-AP correspondant au champ d'informations d'ensemble candidat actuel prend ou non en charge une utilisation simultanée et jointe de C-SR et de C-OFDMA, le champ C-SR et C-BF joint est configuré pour indiquer si l'ensemble candidat multi-AP correspondant au champ d'informations d'ensemble candidat actuel prend ou non en charge une utilisation simultanée et jointe de C-SR et de C-BF, le champ C-SR et J-TX joint est configuré pour indiquer si l'ensemble candidat multi-AP correspondant au champ d'informations d'ensemble candidat actuel prend ou non en charge une utilisation simultanée et jointe de C-SR et de J-TX, le champ C-SR et C-UL MU MIMO joint est configuré pour indiquer si l'ensemble candidat multi-AP correspondant au champ d'informations d'ensemble candidat actuel prend ou non en charge une utilisation simultanée et jointe de C-SR et de C-UL MU MIMO, le champ C-BF est configuré pour indiquer si l'ensemble candidat multi-AP correspondant au champ d'informations d'ensemble candidat actuel prend ou non en charge C-BF, le champ J-TX pour utilisateur unique est configuré pour indiquer si l'ensemble candidat multi-AP correspondant au champ d'informations d'ensemble candidat actuel prend ou non en charge la réalisation d'une transmission jointe pour un même utilisateur, le champ J-TX pour utilisateurs multiples est configuré pour indiquer si l'ensemble candidat multi-AP correspondant au champ d'informations d'ensemble candidat actuel prend ou non en charge la réalisation d'une transmission jointe pour une pluralité d'utilisateurs, le champ J-TX avec diversité est configuré pour indiquer si l'ensemble candidat multi-AP correspondant au champ d'informations d'ensemble candidat actuel prend ou non en charge une transmission jointe de type diversité, le champ J-TX avec multiplexage est configuré pour indiquer si l'ensemble candidat multi-AP correspondant au champ d'informations d'ensemble candidat actuel prend ou non en charge une transmission jointe de type multiplexage, le champ J-TX largeur de bande complète est configuré pour indiquer si l'ensemble candidat multi-AP correspondant au champ d'informations d'ensemble candidat actuel prend ou non en charge une transmission jointe dans une largeur de bande complète, le champ J-TX largeur de bande partielle est configuré pour indiquer si l'ensemble candidat multi-AP correspondant au champ d'informations d'ensemble candidat actuel prend ou non en charge une transmission jointe dans une largeur de bande partielle, le champ de détection et de mise au rebut est configuré pour indiquer si l'ensemble candidat multi-AP correspondant au champ d'informations d'ensemble candidat actuel prend ou non en charge la réception et la démodulation de données/trames d'autres utilisateurs et ensuite le rejet dans un mode C-UL MU MIMO, pour obtenir des données/trames utiles, et le champs d'atténuation en tant qu'interférence est configuré pour indiquer si l'ensemble candidat multi-AP correspondant au champ d'informations d'ensemble candidat actuel prend ou non en charge le traitement de données d'autres utilisateurs en tant qu'interférence directement, et la réception et la démodulation de données/trames d'un utilisateur cible directement dans le mode C-UL MU MIMO.

14. Procédé selon la revendication 13, dans lequel dans le cas où le champ de schéma multi-AP ne comprend pas le champ UL C-OFDMA et le champ DL C-OFDMA, l'ensemble candidat multi-AP correspondant au champ d'informations d'ensemble candidat actuel prend en charge UL C-OFDMA et DL C-OFDMA par défaut.

15. Point d'accès esclave, SAP, comprenant un processeur et une mémoire, dans lequel la mémoire est configurée pour stocker un programme informatique, le processeur est configuré pour appeler et exécuter le programme informatique stocké dans la mémoire, afin d'exécuter le procédé selon l'une quelconque des revendications 1 à 14.
